# FASCICULE DE BREVET EUROPEEN

(11) **EP 4 004 278 B1**
(45) Date de publication et mention de la délivrance du brevet: **02.10.2024**
(21) Numéro de dépôt: 20757637.2
(22) Date de dépôt: 22.07.2020
(51) Int. Cl.: D07B 7/02, D07B 3/00

(54) **PROCEDE DE FABRICATION D'AU MOINS TROIS ASSEMBLAGES**
VERFAHREN ZUR HERSTELLUNG VON MINDESTENS DREI BAUGRUPPEN
METHOD FOR MANUFACTURING AT LEAST THREE ASSEMBLIES

(30) Priorité: 25.07.2019 FR 1908428
(43) Date de publication de la demande: 01.06.2022
(73) Titulaire: COMPAGNIE GENERALE DES ETABLISSEMENTS MICHELIN, 63000 Clermont-Ferrand (FR)
(72) Inventeur: BARGUET, Henri, 63040 CLERMONT-FERRAND CEDEX 9 (FR); REIX, Olivier, 63040 CLERMONT-FERRAND CEDEX 9 (FR); PATAUT, Gaël, 63040 CLERMONT-FERRAND CEDEX 9 (FR)
(74) Mandataire: M.F.P. Michelin
(86) Numéro de dépôt international: PCT/FR2020/051339
(87) Numéro de publication internationale: WO 2021/014099

(56) Documents cités:
- WO-A1-2016/083265
- CN-A- 102 373 632
- US-A- 2 053 645

## Description

L'invention concerne un procédé et une installation de fabrication de plusieurs assemblages finaux.

On connait de WO2016083265 et WO2016083267 un procédé et une installation de fabrication de premier et deuxième assemblages finaux. Ce procédé comprend une étape d'assemblage de plusieurs éléments filaires métalliques ensemble en une couche de plusieurs éléments filaires métalliques autour d'un noyau transitoire pour former un assemblage transitoire.

Puis, le procédé comprend une première étape de fractionnement de l'assemblage transitoire en :
- un premier assemblage fractionné constitué d'une couche constituée de plusieurs éléments filaires métalliques enroulés en hélice et issus de la couche de l'assemblage transitoire, et
- un ensemble fractionné comprenant plusieurs éléments filaires métalliques enroulés en hélice autour du noyau transitoire, ces éléments filaires métalliques étant issus de la couche de l'assemblage transitoire.

Puis le procédé comprend, une deuxième étape de fractionnement de l'ensemble fractionné en :
- un deuxième assemblage fractionné constitué d'une couche constituée des éléments filaires métalliques enroulés en hélice issus de la couche de l'ensemble fractionné, et
- le noyau transitoire.

A l'issue de ce procédé, chaque premier et deuxième assemblage fractionné forme un assemblage final duquel on a séparé le noyau transitoire. La séparation du noyau transitoire est rendue possible grâce à la séparation des éléments filaires métalliques de la couche de l'assemblage transitoire qui permet de ménager, lors de la première étape de fractionnement, un passage de sortie de l'ensemble fractionné comprenant le noyau transitoire, et lors de la deuxième étape de fractionnement, un passage de sortie du noyau transitoire.

Grâce au noyau transitoire, le procédé permet de préformer collectivement les éléments filaires métalliques en les appuyant sur le noyau transitoire afin de leur conférer à tous, les mêmes caractéristiques géométriques particulières, par exemple, un rayon de courbure et un diamètre d'hélice. L'utilisation d'un noyau transitoire permet ainsi une préformation sans utilisation d'outils mécaniques. Chaque premier, deuxième et troisième assemblage final présente des propriétés mécaniques avantageuses, notamment des propriétés d'endurance en compression, ces propriétés pouvant être affinées en modifiant notamment le diamètre du noyau transitoire et l'angle d'hélice de chaque élément filaire métallique.

Néanmoins, dans le cas où les premier et deuxième assemblages fractionnés ne sont pas identiques, le procédé de l'état de la technique entraine une perte de matière liée aux éléments filaires métalliques du premier ou du deuxième assemblage fractionné qui ne forment pas un assemblage comprenant le nombre d'éléments filaires métalliques souhaités.

Et, dans le cas où les premier et deuxième assemblages fractionnés sont identiques, il est nécessaire de partir d'un assemblage transitoire comprenant un nombre élevé d'éléments filaires métalliques ce qui ne permet pas d'obtenir toutes les caractéristiques géométriques souhaitées, ni les propriétés mécaniques désirées pour les assemblages finaux.

L'invention a pour but un procédé de fabrication de plusieurs assemblages finaux identiques au moyen d'une préformation collective de ces éléments filaires métalliques permettant d'une part, de limiter autant que possible la perte d'éléments filaires métalliques introduits initialement dans le procédé et ne se retrouvant pas dans les assemblages fractionnés et, d'autre part, d'accéder à l'ensemble des caractéristiques géométriques souhaitées des éléments filaires métalliques.

A cet effet, l'invention a pour objet un procédé de fabrication d'au moins des premier, deuxième et troisième assemblages finaux, le premier assemblage final comprenant au moins une couche constituée de C1'>1 éléments filaires métalliques enroulés en hélice, le deuxième assemblage final comprenant au moins une couche constituée de C2'>1 éléments filaires métalliques enroulés en hélice, le troisième assemblage final comprenant au moins une couche constituée de C3'>1 éléments filaires métalliques enroulés en hélice,
le procédé comprenant :
   - une étape de fourniture d'un premier assemblage transitoire comprenant au moins une couche constituée de A'>1 éléments filaires métalliques enroulés en hélice autour d'un premier noyau transitoire,
   - une étape de fourniture d'un deuxième assemblage transitoire comprenant au moins une couche constituée de B'>1 éléments filaires métalliques enroulés en hélice autour d'un deuxième noyau transitoire,
   - une étape de séparation du premier assemblage transitoire entre au moins:
      - un premier assemblage fractionné AF11 comprenant au moins une couche constituée de D'≥1 élément(s) filaire(s) métallique(s) enroulé(s) en hélice, le ou les D' élément(s) filaire(s) métallique(s) étant issu(s) de la couche constituée de A'>1 éléments filaires métalliques du premier assemblage transitoire,
      - un deuxième assemblage fractionné AF12 comprenant au moins une couche constituée de E'>1 éléments filaires métalliques enroulés en hélice, les E' éléments filaires métalliques étant issus de la couche constituée de A'>1 éléments filaires métalliques du premier assemblage transitoire, le deuxième assemblage fractionné AF12 formant le deuxième assemblage final
      - le premier noyau transitoire ou un ou plusieurs ensembles comprenant le premier noyau transitoire,
   - une étape de séparation du deuxième assemblage transitoire entre au moins:
      - un premier assemblage fractionné AF21 comprenant au moins une couche constituée de F'≥1 élément(s) filaire(s) métallique(s) enroulé(s) en hélice, le ou les F' élément(s) filaire(s) métallique(s) étant issu(s) de la couche constituée de B'>1 éléments filaires métalliques du deuxième assemblage transitoire,
      - un deuxième assemblage fractionné AF22 comprenant au moins une couche constituée de G'>1 éléments filaires métalliques enroulés en hélice, les G' éléments filaires métalliques étant issus de la couche constituée de B'>1 éléments filaires métalliques du deuxième assemblage transitoire, le deuxième assemblage fractionné AF22 formant le troisième assemblage final,
      - le deuxième noyau transitoire ou un ou plusieurs ensembles comprenant le deuxième noyau transitoire,
le procédé comprenant une étape de réassemblage d'au moins le premier assemblage fractionné AF11 avec le premier assemblage fractionné AF21 pour former le premier assemblage final,
les étapes de fourniture et de séparation du premier assemblage transitoire, les étapes de fourniture et de séparation du deuxième assemblage transitoire, et l'étape de réassemblage du premier assemblage fractionné AF11 avec le premier assemblage fractionné AF21 étant réalisées de sorte que D'+F'=E'=G'=C1'=C2'=C3' et de sorte que tous les C1', C2', C3' éléments filaires métalliques présentent un même diamètre d, sont enroulés en hélice selon un même pas p et présentent un même diamètre d'hélice φ.

Conformément à l'invention A'>1 et B'1>1 et donc de façon implicite A'+B'≥6 car C1'>1, C2'>1 et C3'>1.

Grâce à l'étape de réassemblage du procédé selon l'invention, il est possible de réutiliser les éléments filaires métalliques issus des premier et deuxième assemblages transitoires et formant les premiers assemblages fractionnés AF11 et AF21. En effet, à l'issu de l'étape de séparation, les premiers assemblages fractionnés AF11 et AF21 ne comprennent pas le nombre d'éléments filaires métalliques souhaités en raison du fait que D'+F'=E'=G' avec D'>1 et F'>1. Dans le procédé de l'état de la technique, les éléments filaires métalliques de ces premiers assemblages AF11 et AF21 auraient été jetés. Dans le procédé selon l'invention, une fois réassemblés, les premiers assemblages fractionnés AF11 et AF21 forment le premier assemblage final comprenant le nombre d'éléments filaires métalliques souhaités C1'=D'+F' et identique à celui du deuxième assemblage fractionné AF12 formant le deuxième assemblage final dans lequel E'=C2'=C1' et identique à celui du deuxième assemblage fractionné AF22 formant le troisième assemblage final dans lequel G'=C3'=C2'=C1'.

Le procédé selon l'invention et notamment l'étape de réassemblage permettent également d'atteindre une diversité de caractéristiques géométriques plus importantes que le procédé de l'état de la technique. En effet, en adaptant les caractéristiques géométriques des premier et deuxième assemblages transitoires, l'étape de réassemblage permet d'accéder à des assemblages finaux impossibles à obtenir avec le procédé de l'état de la technique tout en limitant la perte des éléments filaires métalliques introduits dans le procédé.

L'étape de réassemblage est telle que C1'=D'+F'. Lors de cette étape de réassemblage, on réassemble le ou les D' élément(s) filaire(s) métallique(s) enroulé(s) en hélice formant la couche du premier assemblage fractionné AF11 avec le ou les F' élément(s) filaire(s) métallique(s) enroulé(s) en hélice formant la couche du premier assemblage fractionné AF21 pour former la couche du premier assemblage final. Le réassemblage des éléments filaires métalliques de ces deux couches permet d'obtenir la couche du premier assemblage final. En effet, dans le procédé selon l'invention, les étapes de fourniture et de séparation du premier assemblage transitoire, les étapes de fourniture et de séparation du deuxième assemblage transitoire et l'étape de réassemblage du premier assemblage fractionné AF11 avec le premier assemblage fractionné AF21 étant réalisées de sorte que tous les C1' éléments filaires métalliques présentent un même diamètre d, sont enroulés en hélice selon un même pas p et présentent un même diamètre d'hélice φ, chaque C1' élément filaire métallique présente les mêmes propriétés géométriques. Ainsi, l'étape de réassemblage permet de former le premier assemblage final dans lequel les D' et F' éléments filaires métalliques présentent les mêmes propriétés géométriques et forment donc une couche homogène d'éléments filaires métalliques.

Le diamètre d'hélice φ correspond au diamètre du cercle théorique passant par les centres des éléments filaires métalliques de la couche dans un plan perpendiculaire à l'axe de l'assemblage.

On rappelle que le pas p auquel chaque élément filaire métallique est enroulé est la longueur parcourue par cet élément filaire, mesurée parallèlement à l'axe de l'assemblage dans lequel il se trouve, au bout de laquelle l'élément filaire ayant ce pas effectue un tour complet autour dudit axe de l'assemblage.

Les E' fils éléments filaires métalliques étant également issus du premier assemblage transitoire AT1, on s'assure que les E' fils éléments filaires métalliques du deuxième assemblage final présentent les mêmes propriétés géométriques que les D' et F' éléments filaires métalliques du premier assemblage final. De façon analogue, les G' fils éléments filaires métalliques étant également issus du deuxième assemblage transitoire AT2, on s'assure que les G' fils éléments filaires métalliques du troisième assemblage final présentent les mêmes propriétés géométriques que les D' et F' éléments filaires métalliques du premier assemblage final.

En outre, comme décrit ci-dessus, suivant les différents modes de réalisation, les étapes de séparation et l'étape de réassemblage sont réalisées de sorte que A'+B'≥D'+E'+F'+G', notamment de sorte que A'≥D'+E' et B'≥F'+G'.

Chaque premier et deuxième assemblage transitoire AT1, AT2 du procédé selon l'invention comprend respectivement la couche constituée de A', B' éléments filaires métalliques et respectivement chaque premier et deuxième noyau transitoire, les A', B' éléments filaires métalliques étant enroulés en hélice autour respectivement de chaque premier et deuxième noyau transitoire. De préférence, dans un mode de réalisation permettant de fabriquer des assemblages finaux constitués d'une couche d'éléments filaires métalliques, chaque premier et deuxième assemblage transitoire est constitué respectivement de la couche constituée respectivement par les A', B' éléments filaires métalliques et respectivement de chaque premier et deuxième noyau transitoire, les A', B' éléments filaires métalliques étant enroulés en hélice autour respectivement de chaque premier et deuxième noyau transitoire.

A l'issue l'étape de séparation des premier et deuxièmes assemblages transitoires, on obtient, dans une variante, le premier assemblage fractionné AF11, le deuxième assemblage fractionné AF12, le premier assemblage fractionné AF21, le deuxième assemblage fractionné AF22, le premier noyau transitoire NT1 et le deuxième noyau transitoire NT2, chaque premier et deuxième noyau transitoire NT1, NT2 étant isolé de tout autre élément filaire métallique issu des couches A et B de chaque premier et deuxième assemblage transitoire AT1, AT2. En d'autres termes, à l'issue de chaque étape de séparation de chaque premier et deuxième assemblage transitoire, on obtient, dans cette variante, le premier assemblage fractionné AF11, le deuxième assemblage fractionné AF12, le premier assemblage fractionné AF21, le deuxième assemblage fractionné AF22, un ensemble constitué par le premier noyau transitoire NT1 et un ensemble constitué par le deuxième noyau transitoire NT2.

Dans une autre variante, à l'issue l'étape de séparation des premier et deuxièmes assemblages transitoires, on obtient le premier assemblage fractionné AF11, le deuxième assemblage fractionné AF12, le premier assemblage fractionné AF21, le deuxième assemblage fractionné AF22, un premier ensemble comprenant le premier noyau transitoire NT1 et un deuxième ensemble le deuxième noyau transitoire NT2, chaque premier et deuxième ensemble comprenant chaque premier et deuxième noyau transitoire NT1, NT2 comprenant également un ou plusieurs éléments filaires métalliques issus des couches A et B de chaque premier et deuxième assemblage transitoire AT1, AT2. En d'autres termes, dans cette variante, à l'issue de chaque étape de séparation de chaque premier et deuxième assemblage transitoire, on obtient, le premier assemblage fractionné AF11, le deuxième assemblage fractionné AF12, le premier assemblage fractionné AF21, le deuxième assemblage fractionné AF22, un premier ensemble constitué par le premier noyau transitoire NT1 et un ou plusieurs éléments filaires métalliques issus de la couche du premier assemblage transitoire AT1 et un deuxième ensemble constitué par le deuxième noyau transitoire NT2 et un ou plusieurs éléments filaires métalliques issus de la couche du deuxième assemblage transitoire AT2.

Dans encore une autre variante, à l'issue l'étape de séparation des premier et deuxièmes assemblages transitoires, on obtient le premier assemblage fractionné AF11, le deuxième assemblage fractionné AF12, le premier assemblage fractionné AF21, le deuxième assemblage fractionné AF22 et plusieurs ensembles comprenant chacun une partie de chaque premier et deuxième noyau transitoire NT1, NT2, chaque ensemble comprenant une partie de chaque premier et deuxième noyau transitoire NT1, NT2 comprenant également un ou plusieurs éléments filaires métalliques issus des couches A et B de chaque premier et deuxième assemblage transitoire AT1, AT2. Ainsi, les ensembles comprennent l'intégralité de chaque premier et deuxième noyau transitoire NT1, NT2 et les parties de chaque premier et deuxième noyau transitoire NT1, NT2 des ensembles forment chaque premier et deuxième noyau transitoire NT1, NT2 dans son intégralité. En d'autres termes, on obtient, dans cette variante, le premier assemblage fractionné AF11, le deuxième assemblage fractionné AF12, le premier assemblage fractionné AF21, le deuxième assemblage fractionné AF22 et plusieurs ensembles constitué chacun par une partie de chaque premier et deuxième noyau transitoire et un ou plusieurs éléments filaires métalliques issus des couches A et B de chaque premier et deuxième assemblage transitoire AT1, AT2, les parties de chaque premier et deuxième noyau transitoire NT1, NT2 constituant chaque premier et deuxième noyau transitoire NT1, NT2.

Dans encore d'autres variantes, on pourra envisager de mettre en oeuvre une des trois variantes décrites ci-dessus pour le premier noyau transitoire NT1 et une autre des trois variantes décrites ci-dessus pour le deuxième noyau transitoire NT2.

Un autre avantage du procédé selon l'invention est que chaque élément filaire métallique de chaque premier, deuxième et troisième assemblage final est dépourvu de marques de préformation. De telles marques de préformation comprennent notamment des méplats. Les marques de préformations comprennent également des fissures s'étendant dans des plans de coupe sensiblement perpendiculaires à l'axe principal selon lequel s'étend chaque élément filaire métallique. De telles fissures s'étendent, dans un plan de coupe sensiblement perpendiculaire à l'axe principal, depuis une surface radialement externe de chaque élément filaire métallique radialement vers l'intérieur de chaque élément filaire métallique. Comme décrits ci-dessus, de telles fissures sont initiées par les outils mécaniques de préformation en raison des efforts en flexion, c'est-à-dire perpendiculairement à l'axe principal de chaque élément filaire métallique, ce qui les rend très néfastes pour l'endurance. A l'inverse, dans le procédé utilisé, les éléments filaires métalliques sont préformés collectivement et simultanément sur chaque premier et deuxième noyau transitoire et les efforts de préformations sont exercés en torsion et donc non perpendiculairement à l'axe principal de chaque élément filaire métallique. Les éventuelles fissures créées s'étendent non pas radialement depuis la surface radialement externe de chaque élément filaire métallique radialement vers l'intérieur de chaque élément filaire métallique mais le long de la surface radialement externe de chaque élément filaire métallique ce qui les rend peu néfastes pour l'endurance.

Le procédé selon l'invention est avantageusement un procédé continu ou en ligne. Ainsi, il n'y a pas d'étape de stockage intermédiaire des différents assemblages et ensembles générés lors du procédé entre l'étape de fourniture des premier et deuxième assemblages transitoires et l'étape de réassemblage du premier assemblage final.

Dans la présente invention, une étape de fractionnement d'un objet initial en plusieurs objets finaux signifie que, durant cette étape de fractionnement, l'objet initial est divisé en les objets finaux et seulement ces objets finaux de sorte que l'objet initial se retrouve intégralement dans les objets finaux. De plus, dans une étape de fractionnement, l'objet initial est divisé en les objets finaux de façon simultanée, c'est-à-dire que les objets finaux sont séparés en un même point de fractionnement. En particulier, dans le cas d'un objet initial fractionné en au moins trois objets finaux, les trois objets finaux sont, lors d'une étape de fractionnement, séparés simultanément les uns des autres et en un même point.

Dans la présente invention, une étape de séparation d'un objet initial entre plusieurs objets finaux signifie que, pour obtenir ces objets finaux, au moins une étape de fractionnement est nécessaire. Ainsi, pour obtenir les objets finaux, l'étape de séparation comprend une étape de fractionnement de l'objet initial en les objets finaux ou bien comprend une étape de fractionnement de l'objet initial en des objets intermédiaires suivie par une ou plusieurs étapes successives de fractionnement des objets intermédiaires en les objets finaux. Par ailleurs, dans une étape de séparation, l'objet initial ne se retrouve pas nécessairement intégralement dans les objets finaux, des ensembles ou assemblages ayant pu être extraits du procédé lors d'une ou plusieurs étapes de fractionnement et non utilisés lors des étapes de fractionnement ultérieures. Enfin, une étape de séparation peut comprendre une ou plusieurs étapes de réassemblage entre plusieurs objets intermédiaires issus d'une étape de fractionnement de l'étape de séparation pour obtenir d'autres objets intermédiaires ou bien les objets finaux.

Que ce soit dans une étape de séparation ou une étape de fractionnement, les objets finaux sont physiquement séparés les uns des autres, c'est-à-dire non en contact les uns avec les uns en aval des étapes de séparation ou de fractionnement et en amont de toute étape de réassemblage de deux ou de plusieurs de ces objets finaux.

Chaque premier, deuxième et troisième assemblage final est à simple hélice. Par définition, un assemblage à simple hélice est un assemblage dans lequel l'axe de chaque élément filaire métallique décrit une unique hélice, contrairement à un assemblage à double hélice dans lequel l'axe de chaque élément filaire métallique décrit une première hélice autour de l'axe de l'assemblage et une deuxième hélice autour d'une hélice décrite par l'axe de l'assemblage.

En d'autres termes, lorsque l'assemblage s'étend selon une direction sensiblement rectiligne, l'assemblage comprenant une ou plusieurs couches d'éléments filaires enroulés en hélice, chaque élément filaire métallique de la ou chaque couche décrit une trajectoire en forme d'hélice autour d'un axe sensiblement parallèle à la direction sensiblement rectiligne de sorte que, dans un plan de coupe sensiblement perpendiculaire à l'axe principal, la distance entre le centre de chaque élément filaire métallique d'une couche donnée et l'axe principal soit sensiblement constante et égale pour tous les éléments filaires métallique de chaque couche donnée. Au contraire, lorsqu'un assemblage à double hélice s'étend selon une direction sensiblement rectiligne, la distance entre le centre de chaque élément filaire métallique d'une couche donnée et la direction sensiblement rectiligne est différente pour tous les éléments filaires métalliques de la couche donnée.

Par élément filaire, on entend tout élément longiligne de grande longueur relativement à sa section transversale, quelle que soit la forme de cette dernière, par exemple circulaire, oblongue, rectangulaire ou carrée, ou même plate. Lorsqu'il est de forme circulaire, son diamètre est de préférence inférieur à 3 mm. Très préférentiellement, chaque élément filaire présente une section circulaire.

Dans un mode de réalisation, chaque élément filaire métallique comprend un unique monofilament élémentaire métallique.

Dans un autre mode de réalisation, chaque élément filaire métallique comprend un assemblage de plusieurs monofilaments élémentaires métalliques. Ainsi, par exemple, chaque élément filaire métallique comprend un toron de plusieurs monofilaments élémentaires métalliques. Chaque toron comprend de préférence une ou plusieurs couches de monofilaments élémentaires métalliques enroulés en hélice.

Par métallique, on entend par définition un monofilament élémentaire constitué majoritairement (c'est-à-dire pour plus de 50% de sa masse) ou intégralement (pour 100% de sa masse) d'un matériau métallique. Chaque monofilament élémentaire métallique est préférentiellement en acier, plus préférentiellement en acier perlitique (ou ferrito-perlitique) au carbone désigné ci-après par "acier au carbone", ou encore en acier inoxydable (par définition, acier comportant au moins 10,5% de chrome).

Un tel monofilament élémentaire métallique comprend préférentiellement une âme en acier, éventuellement revêtue d'une ou plusieurs couches d'un revêtement qui peut être métallique et/ou à base d'une composition adhésive non métallique. Par exemple, le revêtement métallique comprend un métal choisi parmi le zinc, le cuivre, l'étain, le cobalt et les alliages de ces métaux. Comme exemples d'alliages de ces métaux, on citera le laiton et le bronze.

Lorsqu'un acier au carbone est utilisé, sa teneur en carbone (% en masse d'acier) est de préférence comprise entre 0,1% et 1,2%. Chaque monofilament élémentaire métallique présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle l'élément de renfort est destiné à être noyé et un allègement de la matrice ainsi renforcée.

Dans un mode de réalisation préféré, chaque monofilament élémentaire métallique présente un diamètre allant de 0,05 mm à 0,50 mm, de préférence de 0,10 mm à 0,48 mm et plus préférentiellement de 0,15 mm à 0,45 mm.

De façon très avantageuse permettant d'assurer facilement l'obtention de mêmes caractéristiques géométriques pour chaque C1', C2', C3' élément filaire métallique, tous les A', B' éléments filaires métalliques de chaque premier et deuxième assemblage transitoire présentent un même diamètre, sont enroulés en hélice selon un même pas transitoire et présente un même diamètre d'hélice transitoire. De façon très avantageuse permettant d'assurer facilement l'obtention de mêmes caractéristiques géométriques pour chaque C1', C2', C3' élément filaire métallique, on a A'=B'.

Dans une première forme de réalisation permettant un réassemblage total des A' et B' éléments filaires métalliques de chaque couche de chaque assemblage transitoire, l'étape de séparation du premier assemblage transitoire, l'étape de séparation du deuxième assemblage transitoire et l'étape de réassemblage du premier assemblage fractionné AF11 avec le premier assemblage fractionné AF21 sont réalisées de sorte que A'=D'+E' et B'=F'+G'.

Dans une première variante de la première forme de réalisation de l'étape de séparation du premier assemblage transitoire dans laquelle le premier noyau transitoire est séparé avec le deuxième assemblage fractionné AF12, l'étape de séparation du premier assemblage transitoire comprend :
- une étape de séparation du premier assemblage transitoire entre:
   - le premier assemblage fractionné AF11, et
   - un ensemble fractionné EG1 comprenant au moins une couche constituée de G1'>1 éléments filaires métalliques enroulés en hélice autour du premier noyau transitoire, les G1'≥1 éléments filaires métalliques étant issus de la couche constituée des A'>1 éléments filaires métalliques du premier assemblage transitoire, et
- une étape de séparation de l'ensemble fractionné EG1 entre :
   - le deuxième assemblage fractionné AF12 formant le deuxième assemblage final, les E'>1 éléments filaires métalliques étant issus de la couche constituée des G1'>1 éléments filaires métalliques de l'ensemble fractionné EG1, et
   - le premier noyau transitoire.

Dans cette première variante de la première forme de réalisation de l'étape de séparation du premier assemblage transitoire, le deuxième assemblage fractionné AF12 formant le deuxième assemblage final, on a E'=C2'. On a également A'=D'+G1' et G1'=E'.

Dans cette première variante de la première forme de réalisation de l'étape de séparation du premier assemblage transitoire, l'étape de séparation du premier assemblage transitoire entre le premier assemblage fractionné AF11 et l'ensemble fractionné EG1 a lieu en amont de l'étape de séparation de l'ensemble fractionné EG1 entre le deuxième assemblage fractionné AF12 formant le deuxième assemblage final et le premier noyau transitoire.

Avantageusement, dans cette première variante de la première forme de réalisation de l'étape de séparation du premier assemblage transitoire, l'étape de séparation du premier assemblage transitoire entre le premier assemblage fractionné AF11 et l'ensemble fractionné EG1 comprend une étape de fractionnement du premier assemblage transitoire en le premier assemblage fractionné AF11 et l'ensemble fractionné EG1.

Avantageusement, dans cette première variante de la première forme de réalisation de l'étape de séparation du premier assemblage transitoire, l'étape de séparation de l'ensemble fractionné EG1 entre le deuxième assemblage fractionné AF12 formant le deuxième assemblage final et le premier noyau transitoire comprend une étape de fractionnement de l'ensemble fractionné EG1 en le deuxième assemblage fractionné AF12 formant le deuxième assemblage final et le premier noyau transitoire.

Dans une deuxième variante de la première forme de réalisation de l'étape de séparation du premier assemblage transitoire dans laquelle le premier noyau transitoire est séparé avec le premier assemblage fractionné AF11, l'étape de séparation du premier assemblage transitoire comprend :
- une étape de séparation du premier assemblage transitoire entre:
   - le deuxième assemblage fractionné AF12 formant le deuxième assemblage final, et
   - un ensemble fractionné EG1 comprenant au moins une couche constituée de G1 '≥1 élément(s) filaire(s) métallique(s) enroulé(s) en hélice autour du premier noyau transitoire, le ou les G1'≥1 élément(s) filaire(s) métallique(s) étant issu(s) de la couche constituée des A'>1 éléments filaires métalliques du premier assemblage transitoire, et
- une étape de séparation de l'ensemble fractionné EG1 entre :
   - le premier assemblage fractionné AF11, le ou les D'≥1 élément(s) filaire(s) métallique(s) étant issu(s) de la couche constituée des G1'≥1 élément(s) filaire(s) métallique(s) de l'ensemble fractionné EG1, et
   - le premier noyau transitoire.

Comme dans la première variante, dans cette deuxième variante de la première forme de réalisation de l'étape de séparation du premier assemblage transitoire, le deuxième assemblage fractionné AF12 formant le deuxième assemblage final, on a E'=C2'. On a égalementA'=E'+G1' et G1'=D'.

Dans cette deuxième variante de la première forme de réalisation de l'étape de séparation du premier assemblage transitoire, l'étape de séparation du premier assemblage transitoire entre le deuxième assemblage fractionné AF12 formant le deuxième assemblage final et l'ensemble fractionné EG1 a lieu en amont de l'étape de séparation de l'ensemble fractionné EG1 entre le premier assemblage fractionné AF11 et le premier noyau transitoire.

Avantageusement, dans la deuxième variante de la première forme de réalisation de l'étape de séparation du premier assemblage transitoire, l'étape de séparation du premier assemblage transitoire entre le deuxième assemblage fractionné AF12 formant le deuxième assemblage final et l'ensemble fractionné EG1 comprend une étape de fractionnement du premier assemblage transitoire en le deuxième assemblage fractionné AF12 formant le deuxième assemblage final et l'ensemble fractionné EG1.

Avantageusement, dans cette deuxième variante de la première forme de réalisation de l'étape de séparation du premier assemblage transitoire, l'étape de séparation de l'ensemble fractionné EG1 entre le premier assemblage fractionné AF11 et le premier noyau transitoire comprend une étape de fractionnement de l'ensemble fractionné EG1 en le premier assemblage fractionné AF11 et le premier noyau transitoire.

Dans ces première et deuxième variantes de la première forme de réalisation de l'étape de séparation du premier assemblage transitoire, l'ensemble fractionné EG1 comprend la couche constituée du ou des G1' élément(s) filaire(s) métallique(s) enroulés en hélice et le premier noyau transitoire, le ou les G1' élément(s) filaire(s) métallique(s) étant enroulé(s) en hélice autour du premier noyau transitoire. De préférence, dans un mode de réalisation permettant de fabriquer des assemblages finaux constitués d'une couche d'éléments filaires métalliques, l'ensemble fractionné EG1 est constitué de la couche constituée du ou des G1' élément(s) filaire(s) métallique(s) et du premier noyau transitoire, le ou les G1' élément(s) filaire(s) métallique(s) étant enroulé(s) en hélice autour du premier noyau transitoire.

Dans une troisième variante de la première forme de réalisation de l'étape de séparation du premier assemblage transitoire dans laquelle le premier assemblage fractionné AF11, le deuxième assemblage fractionné AF12 et le premier noyau transitoire ou un ou plusieurs ensembles comprenant le premier noyau transitoire sont séparés simultanément, l'étape de séparation du premier assemblage transitoire comprend une étape de fractionnement du premier assemblage transitoire entre le premier assemblage fractionné AF11, le deuxième assemblage fractionné AF12 et le premier noyau transitoire ou un ou plusieurs ensembles comprenant le premier noyau transitoire, de préférence le premier noyau transitoire.

Dans une première variante de la première forme de réalisation de l'étape de séparation du deuxième assemblage transitoire dans laquelle le deuxième noyau transitoire est séparé avec le deuxième assemblage fractionné AF22 et combinable avec l'une des première, deuxième et troisième variantes de la première forme de réalisation de l'étape de séparation du premier assemblage transitoire, l'étape de séparation du deuxième assemblage transitoire comprend :
- une étape de séparation du deuxième assemblage transitoire entre:
   - le premier assemblage fractionné AF21, et
   - un ensemble fractionné EG2 comprenant au moins une couche constituée de G2'>1 éléments filaires métalliques enroulés en hélice autour du deuxième noyau transitoire, les G2'>1 éléments filaires métalliques étant issus de la couche constituée des B'>1 éléments filaires métalliques du deuxième assemblage transitoire, et
- une étape de séparation de l'ensemble fractionné EG2 entre :
   - le deuxième assemblage fractionné AF22 formant le troisième assemblage final, les G'>1 éléments filaires métalliques étant issus de la couche constituée des G2'>1 éléments filaires métalliques de l'ensemble fractionné EG2, et
   - le deuxième noyau transitoire.

Dans cette première variante de la première forme de réalisation de l'étape de séparation du deuxième assemblage transitoire, le deuxième assemblage fractionné AF22 formant le troisième assemblage final, on a G'=C3'. On a également B'=F'+G2' et G'=E'.

Dans cette première variante de la première forme de réalisation de l'étape de séparation du deuxième assemblage transitoire, l'étape de séparation du deuxième assemblage transitoire entre le premier assemblage fractionné AF21 et l'ensemble fractionné EG2 a lieu en amont de l'étape de séparation de l'ensemble fractionné EG2 entre le deuxième assemblage fractionné AF22 formant le troisième assemblage final et le deuxième noyau transitoire.

Avantageusement, dans cette première variante de la première forme de réalisation de l'étape de séparation du deuxième assemblage transitoire, l'étape de séparation du deuxième assemblage transitoire entre le premier assemblage fractionné AF21 et l'ensemble fractionné EG2 comprend une étape de fractionnement du deuxième assemblage transitoire en le premier assemblage fractionné AF21 et l'ensemble fractionné EG2.

Avantageusement, dans cette première variante de la première forme de réalisation de l'étape de séparation du deuxième assemblage transitoire, l'étape de séparation de l'ensemble fractionné EG2 entre le deuxième assemblage fractionné AF22 formant le troisième assemblage final et le deuxième noyau transitoire comprend une étape de fractionnement de l'ensemble fractionné EG2 en le deuxième assemblage fractionné AF22 formant le troisième assemblage final et le deuxième noyau transitoire.

Dans une deuxième variante de la première forme de réalisation de l'étape de séparation du deuxième assemblage transitoire dans laquelle le deuxième noyau transitoire est séparé avec le premier assemblage fractionné AF21 et combinable avec l'une des première, deuxième et troisième variantes de la première forme de réalisation de l'étape de séparation du premier assemblage transitoire, l'étape de séparation du deuxième assemblage transitoire comprend :
- une étape de séparation du deuxième assemblage transitoire entre:
   - le deuxième assemblage fractionné AF22 formant le troisième assemblage final, et
   - un ensemble fractionné EG2 comprenant au moins une couche constituée de G2'≥1 élément(s) filaire(s) métallique(s) enroulé(s) en hélice autour du deuxième noyau transitoire, le ou les G2'≥1 élément(s) filaire(s) métallique(s) étant issu(s) de la couche constituée des B'>1 éléments filaires métalliques du deuxième assemblage transitoire, et
- une étape de séparation de l'ensemble fractionné EG2 entre :
   - le premier assemblage fractionné AF21, le ou les F'≥1 élément(s) filaire(s) métallique(s) étant issu(s) de la couche constituée des G2'≥1 élément(s) filaire(s) métallique(s) de l'ensemble fractionné EG2, et
   - le deuxième noyau transitoire.

Comme dans la première variante, dans cette deuxième variante de la première forme de réalisation de l'étape de séparation du premier assemblage transitoire, le deuxième assemblage fractionné AF22 formant le troisième assemblage final, on a G'=C3'. On a également B'=G'+G2' et G2'=F'.

Dans cette deuxième variante de la première forme de réalisation de l'étape de séparation du deuxième assemblage transitoire, l'étape de séparation du deuxième assemblage transitoire entre le deuxième assemblage fractionné AF22 formant le troisième assemblage final et l'ensemble fractionné EG2 a lieu en amont de l'étape de séparation de l'ensemble fractionné EG2 entre le premier assemblage fractionné AF21 et le deuxième noyau transitoire.

Avantageusement, dans la deuxième variante de la première forme de réalisation de l'étape de séparation du deuxième assemblage transitoire, l'étape de séparation du deuxième assemblage transitoire entre le deuxième assemblage fractionné AF22 formant le troisième assemblage final et l'ensemble fractionné EG2 comprend une étape de fractionnement du deuxième assemblage transitoire en le deuxième assemblage fractionné AF22 formant le troisième assemblage final et l'ensemble fractionné EG2.

Avantageusement, dans cette deuxième variante de la première forme de réalisation de l'étape de séparation du deuxième assemblage transitoire, l'étape de séparation de l'ensemble fractionné EG2 entre le premier assemblage fractionné AF21 et le deuxième noyau transitoire comprend une étape de fractionnement de l'ensemble fractionné EG2 en le premier assemblage fractionné AF21 et le deuxième noyau transitoire.

Dans ces première et deuxième variantes de la première forme de réalisation de l'étape de séparation du deuxième assemblage transitoire, l'ensemble fractionné EG2 comprend la couche constituée du ou des G2' élément(s) filaire(s) métallique(s) enroulés en hélice et le deuxième noyau transitoire, le ou les G2' élément(s) filaire(s) métallique(s) étant enroulé(s) en hélice autour du deuxième noyau transitoire. De préférence, dans un mode de réalisation permettant de fabriquer des assemblages finaux constitués d'une couche d'éléments filaires métalliques, l'ensemble fractionné EG2 est constitué de la couche constituée du ou des G2' élément(s) filaire(s) métallique(s) et du deuxième noyau transitoire, le ou les G2' élément(s) filaire(s) métallique(s) étant enroulé(s) en hélice autour du deuxième noyau transitoire.

Dans une troisième variante de la première forme de réalisation de l'étape de séparation du deuxième assemblage transitoire dans laquelle le deuxième assemblage fractionné AF21, le deuxième assemblage fractionné AF22 et le deuxième noyau transitoire ou un ou plusieurs ensembles comprenant le deuxième noyau transitoire sont séparés simultanément et combinable avec l'une des première, deuxième et troisième variantes de la première forme de réalisation de l'étape de séparation du premier assemblage transitoire, l'étape de séparation du deuxième assemblage transitoire comprend une étape de fractionnement du deuxième assemblage transitoire entre le premier assemblage fractionné AF21, le deuxième assemblage fractionné AF22 et le deuxième noyau transitoire ou un ou plusieurs ensembles comprenant le deuxième noyau transitoire, de préférence le deuxième noyau transitoire.

Dans une deuxième forme de réalisation permettant un réassemblage partiel des A' et B' éléments filaires métalliques de chaque couche de chaque assemblage transitoire, l'étape de séparation du premier assemblage transitoire, l'étape de séparation du deuxième assemblage transitoire, et l'étape de réassemblage du premier assemblage fractionné AF11 avec le premier assemblage fractionné AF21 sont réalisées de sorte que A'>D'+E' et B'>F'+G'.

Dans des première, deuxième et troisième variantes de la deuxième forme de réalisation de l'étape de séparation du premier assemblage transitoire dans lesquelles le premier noyau transitoire est séparé avec le deuxième assemblage fractionné AF12, l'étape de séparation du premier assemblage transitoire comprend :
- une étape de séparation du premier assemblage transitoire entre :
   - un ensemble fractionné EG1 comprenant au moins une couche constituée de G1'>1 éléments filaires métalliques enroulés en hélice autour du premier noyau transitoire, les G1'>1 éléments filaires métalliques étant issus de la couche constituée des A'>1 éléments filaires métalliques du premier assemblage transitoire, et
   - le premier assemblage fractionné AF11,
- une étape de séparation de l'ensemble fractionné EG1 entre :
   - le deuxième assemblage fractionné AF12 formant le deuxième assemblage final, les E'>1 éléments filaires métalliques étant issus de la couche constituée des G1 '>1 éléments filaires métalliques de l'ensemble fractionné EG1, et
   - le premier noyau transitoire ou un ou plusieurs ensembles comprenant le premier noyau transitoire, de préférence le premier noyau transitoire.

Dans ces première, deuxième et troisième variantes de la deuxième forme de réalisation de l'étape de séparation du premier assemblage transitoire, le deuxième assemblage fractionné AF12 formant le deuxième assemblage final, on a E'=C2'. On a également A'≥D'+G1' et G1'≥E'.

Dans ces première, deuxième et troisième variantes de la deuxième forme de réalisation de l'étape de séparation du premier assemblage transitoire, l'étape de séparation du premier assemblage transitoire entre le premier assemblage fractionné AF11 et l'ensemble fractionné EG1 a lieu en amont de l'étape de séparation de l'ensemble fractionné EG1 entre le deuxième assemblage fractionné AF12 formant le deuxième assemblage final et le premier noyau transitoire ou un ou plusieurs ensembles comprenant le premier noyau transitoire, de préférence le premier noyau transitoire.

Avantageusement, l'étape de séparation du premier assemblage transitoire entre l'ensemble fractionné EG1 et le premier assemblage fractionné AF11 comprend une étape de fractionnement du premier assemblage transitoire en l'ensemble fractionné EG1 et le premier assemblage fractionné AF11. On a alors A'=G1 '+D'.

Dans ces première, deuxième et troisième variantes de la deuxième forme de réalisation de l'étape de séparation du premier assemblage transitoire, l'ensemble fractionné EG1 comprend la couche constituée des G1' éléments filaires métalliques enroulés en hélice et le premier noyau transitoire, les G1' éléments filaires métalliques étant enroulés en hélice autour du premier noyau transitoire. De préférence, dans un mode de réalisation permettant de fabriquer des assemblages finaux constitués d'une couche d'éléments filaires métalliques, l'ensemble fractionné EG1 est constitué de la couche constituée des G1' éléments filaires métalliques et du premier noyau transitoire, les G1' éléments filaires métalliques étant enroulés en hélice autour du premier noyau transitoire.

Dans la première variante de la deuxième forme de réalisation de l'étape de séparation du premier assemblage transitoire, l'étape de séparation de l'ensemble fractionné EG1 entre le deuxième assemblage fractionné AF12 et le premier noyau transitoire ou un ou plusieurs ensembles comprenant le premier noyau transitoire, de préférence le premier noyau transitoire comprend :
- une étape de séparation de l'ensemble fractionné EG1 entre :
   - un ensemble précurseur EH1 comprenant au moins une couche constituée de H1'>1 éléments filaires métalliques enroulés en hélice autour du premier noyau transitoire, les H1'>1 éléments filaires métalliques étant issus de la couche constituée des G1'>1 éléments filaires métalliques de l'ensemble fractionné EG1, et
   - un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des G1'>1 éléments filaires métalliques de l'ensemble fractionné EG1,
- une étape de séparation de l'ensemble précurseur EH1 entre :
   - le deuxième assemblage fractionné AF12 formant le deuxième assemblage final, les E'>1 éléments filaires métalliques étant issus de la couche constituée des H1 '>1 éléments filaires métalliques de l'ensemble précurseur EH1, et
   - le premier noyau transitoire ou un ou plusieurs ensembles comprenant le premier noyau transitoire, de préférence le premier noyau transitoire.

Dans cette première variante de la deuxième forme de réalisation de l'étape de séparation du premier assemblage transitoire, on a G1'≥H1'+I1' et H1'≥E'.

Dans cette première variante de la deuxième forme de réalisation de l'étape de séparation du premier assemblage transitoire, l'étape de séparation de l'ensemble fractionné EG1 entre l'ensemble précurseur EH1 et l'ensemble dérivé ED1 a lieu en amont de l'étape de séparation de l'ensemble précurseur EH1 entre le deuxième assemblage fractionné AF12 formant le deuxième assemblage final et le premier noyau transitoire ou un ou plusieurs ensembles comprenant le premier noyau transitoire, de préférence le premier noyau transitoire.

Avantageusement, dans cette première variante de la deuxième forme de réalisation de l'étape de séparation du premier assemblage transitoire, l'étape de séparation de l'ensemble fractionné EG1 entre l'ensemble précurseur EH1 et l'ensemble dérivé ED1 comprend une étape de fractionnement de l'ensemble fractionné EG1 en l'ensemble précurseur EH1 et l'ensemble dérivé ED1. On a alors G1'=H1'+I1'.

Avantageusement, dans cette première variante de la deuxième forme de réalisation de l'étape de séparation du premier assemblage transitoire, l'étape de séparation de l'ensemble précurseur EH1 entre le deuxième assemblage fractionné AF12 formant le deuxième assemblage final et le premier noyau transitoire ou un ou plusieurs ensembles comprenant le premier noyau transitoire, de préférence le premier noyau transitoire comprend une étape de fractionnement de l'ensemble précurseur EH1 en le deuxième assemblage fractionné AF12 formant le deuxième assemblage final et le premier noyau transitoire ou un ou plusieurs ensembles comprenant le premier noyau transitoire, de préférence le premier noyau transitoire. On a alors H1'=E' dans le cas d'une étape de fractionnement de l'ensemble précurseur EH1 en le deuxième assemblage fractionné AF12 formant le deuxième assemblage final et le premier noyau transitoire.

Dans cette première variante de la deuxième forme de réalisation de l'étape de séparation du premier assemblage transitoire, l'ensemble précurseur EH1 comprend la couche constituée des H1' éléments filaires métalliques enroulés en hélice et le premier noyau transitoire, les H1' éléments filaires métalliques étant enroulés en hélice autour du premier noyau transitoire. De préférence, dans un mode de réalisation permettant de fabriquer des assemblages finaux constitués d'une couche d'éléments filaires métalliques, l'ensemble précurseur EH1 est constitué de la couche constituée des H1' éléments filaires métalliques et du premier noyau transitoire, les H1' éléments filaires métalliques étant enroulés en hélice autour du premier noyau transitoire.

Dans cette première variante de la deuxième forme de réalisation de l'étape de séparation du premier assemblage transitoire, dans un mode de réalisation permettant de fabriquer des assemblages finaux constitués d'une couche d'éléments filaires métalliques, l'ensemble dérivé ED1 est constitué de la couche constituée du ou des I1' élément(s) filaire(s) métallique(s) enroulés en hélice.

Dans la deuxième variante de la deuxième forme de réalisation de l'étape de séparation du premier assemblage transitoire, l'étape de séparation de l'ensemble fractionné EG1 entre le deuxième assemblage fractionné AF12 et le premier noyau transitoire ou un ou plusieurs ensembles comprenant le premier noyau transitoire, de préférence le premier noyau transitoire comprend :
- une étape de séparation de l'ensemble fractionné EG1 entre :
   - un ensemble précurseur EH1 comprenant au moins une couche constituée de H1'>1 éléments filaires métalliques enroulés en hélice, les H1'>1 éléments filaires métalliques étant issus de la couche constituée des G1'>1 éléments filaires métalliques de l'ensemble fractionné EG1, et
   - le premier noyau transitoire ou un ou plusieurs ensembles comprenant le premier noyau transitoire, de préférence le premier noyau transitoire,
- une étape de séparation de l'ensemble précurseur EH1 entre :
   - le deuxième assemblage fractionné AF12 formant le deuxième assemblage final, les E'>1 éléments filaires métalliques étant issus de la couche constituée des H1'>1 éléments filaires métalliques de l'ensemble précurseur EH1, et
   - un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des H1'>1 éléments filaires métalliques de l'ensemble précurseur EH1.

Dans cette deuxième variante de la deuxième forme de réalisation de l'étape de séparation du premier assemblage transitoire, on a G1'≥H1' et H1'≥E'+I1'.

Dans cette deuxième variante de la deuxième forme de réalisation de l'étape de séparation du premier assemblage transitoire, l'étape de séparation de l'ensemble fractionné EG1 entre l'ensemble précurseur EH1 et le premier noyau transitoire ou un ou plusieurs ensembles comprenant le premier noyau transitoire, de préférence le premier noyau transitoire a lieu en amont de l'étape de séparation de l'ensemble précurseur EH1 entre le deuxième assemblage fractionné AF12 formant le deuxième assemblage final et l'ensemble dérivé ED1.

Avantageusement, dans cette deuxième variante de la deuxième forme de réalisation de l'étape de séparation du premier assemblage transitoire, l'étape de séparation de l'ensemble fractionné EG1 entre l'ensemble précurseur EH1 et le premier noyau transitoire ou un ou plusieurs ensembles comprenant le premier noyau transitoire, de préférence le premier noyau transitoire comprend une étape de fractionnement de l'ensemble fractionné EG1 en l'ensemble précurseur EH1 et le premier noyau transitoire ou un ou plusieurs ensembles comprenant le premier noyau transitoire, de préférence le premier noyau transitoire. On a alors G1'=H1' dans le cas d'une étape de fractionnement de l'ensemble fractionné EG1 en l'ensemble précurseur EH1 et le premier noyau transitoire.

Avantageusement, dans cette deuxième variante de la deuxième forme de réalisation de l'étape de séparation du premier assemblage transitoire, l'étape de séparation de l'ensemble précurseur EH1 entre le deuxième assemblage fractionné AF12 formant le deuxième assemblage final et l'ensemble dérivé ED1 comprend une étape de fractionnement de l'ensemble précurseur EH1 en le deuxième assemblage fractionné AF12 formant le deuxième assemblage final et l'ensemble dérivé ED1. On a alors H1'=E'+I1'.

Dans cette deuxième variante de la deuxième forme de réalisation de l'étape de séparation du premier assemblage transitoire, dans un mode de réalisation permettant de fabriquer des assemblages finaux constitués d'une couche d'éléments filaires métalliques, chaque ensemble précurseur EH1 et ensemble dérivé ED1 est respectivement constitué de la couche constituée du ou des H1', I1' élément(s) filaire(s) métallique(s) enroulés en hélice.

Dans la troisième variante de la deuxième forme de réalisation de l'étape de séparation du premier assemblage transitoire, l'étape de séparation de l'ensemble fractionné EG1 entre le deuxième assemblage fractionné AF12 et le premier noyau transitoire ou un ou plusieurs ensembles comprenant le premier noyau transitoire, de préférence le premier noyau transitoire comprend :
- une étape de séparation de l'ensemble fractionné EG1 entre :
   - un ensemble principal EM1 comprenant au moins une couche constituée de J1'>1 éléments filaires métalliques enroulés en hélice, les J1'>1 éléments filaires métalliques étant issus de la couche constituée des G1'>1 éléments filaires métalliques de l'ensemble fractionné EG1, l'ensemble principal EM1 formant le deuxième assemblage fractionné AF12 formant le deuxième assemblage final, et
   - un ensemble complémentaire ES1 comprenant au moins une couche constituée de K1'≥1 élément(s) filaire(s) métallique(s) enroulé(s) en hélice autour du premier noyau transitoire, le ou les K1'≥1 élément(s) filaire(s) métallique(s) étant issu(s) de la couche constituée des G1'>1 éléments filaires métalliques de l'ensemble fractionné EG1.

Dans cette troisième variante de la deuxième forme de réalisation de l'étape de séparation du premier assemblage transitoire, l'ensemble principal EM1 formant le deuxième assemblage fractionné AF12 formant le deuxième assemblage final, on a J1'=E'=C2'. On a également G1'≥J1'+K1'.

Avantageusement, dans cette troisième variante de la deuxième forme de réalisation de l'étape de séparation du premier assemblage transitoire, l'étape de séparation de l'ensemble fractionné EG1 entre l'ensemble principal EM1 et l'ensemble complémentaire ES1 comprend une étape de fractionnement de l'ensemble fractionné EG1 en l'ensemble principal EM1 et l'ensemble complémentaire ES1. On a alors G1'=J1'+K1'.

Dans cette troisième variante de la deuxième forme de réalisation de l'étape de séparation du premier assemblage transitoire, dans un mode de réalisation permettant de fabriquer des assemblages finaux constitués d'une couche d'éléments filaires métalliques, l'ensemble principal EM1 formant le deuxième assemblage fractionné AF12 formant le deuxième assemblage final est constitué de la couche constituée du ou des J1' élément(s) filaire(s) métallique(s) enroulés en hélice.

Dans cette troisième variante de la deuxième forme de réalisation de l'étape de séparation du premier assemblage transitoire, l'ensemble complémentaire ES1 comprend la couche constituée du ou des K1' élément(s) filaire(s) métallique(s) enroulés en hélice et le premier noyau transitoire, le ou les K1' élément(s) filaire(s) métallique(s) étant enroulé(s) en hélice autour du premier noyau transitoire. De préférence, dans un mode de réalisation permettant de fabriquer des assemblages finaux constitués d'une couche d'éléments filaires métalliques, l'ensemble complémentaire ES1 est constitué de la couche constituée du ou des K1' élément(s) filaire(s) métallique(s) et du premier noyau transitoire, le ou les K1' élément(s) filaire(s) métallique(s) étant enroulé(s) en hélice autour du premier noyau transitoire.

De préférence, l'étape de séparation de l'ensemble fractionné EG1 entre le deuxième assemblage fractionné AF12 et le premier noyau transitoire ou un ou plusieurs ensembles comprenant le premier noyau transitoire, de préférence le premier noyau transitoire comprend une étape de séparation de l'ensemble complémentaire ES1 entre :
- un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée du ou des K1'≥1 élément(s) filaire(s) métallique(s) de l'ensemble complémentaire ES1, et
- le premier noyau transitoire ou un ou plusieurs ensembles comprenant le premier noyau transitoire, de préférence le premier noyau transitoire. On a alors K1'≥I1'.

Ainsi, l'étape de séparation de l'ensemble fractionné EG1 entre l'ensemble principal EM1 et l'ensemble complémentaire ES1 a lieu en amont de l'étape de séparation de l'ensemble complémentaire ES1 entre l'ensemble dérivé ED1 et le premier noyau transitoire ou un ou plusieurs ensembles comprenant le premier noyau transitoire, de préférence le premier noyau transitoire.

Avantageusement, l'étape de séparation de l'ensemble complémentaire ES1 entre l'ensemble dérivé ED1 et le premier noyau transitoire ou un ou plusieurs ensembles comprenant le premier noyau transitoire, de préférence le premier noyau transitoire comprend une étape de fractionnement de l'ensemble complémentaire ES1 en l'ensemble dérivé ED1 et le premier noyau transitoire ou un ou plusieurs ensembles comprenant le premier noyau transitoire, de préférence le premier noyau transitoire. On a alors K1'=I1' dans le cas d'une étape de fractionnement de l'ensemble complémentaire ES1 en l'ensemble dérivé ED1 et le premier noyau transitoire.

Dans des quatrième, cinquième et sixième variantes de la deuxième forme de réalisation de l'étape de séparation du premier assemblage transitoire dans lesquelles le premier noyau transitoire est séparé avec le premier assemblage fractionné AF11, l'étape de séparation du premier assemblage transitoire comprend :
- une étape de séparation du premier assemblage transitoire entre :
   - un ensemble fractionné EG1 comprenant au moins une couche constituée de G1'>1 éléments filaires métalliques enroulés en hélice autour du premier noyau transitoire, les G1'>1 éléments filaires métalliques étant issus de la couche constituée des A'>1 éléments filaires métalliques du premier assemblage transitoire, et
   - le deuxième assemblage fractionné AF12 formant le deuxième assemblage final,
- une étape de séparation de l'ensemble fractionné EG1 entre :
   - le premier assemblage fractionné AF11, le ou les D'≥1 élément(s) filaire(s) métallique(s) étant issu(s) de la couche constituée des G1'>1 éléments filaires métalliques de l'ensemble fractionné EG1, et
   - le premier noyau transitoire ou un ou plusieurs ensembles comprenant le premier noyau transitoire, de préférence le premier noyau transitoire.

Dans ces quatrième, cinquième et sixième variantes de la deuxième forme de réalisation de l'étape de séparation du premier assemblage transitoire, le deuxième assemblage fractionné AF12 formant le deuxième assemblage final, on a E'=C2'. On a également A'≥E'+G1' et G1'≥D'.

Dans ces quatrième, cinquième et sixième variantes de la deuxième forme de réalisation de l'étape de séparation du premier assemblage transitoire, l'étape de séparation du premier assemblage transitoire entre l'ensemble fractionné EG1 et le deuxième assemblage fractionné AF12 formant le deuxième assemblage final a lieu en amont de l'étape de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire.

Avantageusement, l'étape de séparation du premier assemblage transitoire entre l'ensemble fractionné EG1 et le deuxième assemblage fractionné AF12 formant le deuxième assemblage final comprend une étape de fractionnement du premier assemblage transitoire en l'ensemble fractionné EG1 et le deuxième assemblage fractionné AF12 formant le deuxième assemblage final. On a ainsi, A'=G1'+E'.

Dans ces quatrième, cinquième et sixième variantes de la deuxième forme de réalisation de l'étape de séparation du premier assemblage transitoire, l'ensemble fractionné EG1 comprend la couche constituée des G1' éléments filaires métalliques enroulés en hélice et le premier noyau transitoire, les G1' éléments filaires métalliques étant enroulés en hélice autour du premier noyau transitoire. De préférence, dans un mode de réalisation permettant de fabriquer des assemblages finaux constitués d'une couche d'éléments filaires métalliques, l'ensemble fractionné EG1 est constitué de la couche constituée des G1' éléments filaires métalliques et du premier noyau transitoire, les G1' éléments filaires métalliques étant enroulés en hélice autour du premier noyau transitoire.

Dans la quatrième variante de la deuxième forme de réalisation de l'étape de séparation du premier assemblage transitoire, l'étape de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire comprend :
- une étape de séparation de l'ensemble fractionné EG1 entre :
   - un ensemble précurseur EH1 comprenant au moins une couche constituée de H1'≥1 élément(s) filaire(s) métallique(s) enroulé(s) en hélice autour du premier noyau transitoire, le ou les H1 '≥1 élément(s) filaire(s) métallique(s) étant issu(s) de la couche constituée des G1'>1 éléments filaires métalliques de l'ensemble fractionné EG1, et
   - un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des G1'>1 éléments filaires métalliques de l'ensemble fractionné EG1,
- une étape de séparation de l'ensemble précurseur EH1 entre :
   - le premier assemblage fractionné AF11, le ou les D'≥1 élément(s) filaire(s) métallique(s) étant issu(s) de la couche constituée du ou des H1'≥1 élément(s) filaire(s) métallique(s) de l'ensemble précurseur EH1 et
   - le premier noyau transitoire ou un ou plusieurs ensembles comprenant le premier noyau transitoire, de préférence le premier noyau transitoire.

Dans cette quatrième variante de la deuxième forme de réalisation de l'étape de séparation du premier assemblage transitoire, on a G1 '≥H1'+I1' et H1 '≥D'.

Dans cette quatrième variante de la deuxième forme de réalisation de l'étape de séparation du premier assemblage transitoire, l'étape de séparation de l'ensemble fractionné EG1 entre l'ensemble précurseur EH1 et l'ensemble dérivé ED1 a lieu en amont de l'étape de séparation de l'ensemble précurseur EH1 entre le premier assemblage fractionné AF11 et le premier noyau transitoire ou un ou plusieurs ensembles comprenant le premier noyau transitoire, de préférence le premier noyau transitoire.

Avantageusement, dans cette quatrième variante de la deuxième forme de réalisation de l'étape de séparation du premier assemblage transitoire, l'étape de séparation de l'ensemble fractionné EG1 entre l'ensemble précurseur EH1 et l'ensemble dérivé ED1 comprend une étape de fractionnement de l'ensemble fractionné EG1 en l'ensemble précurseur EH1 et l'ensemble dérivé ED1. On a alors G1'=H1'+I1'.

Avantageusement, dans cette quatrième variante de la deuxième forme de réalisation de l'étape de séparation du premier assemblage transitoire, l'étape de séparation de l'ensemble précurseur EH1 entre le premier assemblage fractionné AF11 et le premier noyau transitoire ou un ou plusieurs ensembles comprenant le premier noyau transitoire, de préférence le premier noyau transitoire comprend une étape de fractionnement de l'ensemble précurseur EH1 en le premier assemblage fractionné AF11 et le premier noyau transitoire ou un ou plusieurs ensembles comprenant le premier noyau transitoire, de préférence le premier noyau transitoire. On a alors H1'=D' dans le cas d'une étape de fractionnement de l'ensemble précurseur EH1 en le premier assemblage fractionné AF11 et le premier noyau transitoire.

Dans cette quatrième variante de la deuxième forme de réalisation de l'étape de séparation du premier assemblage transitoire, l'ensemble précurseur EH1 comprend la couche constituée du ou des H1' élément(s) filaire(s) métallique(s) enroulés en hélice et le premier noyau transitoire, le ou les H1' élément(s) filaire(s) métallique(s) étant enroulé(s) en hélice autour du premier noyau transitoire. De préférence, dans un mode de réalisation permettant de fabriquer des assemblages finaux constitués d'une couche d'éléments filaires métalliques, l'ensemble précurseur EH1 est constitué de la couche constituée du ou des H1' élément(s) filaire(s) métallique(s) et du premier noyau transitoire, le ou les H1' élément(s) filaire(s) métallique(s) étant enroulé(s) en hélice autour du premier noyau transitoire.

Dans cette quatrième variante de la deuxième forme de réalisation de l'étape de séparation du premier assemblage transitoire, dans un mode de réalisation permettant de fabriquer des assemblages finaux constitués d'une couche d'éléments filaires métalliques, l'ensemble dérivé ED1 est constitué de la couche constituée du ou des I1' élément(s) filaire(s) métallique(s) enroulés en hélice.

Dans une cinquième variante de la deuxième forme de réalisation de l'étape de séparation du premier assemblage transitoire, l'étape de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire comprend :
- une étape de séparation de l'ensemble fractionné EG1 entre :
   - un ensemble précurseur EH1 comprenant au moins une couche constituée de H1'>1 éléments filaires métalliques enroulés en hélice, les H1'>1 éléments filaires métalliques étant issus de la couche constituée des G1'>1 éléments filaires métalliques de l'ensemble fractionné EG1, et
   - le premier noyau transitoire ou un ou plusieurs ensembles comprenant le premier noyau transitoire, de préférence le premier noyau transitoire,
- une étape de séparation de l'ensemble précurseur EH1 entre :
   - le premier assemblage fractionné AF11, le ou les D'≥1 élément(s) filaire(s) métallique(s) étant issu(s) de la couche constituée des H1'>1 éléments filaires métalliques de l'ensemble précurseur EH1 et
   - un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des H1'>1 éléments filaires métalliques de l'ensemble précurseur EH1.

Dans cette cinquième variante de la deuxième forme de réalisation de l'étape de séparation du premier assemblage transitoire, on a G1'≥H1' et H1'≥D'+I1'.

Dans cette cinquième variante de la deuxième forme de réalisation de l'étape de séparation du premier assemblage transitoire, l'étape de séparation de l'ensemble fractionné EG1 entre l'ensemble précurseur EH1 et le premier noyau transitoire ou un ou plusieurs ensembles comprenant le premier noyau transitoire, de préférence le premier noyau transitoire a lieu en amont de l'étape de séparation de l'ensemble précurseur EH1 entre le premier assemblage fractionné AF11 et l'ensemble dérivé ED1.

Avantageusement, dans cette cinquième variante de la deuxième forme de réalisation de l'étape de séparation du premier assemblage transitoire, l'étape de séparation de l'ensemble fractionné EG1 entre l'ensemble précurseur EH1 et le premier noyau transitoire ou un ou plusieurs ensembles comprenant le premier noyau transitoire, de préférence le premier noyau transitoire comprend une étape de fractionnement de l'ensemble fractionné EG1 en l'ensemble précurseur EH1 et le premier noyau transitoire ou un ou plusieurs ensembles comprenant le premier noyau transitoire, de préférence le premier noyau transitoire. On a alors G1'=H1' dans le cas d'une étape de fractionnement de l'ensemble fractionné EG1 en l'ensemble précurseur EH1 et le premier noyau transitoire.

Avantageusement, dans cette cinquième variante de la deuxième forme de réalisation de l'étape de séparation du premier assemblage transitoire, l'étape de séparation de l'ensemble précurseur EH1 entre le premier assemblage fractionné AF11 et l'ensemble dérivé ED1 comprend une étape de fractionnement de l'ensemble précurseur EH1 en le premier assemblage fractionné AF11 et l'ensemble dérivé ED1. On a alors H1'=D'+I1'.

Dans cette cinquième variante de la deuxième forme de réalisation de l'étape de séparation du premier assemblage transitoire, dans un mode de réalisation permettant de fabriquer des assemblages finaux constitués d'une couche d'éléments filaires métalliques, chaque ensemble précurseur EH1 et ensemble dérivé ED1 est respectivement constitué de la couche constituée du ou des H1', I1' élément(s) filaire(s) métallique(s) enroulés en hélice.

Dans la sixième variante de la deuxième forme de réalisation de l'étape de séparation du premier assemblage transitoire, l'étape de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire comprend :
- une étape de séparation de l'ensemble fractionné EG1 entre :
   - un ensemble principal EM1 comprenant au moins une couche constituée de J1'≥1 élément(s) filaire(s) métallique(s) enroulé(s) en hélice, le ou les J1'≥1 élément(s) filaire(s) métallique(s) étant issu(s) de la couche constituée des G1'>1 éléments filaires métalliques de l'ensemble fractionné EG1, l'ensemble principal EM1 formant le premier assemblage fractionné AF11, et
   - un ensemble complémentaire ES1 comprenant au moins une couche constituée de K1'≥1 élément(s) filaire(s) métallique(s) enroulé(s) en hélice autour du premier noyau transitoire, le ou les K1'≥1 élément(s) filaire(s) métallique(s) étant issu(s) de la couche constituée des G1'>1 éléments filaires métalliques de l'ensemble fractionné EG1.

Dans cette sixième variante de la deuxième forme de réalisation de l'étape de séparation du premier assemblage transitoire, l'ensemble principal EM1 formant le premier assemblage fractionné AF11, on a J1'=D'. On a également G1'≥J1'+K1'.

Avantageusement, dans cette sixième variante de la deuxième forme de réalisation de l'étape de séparation du premier assemblage transitoire, l'étape de séparation de l'ensemble fractionné EG1 entre l'ensemble principal EM1 et l'ensemble complémentaire ES1 comprend une étape de fractionnement de l'ensemble fractionné EG1 en l'ensemble principal EM1 et l'ensemble complémentaire ES1. On a alors G1'=J1'+K1'.

Dans cette sixième variante de la deuxième forme de réalisation de l'étape de séparation du premier assemblage transitoire, dans un mode de réalisation permettant de fabriquer des assemblages finaux constitués d'une couche d'éléments filaires métalliques, l'ensemble principal EM1 formant le premier assemblage fractionné AF11 est constitué de la couche constituée du ou des J1' élément(s) filaire(s) métallique(s) enroulés en hélice.

Dans cette sixième variante de la deuxième forme de réalisation de l'étape de séparation du premier assemblage transitoire, l'ensemble complémentaire ES1 comprend la couche constituée du ou des K1' élément(s) filaire(s) métallique(s) enroulés en hélice et le premier noyau transitoire, le ou les K1' élément(s) filaire(s) métallique(s) étant enroulé(s) en hélice autour du premier noyau transitoire. De préférence, dans un mode de réalisation permettant de fabriquer des assemblages finaux constitués d'une couche d'éléments filaires métalliques, l'ensemble complémentaire ES1 est constitué de la couche constituée du ou des K1' élément(s) filaire(s) métallique(s) et du premier noyau transitoire, le ou les K1' élément(s) filaire(s) métallique(s) étant enroulé(s) en hélice autour du premier noyau transitoire.

De préférence, l'étape de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire comprend une étape de séparation de l'ensemble complémentaire ES1 entre :
- un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée du ou des K1'≥1 élément(s) filaire(s) métallique(s) de l'ensemble complémentaire ES1, et
- le premier noyau transitoire ou un ou plusieurs ensembles comprenant le premier noyau transitoire, de préférence le premier noyau transitoire. On a alors K1'≥I1'.

Ainsi, l'étape de séparation de l'ensemble fractionné EG1 entre l'ensemble principal EM1 et l'ensemble complémentaire ES1 a lieu en amont de l'étape de séparation de l'ensemble complémentaire ES1 entre l'ensemble dérivé ED1 et le premier noyau transitoire ou un ou plusieurs ensembles comprenant le premier noyau transitoire, de préférence le premier noyau transitoire.

Avantageusement, l'étape de séparation de l'ensemble complémentaire ES1 entre l'ensemble dérivé ED1 et le premier noyau transitoire ou un ou plusieurs ensembles comprenant le premier noyau transitoire, de préférence le premier noyau transitoire comprend une étape de fractionnement de l'ensemble complémentaire ES1 en l'ensemble dérivé ED1 et le premier noyau transitoire ou un ou plusieurs ensembles comprenant le premier noyau transitoire, de préférence le premier noyau transitoire. On a alors K1'=I1' dans le cas d'une étape de fractionnement de l'ensemble complémentaire ES1 en l'ensemble dérivé ED1 et le premier noyau transitoire.

Dans une septième variante de la deuxième forme de réalisation de l'étape de séparation du premier assemblage transitoire dans laquelle le premier assemblage fractionné AF11, le deuxième assemblage fractionné AF12 et le premier noyau transitoire ou un ou plusieurs ensembles comprenant le premier noyau transitoire sont séparés simultanément, l'étape de séparation du premier assemblage transitoire comprend une étape de fractionnement du premier assemblage transitoire entre le premier assemblage fractionné AF11, le deuxième assemblage fractionné AF12, le premier noyau transitoire ou un ou plusieurs ensembles comprenant le premier noyau transitoire, de préférence le premier noyau transitoire et un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des A'>1 éléments filaires métalliques du premier assemblage transitoire.

Dans cette septième variante de la deuxième forme de réalisation de l'étape de séparation du premier assemblage transitoire, dans un mode de réalisation permettant de fabriquer des assemblages finaux constitués d'une couche d'éléments filaires métalliques, l'ensemble dérivé ED1 est constitué de la couche constituée du ou des I1' élément(s) filaire(s) métallique(s) enroulés en hélice.

Dans des première, deuxième et troisième variantes de la deuxième forme de réalisation de l'étape de séparation du deuxième assemblage transitoire dans lesquelles le deuxième noyau transitoire est séparé avec le deuxième assemblage fractionné AF22 et combinables avec l'une des première à sixième variantes de la deuxième forme de réalisation de l'étape de séparation du premier assemblage transitoire, l'étape de séparation du deuxième assemblage transitoire comprend :
- une étape de séparation du deuxième assemblage transitoire entre :
   - un ensemble fractionné EG2 comprenant au moins une couche constituée de G2'>1 éléments filaires métalliques enroulés en hélice autour du deuxième noyau transitoire, les G2'>1 éléments filaires métalliques étant issus de la couche constituée des B'>1 éléments filaires métalliques du deuxième assemblage transitoire, et
   - le premier assemblage fractionné AF21,
- une étape de séparation de l'ensemble fractionné EG2 entre :
   - le deuxième assemblage fractionné AF22 formant le troisième assemblage final, les G'>1 éléments filaires métalliques étant issus de la couche constituée des G2'>1 éléments filaires métalliques de l'ensemble fractionné EG2, et
   - le deuxième noyau transitoire ou un ou plusieurs ensembles comprenant le deuxième noyau transitoire, de préférence le deuxième noyau transitoire.

Dans ces première, deuxième et troisième variantes de la deuxième forme de réalisation de l'étape de séparation du deuxième assemblage transitoire, le deuxième assemblage fractionné AF22 formant le troisième assemblage final, on a G'=C3'. On a également B'≥F'+G2' et G2'≥G'.

Dans ces première, deuxième et troisième variantes de la deuxième forme de réalisation de l'étape de séparation du deuxième assemblage transitoire, l'étape de séparation du deuxième assemblage transitoire entre l'ensemble fractionné EG2 et le premier assemblage fractionné AF21 a lieu en amont de l'étape de séparation de l'ensemble fractionné EG2 entre le deuxième assemblage fractionné AF22 formant le troisième assemblage final et le deuxième noyau transitoire ou un ou plusieurs ensembles comprenant le deuxième noyau transitoire, de préférence le deuxième noyau transitoire.

Avantageusement, l'étape de séparation du deuxième assemblage transitoire entre l'ensemble fractionné EG2 et le premier assemblage fractionné AF21 comprend une étape de fractionnement du deuxième assemblage transitoire en l'ensemble fractionné EG2 et le deuxième assemblage fractionné AF21. On a alors B'=G2'+F'.

Dans ces première, deuxième et troisième variantes de la deuxième forme de réalisation de l'étape de séparation du deuxième assemblage transitoire, l'ensemble fractionné EG2 comprend la couche constituée des G2' éléments filaires métalliques enroulés en hélice et le deuxième noyau transitoire, les G2' éléments filaires métalliques étant enroulés en hélice autour du deuxième noyau transitoire. De préférence, dans un mode de réalisation permettant de fabriquer des assemblages finaux constitués d'une couche d'éléments filaires métalliques, l'ensemble fractionné EG2 est constitué de la couche constituée des G2' éléments filaires métalliques et du deuxième noyau transitoire, les G2' éléments filaires métalliques étant enroulés en hélice autour du deuxième noyau transitoire.

Dans la première variante de la deuxième forme de réalisation de l'étape de séparation du deuxième assemblage transitoire, l'étape de séparation de l'ensemble fractionné EG2 entre le deuxième assemblage fractionné AF22 et le deuxième noyau transitoire ou un ou plusieurs ensembles comprenant le deuxième noyau transitoire, de préférence le deuxième noyau transitoire comprend :
- une étape de séparation de l'ensemble fractionné EG2 entre :
   - un ensemble précurseur EH2 comprenant au moins une couche (H2) constituée de H2'>1 éléments filaires métalliques enroulés en hélice autour du deuxième noyau transitoire, les H2'>1 éléments filaires métalliques étant issus de la couche constituée des G2'>1 éléments filaires métalliques de l'ensemble fractionné EG2, et
   - un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des G2'>1 éléments filaires métalliques de l'ensemble fractionné EG2,
- une étape de séparation de l'ensemble précurseur EH2 entre :
   - le deuxième assemblage fractionné AF22 formant le troisième assemblage final, les G'>1 éléments filaires métalliques étant issus de la couche constituée des H2'>1 éléments filaires métalliques de l'ensemble précurseur EH2, et
   - le deuxième noyau transitoire ou un ou plusieurs ensembles comprenant le deuxième noyau transitoire, de préférence le deuxième noyau transitoire.

Dans cette première variante de la deuxième forme de réalisation de l'étape de séparation du deuxième assemblage transitoire, on a G2'≥H2'+I2' et H2'≥G'.

Dans cette première variante de la deuxième forme de réalisation de l'étape de séparation du deuxième assemblage transitoire, l'étape de séparation de l'ensemble fractionné EG2 entre l'ensemble précurseur EH2 et l'ensemble dérivé ED2 a lieu en amont de l'étape de séparation de l'ensemble précurseur EH2 entre le deuxième assemblage fractionné AF22 formant le troisième assemblage final et le deuxième noyau transitoire ou un ou plusieurs ensembles comprenant le deuxième noyau transitoire, de préférence le deuxième noyau transitoire.

Avantageusement, dans cette première variante de la deuxième forme de réalisation de l'étape de séparation du deuxième assemblage transitoire, l'étape de séparation de l'ensemble fractionné EG2 entre l'ensemble précurseur EH2 et l'ensemble dérivé ED2 comprend une étape de fractionnement de l'ensemble fractionné EG2 en l'ensemble précurseur EH2 et l'ensemble dérivé ED2. On a alors G2'=H2'+I2'.

Avantageusement, dans cette première variante de la deuxième forme de réalisation de l'étape de séparation du deuxième assemblage transitoire, l'étape de séparation de l'ensemble précurseur EH2 entre le deuxième assemblage fractionné AF22 formant le troisième assemblage final et le deuxième noyau transitoire ou un ou plusieurs ensembles comprenant le deuxième noyau transitoire, de préférence le deuxième noyau transitoire comprend une étape de fractionnement de l'ensemble précurseur EH2 en le deuxième assemblage fractionné AF22 formant le troisième assemblage final et le deuxième noyau transitoire ou un ou plusieurs ensembles comprenant le deuxième noyau transitoire, de préférence le deuxième noyau transitoire. On a alors H2'=G' dans le cas d'une étape de fractionnement de l'ensemble précurseur EH2 en le deuxième assemblage fractionné AF22 formant le troisième assemblage final et le deuxième noyau transitoire.

Dans cette première variante de la deuxième forme de réalisation de l'étape de séparation du deuxième assemblage transitoire, l'ensemble précurseur EH2 comprend la couche constituée des H2' éléments filaires métalliques enroulés en hélice et le deuxième noyau transitoire, les H2' éléments filaires métalliques étant enroulés en hélice autour du deuxième noyau transitoire. De préférence, dans un mode de réalisation permettant de fabriquer des assemblages finaux constitués d'une couche d'éléments filaires métalliques, l'ensemble précurseur EH2 est constitué de la couche constituée des H2' éléments filaires métalliques et du deuxième noyau transitoire, les H2' éléments filaires métalliques étant enroulés en hélice autour du deuxième noyau transitoire.

Dans cette première variante de la deuxième forme de réalisation de l'étape de séparation du deuxième assemblage transitoire, dans un mode de réalisation permettant de fabriquer des assemblages finaux constitués d'une couche d'éléments filaires métalliques, l'ensemble dérivé ED2 est constitué de la couche constituée du ou des I2' élément(s) filaire(s) métallique(s) enroulés en hélice.

Dans la deuxième variante de la deuxième forme de réalisation de l'étape de séparation du premier assemblage transitoire, l'étape de séparation de l'ensemble fractionné EG2 entre le deuxième assemblage fractionné AF22 et le deuxième noyau transitoire ou un ou plusieurs ensembles comprenant le deuxième noyau transitoire, de préférence le deuxième noyau transitoire comprend :
- une étape de séparation de l'ensemble fractionné EG2 entre :
   - un ensemble précurseur EH2 comprenant au moins une couche constituée de H2'>1 éléments filaires métalliques enroulés en hélice, les H2'>1 éléments filaires métalliques étant issus de la couche constituée des G2'>1 éléments filaires métalliques de l'ensemble fractionné EG2, et
   - le deuxième noyau transitoire ou un ou plusieurs ensembles comprenant le deuxième noyau transitoire,
- une étape de séparation de l'ensemble précurseur EH2 entre :
   - le deuxième assemblage fractionné AF22 formant le troisième assemblage final, les G'>1 éléments filaires métalliques étant issus de la couche constituée des H2'>1 éléments filaires métalliques de l'ensemble précurseur EH2, et
   - un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des H2'>1 éléments filaires métalliques de l'ensemble précurseur EH2.

Dans cette deuxième variante de la deuxième forme de réalisation de l'étape de séparation du deuxième assemblage transitoire, on a G2'≥H2' et H2'≥G'+I2'.

Dans cette deuxième variante de la deuxième forme de réalisation de l'étape de séparation du deuxième assemblage transitoire, l'étape de séparation de l'ensemble fractionné EG2 entre l'ensemble précurseur EH2 et le deuxième noyau transitoire ou un ou plusieurs ensembles comprenant le deuxième noyau transitoire, de préférence le deuxième noyau transitoire a lieu en amont de l'étape de séparation de l'ensemble précurseur EH2 entre le deuxième assemblage fractionné AF22 formant le troisième assemblage final et l'ensemble dérivé ED2.

Avantageusement, dans cette deuxième variante de la deuxième forme de réalisation de l'étape de séparation du deuxième assemblage transitoire, l'étape de séparation de l'ensemble fractionné EG2 entre l'ensemble précurseur EH2 et le deuxième noyau transitoire ou un ou plusieurs ensembles comprenant le deuxième noyau transitoire, de préférence le deuxième noyau transitoire comprend une étape de fractionnement de l'ensemble fractionné EG2 en l'ensemble précurseur EH2 et le deuxième noyau transitoire ou un ou plusieurs ensembles comprenant le deuxième noyau transitoire, de préférence le deuxième noyau transitoire. On a alors G2'=H2' dans le cas d'une étape de fractionnement de l'ensemble fractionné EG2 en l'ensemble précurseur EH2 et le deuxième noyau transitoire.

Avantageusement, dans cette deuxième variante de la deuxième forme de réalisation de l'étape de séparation du deuxième assemblage transitoire, l'étape de séparation de l'ensemble précurseur EH2 entre le deuxième assemblage fractionné AF22 formant le troisième assemblage final et l'ensemble dérivé ED2 comprend une étape de fractionnement de l'ensemble précurseur EH2 en le deuxième assemblage fractionné AF22 formant le troisième assemblage final et l'ensemble dérivé ED2. On a alors H2'=G'+I2'.

Dans cette deuxième variante de la deuxième forme de réalisation de l'étape de séparation du deuxième assemblage transitoire, dans un mode de réalisation permettant de fabriquer des assemblages finaux constitués d'une couche d'éléments filaires métalliques, chaque ensemble précurseur EH2 et ensemble dérivé ED2 est respectivement constitué de la couche constituée du ou des H2', I2' élément(s) filaire(s) métallique(s) enroulés en hélice.

Dans la troisième variante de la deuxième forme de réalisation de l'étape de séparation du premier assemblage transitoire, l'étape de séparation de l'ensemble fractionné EG2 entre le deuxième assemblage fractionné AF22 et le deuxième noyau transitoire ou un ou plusieurs ensembles comprenant le deuxième noyau transitoire, de préférence le deuxième noyau transitoire comprend :
- une étape de séparation de l'ensemble fractionné EG2 entre :
   - un ensemble principal EM2 comprenant au moins une couche constituée de J2'>1 éléments filaires métalliques enroulés en hélice, les J2'≥1 éléments filaires métalliques étant issus de la couche constituée des G2'>1 éléments filaires métalliques de l'ensemble fractionné EG2, l'ensemble principal EM2 formant le deuxième assemblage fractionné AF22 formant le troisième assemblage final, et
   - un ensemble complémentaire ES2 comprenant au moins une couche constituée de K2'≥1 élément(s) filaire(s) métallique(s) enroulé(s) en hélice autour du deuxième noyau transitoire, le ou les K2'≥1 élément(s) filaire(s) métallique(s) étant issu(s) de la couche constituée des G2'>1 éléments filaires métalliques de l'ensemble fractionné EG2.

Dans cette troisième variante de la deuxième forme de réalisation de l'étape de séparation du deuxième assemblage transitoire, l'ensemble principal EM2 formant le deuxième assemblage fractionné AF22 formant le troisième assemblage final, on a J2'=G'=C3'. On a également G2'≥J2'+K2'.

Avantageusement, dans cette troisième variante de la deuxième forme de réalisation de l'étape de séparation du deuxième assemblage transitoire, l'étape de séparation de l'ensemble fractionné EG2 entre l'ensemble principal EM2 et l'ensemble complémentaire ES2 comprend une étape de fractionnement de l'ensemble fractionné EG2 en l'ensemble principal EM2 et l'ensemble complémentaire ES2. On a alors G2'=J2'+K2'.

Dans cette troisième variante de la deuxième forme de réalisation de l'étape de séparation du deuxième assemblage transitoire, dans un mode de réalisation permettant de fabriquer des assemblages finaux constitués d'une couche d'éléments filaires métalliques, l'ensemble principal EM2 formant le deuxième assemblage fractionné AF22 formant le troisième assemblage final est constitué de la couche constituée du ou des J2' élément(s) filaire(s) métallique(s) enroulés en hélice.

Dans cette troisième variante de la deuxième forme de réalisation de l'étape de séparation du deuxième assemblage transitoire, l'ensemble complémentaire ES2 comprend la couche constituée du ou des K2' élément(s) filaire(s) métallique(s) enroulés en hélice et le deuxième noyau transitoire, le ou les K2' élément(s) filaire(s) métallique(s) étant enroulé(s) en hélice autour du deuxième noyau transitoire. De préférence, dans un mode de réalisation permettant de fabriquer des assemblages finaux constitués d'une couche d'éléments filaires métalliques, l'ensemble complémentaire ES2 est constitué de la couche constituée du ou des K2' élément(s) filaire(s) métallique(s) et du deuxième noyau transitoire, le ou les K2' élément(s) filaire(s) métallique(s) étant enroulé(s) en hélice autour du deuxième noyau transitoire.

De préférence, l'étape de séparation de l'ensemble fractionné EG2 entre le deuxième assemblage fractionné AF22 et le deuxième noyau transitoire ou un ou plusieurs ensembles comprenant le deuxième noyau transitoire, de préférence le deuxième noyau transitoire comprend une étape de séparation de l'ensemble complémentaire ES2 entre :
- un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée du ou des K2'≥1 élément(s) filaire(s) métallique(s) de l'ensemble complémentaire ES2, et
- le deuxième noyau transitoire ou un ou plusieurs ensembles comprenant le deuxième noyau transitoire, de préférence le deuxième noyau transitoire. On a alors K2'≥I2'.

Ainsi, l'étape de séparation de l'ensemble fractionné EG2 entre l'ensemble principal EM2 et l'ensemble complémentaire ES2 a lieu en amont de l'étape de séparation de l'ensemble complémentaire ES2 entre l'ensemble dérivé ED2 et le deuxième noyau transitoire ou un ou plusieurs ensembles comprenant le deuxième noyau transitoire, de préférence le deuxième noyau transitoire.

Avantageusement, l'étape de séparation de l'ensemble complémentaire ES2 entre l'ensemble dérivé ED2 et le deuxième noyau transitoire ou un ou plusieurs ensembles comprenant le deuxième noyau transitoire, de préférence le deuxième noyau transitoire comprend une étape de fractionnement de l'ensemble complémentaire ES2 en l'ensemble dérivé ED2 et le deuxième noyau transitoire ou un ou plusieurs ensembles comprenant le deuxième noyau transitoire, de préférence le deuxième noyau transitoire. On a alors K2'=I2' dans le cas d'une étape de fractionnement de l'ensemble complémentaire ES2 en l'ensemble dérivé ED2 et le deuxième noyau transitoire.

Dans des quatrième, cinquième et sixième variantes de la deuxième forme de réalisation de l'étape de séparation du deuxième assemblage transitoire dans laquelle le deuxième noyau transitoire est séparé avec le premier assemblage fractionné AF21 et combinables avec l'une des première à sixième variantes de la deuxième forme de réalisation de l'étape de séparation du premier assemblage transitoire, l'étape de séparation du deuxième assemblage transitoire comprend :
- une étape de séparation du deuxième assemblage transitoire entre :
   - un ensemble fractionné EG2 comprenant au moins une couche constituée de G2'>1 éléments filaires métalliques enroulés en hélice autour du deuxième noyau transitoire, les G2'>1 éléments filaires métalliques étant issus de la couche constituée des B'>1 éléments filaires métalliques du deuxième assemblage transitoire, et
   - le deuxième assemblage fractionné AF22 formant le troisième assemblage final,
- une étape de séparation de l'ensemble fractionné EG2 entre :
   - le premier assemblage fractionné AF21, le ou les F'≥1 élément(s) filaire(s) métallique(s) étant issu(s) de la couche constituée des G2'>1 éléments filaires métalliques de l'ensemble fractionné EG2, et
   - le deuxième noyau transitoire ou un ou plusieurs ensembles comprenant le deuxième noyau transitoire, de préférence le deuxième noyau transitoire.

Dans ces quatrième, cinquième et sixième variantes de la deuxième forme de réalisation de l'étape de séparation du deuxième assemblage transitoire, le deuxième assemblage fractionné AF22 formant le troisième assemblage final, on a G'=C3'. On a également B'≥G2'+G' et G2'≥F'.

Dans ces quatrième, cinquième et sixième variantes de la deuxième forme de réalisation de l'étape de séparation du deuxième assemblage transitoire, l'étape de séparation du deuxième assemblage transitoire entre l'ensemble fractionné EG2 et le deuxième assemblage fractionné AF22 formant le troisième assemblage final a lieu en amont de l'étape de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire.

Avantageusement, l'étape de séparation du deuxième assemblage transitoire entre l'ensemble fractionné EG2 et le deuxième assemblage fractionné AF22 formant le troisième assemblage final comprend une étape de fractionnement du deuxième assemblage transitoire en l'ensemble fractionné EG2 et le deuxième assemblage fractionné AF22 formant le troisième assemblage final. On a ainsi, B'=G2'+G'.

Dans ces quatrième, cinquième et sixième variantes de la deuxième forme de réalisation de l'étape de séparation du deuxième assemblage transitoire, l'ensemble fractionné EG2 comprend la couche constituée des G2' éléments filaires métalliques enroulés en hélice et le deuxième noyau transitoire, les G2' éléments filaires métalliques étant enroulés en hélice autour du deuxième noyau transitoire. De préférence, dans un mode de réalisation permettant de fabriquer des assemblages finaux constitués d'une couche d'éléments filaires métalliques, l'ensemble fractionné EG2 est constitué de la couche constituée des G2' éléments filaires métalliques et du deuxième noyau transitoire, les G2' éléments filaires métalliques étant enroulés en hélice autour du deuxième noyau transitoire.

Dans la quatrième variante de la deuxième forme de réalisation de l'étape de séparation du deuxième assemblage transitoire, l'étape de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire comprend :
- une étape de séparation de l'ensemble fractionné EG2 entre :
   - un ensemble précurseur EH2 comprenant au moins une couche constituée de H2'≥1 élément(s) filaire(s) métallique(s) enroulé(s) en hélice autour du deuxième noyau transitoire, le ou les H2'≥1 élément(s) filaire(s) métallique(s) étant issu(s) de la couche constituée des G2'>1 éléments filaires métalliques de l'ensemble fractionné EG2, et
   - un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des G2'>1 éléments filaires métalliques de l'ensemble fractionné EG2,
- une étape de séparation de l'ensemble précurseur EH2 entre :
   - le premier assemblage fractionné AF21, le ou les F'≥1 élément(s) filaire(s) métallique(s) étant issu(s) de la couche constituée du ou des H2'≥1 élément(s) filaire(s) métallique(s) de l'ensemble précurseur EH2, et
   - le deuxième noyau transitoire ou un ou plusieurs ensembles comprenant le deuxième noyau transitoire, de préférence le deuxième noyau transitoire.

Dans cette quatrième variante de la deuxième forme de réalisation de l'étape de séparation du deuxième assemblage transitoire, on a G2'≥H2'+I2' et H2'≥F'.

Dans cette quatrième variante de la deuxième forme de réalisation de l'étape de séparation du deuxième assemblage transitoire, l'étape de séparation de l'ensemble fractionné EG2 entre l'ensemble précurseur EH2 et l'ensemble dérivé ED2 a lieu en amont de l'étape de séparation de l'ensemble précurseur EH2 entre le premier assemblage fractionné AF21 et le deuxième noyau transitoire ou un ou plusieurs ensembles comprenant le deuxième noyau transitoire, de préférence le deuxième noyau transitoire.

Avantageusement, dans cette quatrième variante de la deuxième forme de réalisation de l'étape de séparation du deuxième assemblage transitoire, l'étape de séparation de l'ensemble fractionné EG2 entre l'ensemble précurseur EH2 et l'ensemble dérivé ED2 comprend une étape de fractionnement de l'ensemble fractionné EG2 en l'ensemble précurseur EH2 et l'ensemble dérivé ED2. On a alors G2'=H2'+I2'.

Avantageusement, dans cette quatrième variante de la deuxième forme de réalisation de l'étape de séparation du deuxième assemblage transitoire, l'étape de séparation de l'ensemble précurseur EH2 entre le deuxième assemblage fractionné AF21 et le deuxième noyau transitoire ou un ou plusieurs ensembles comprenant le deuxième noyau transitoire, de préférence le deuxième noyau transitoire comprend une étape de fractionnement de l'ensemble précurseur EH2 en le premier assemblage fractionné AF21 et le deuxième noyau transitoire ou un ou plusieurs ensembles comprenant le deuxième noyau transitoire, de préférence le deuxième noyau transitoire. On a alors H2'=F' dans le cas d'une étape de fractionnement de l'ensemble précurseur EH2 en le premier assemblage fractionné AF21 et le deuxième noyau transitoire.

Dans cette quatrième variante de la deuxième forme de réalisation de l'étape de séparation du deuxième assemblage transitoire, l'ensemble précurseur EH2 comprend la couche constituée du ou des H2' élément(s) filaire(s) métallique(s) enroulés en hélice et le deuxième noyau transitoire, le ou les H2' élément(s) filaire(s) métallique(s) étant enroulé(s) en hélice autour du deuxième noyau transitoire. De préférence, dans un mode de réalisation permettant de fabriquer des assemblages finaux constitués d'une couche d'éléments filaires métalliques, l'ensemble précurseur EH2 est constitué de la couche constituée du ou des H2' élément(s) filaire(s) métallique(s) et du deuxième noyau transitoire, le ou les H2' élément(s) filaire(s) métallique(s) étant enroulé(s) en hélice autour du deuxième noyau transitoire.

Dans cette quatrième variante de la deuxième forme de réalisation de l'étape de séparation du deuxième assemblage transitoire, dans un mode de réalisation permettant de fabriquer des assemblages finaux constitués d'une couche d'éléments filaires métalliques, l'ensemble dérivé ED2 est constitué de la couche constituée du ou des I2' élément(s) filaire(s) métallique(s) enroulés en hélice.

Dans une cinquième variante de la deuxième forme de réalisation de l'étape de séparation du deuxième assemblage transitoire, l'étape de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire comprend :
- une étape de séparation de l'ensemble fractionné EG2 entre :
   - un ensemble précurseur EH2 comprenant au moins une couche constituée de H2'>1 éléments filaires métalliques enroulés en hélice, les H2'>1 éléments filaires métalliques étant issus de la couche constituée des G2'>1 éléments filaires métalliques de l'ensemble fractionné EG2, et
   - le deuxième noyau transitoire ou un ou plusieurs ensembles comprenant le deuxième noyau transitoire,
- une étape de séparation de l'ensemble précurseur EH2 entre :
   - le premier assemblage fractionné AF21, le ou les F'≥1 élément(s) filaire(s) métallique(s) étant issu(s) de la couche constituée des H2'>1 éléments filaires métalliques de l'ensemble précurseur EH2, et
   - un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des H2'>1 éléments filaires métalliques de l'ensemble précurseur EH2.

Dans cette cinquième variante de la deuxième forme de réalisation de l'étape de séparation du deuxième assemblage transitoire, on a G2'≥H2' et H2'≥F'+I2'.

Dans cette cinquième variante de la deuxième forme de réalisation de l'étape de séparation du deuxième assemblage transitoire, l'étape de séparation de l'ensemble fractionné EG2 entre l'ensemble précurseur EH2 et le deuxième noyau transitoire ou un ou plusieurs ensembles comprenant le deuxième noyau transitoire, de préférence le deuxième noyau transitoire a lieu en amont de l'étape de séparation de l'ensemble précurseur EH2 entre le premier assemblage fractionné AF21 et l'ensemble dérivé ED2.

Avantageusement, dans cette cinquième variante de la deuxième forme de réalisation de l'étape de séparation du deuxième assemblage transitoire, l'étape de séparation de l'ensemble fractionné EG2 entre l'ensemble précurseur EH2 et le deuxième noyau transitoire ou un ou plusieurs ensembles comprenant le deuxième noyau transitoire, de préférence le deuxième noyau transitoire comprend une étape de fractionnement de l'ensemble fractionné EG2 en l'ensemble précurseur EH2 et le deuxième noyau transitoire ou un ou plusieurs ensembles comprenant le deuxième noyau transitoire, de préférence le deuxième noyau transitoire. On a alors G2'=H2' dans le cas d'une étape de fractionnement de l'ensemble fractionné EG2 en l'ensemble précurseur EH2 et le deuxième noyau transitoire.

Avantageusement, dans cette cinquième variante de la deuxième forme de réalisation de l'étape de séparation du deuxième assemblage transitoire, l'étape de séparation de l'ensemble précurseur EH2 entre le deuxième assemblage fractionné AF21 et l'ensemble dérivé ED2 comprend une étape de fractionnement de l'ensemble précurseur EH2 en le premier assemblage fractionné AF21 et l'ensemble dérivé ED2. On a alors H2'=F'+I2'.

Dans cette cinquième variante de la deuxième forme de réalisation de l'étape de séparation du deuxième assemblage transitoire, dans un mode de réalisation permettant de fabriquer des assemblages finaux constitués d'une couche d'éléments filaires métalliques, chaque ensemble précurseur EH2 et ensemble dérivé ED2 est respectivement constitué de la couche constituée du ou des H2', I2' élément(s) filaire(s) métallique(s) enroulés en hélice.

Dans la sixième variante de la deuxième forme de réalisation de l'étape de séparation du deuxième assemblage transitoire, l'étape de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire comprend :
- une étape de séparation de l'ensemble fractionné EG2 entre :
   - un ensemble principal EM2 comprenant au moins une couche constituée de J2'≥1 élément(s) filaire(s) métallique(s) enroulé(s) en hélice, le ou les J2'≥1 élément(s) filaire(s) métallique(s) étant issu(s) de la couche constituée des G2'>1 éléments filaires métalliques de l'ensemble fractionné EG2, l'ensemble principal EM2 formant le premier assemblage fractionné AF21, et
   - un ensemble complémentaire ES2 comprenant au moins une couche constituée de K2'≥1 élément(s) filaire(s) métallique(s) enroulé(s) en hélice autour du deuxième noyau transitoire, le ou les K2'≥1 élément(s) filaire(s) métallique(s) étant issu(s) de la couche constituée des G2'>1 éléments filaires métalliques de l'ensemble fractionné EG2.

Dans cette sixième variante de la deuxième forme de réalisation de l'étape de séparation du deuxième assemblage transitoire, l'ensemble principal EM2 formant le premier assemblage fractionné AF21, on a J2'=F'. On a également G2'≥J2'+K2'.

Avantageusement, dans cette sixième variante de la deuxième forme de réalisation de l'étape de séparation du deuxième assemblage transitoire, l'étape de séparation de l'ensemble fractionné EG2 entre l'ensemble principal EM2 et l'ensemble complémentaire ES2 comprend une étape de fractionnement de l'ensemble fractionné EG2 en l'ensemble principal EM2 et l'ensemble complémentaire ES2. On a alors G2'=J2'+K2'.

Dans cette sixième variante de la deuxième forme de réalisation de l'étape de séparation du deuxième assemblage transitoire, dans un mode de réalisation permettant de fabriquer des assemblages finaux constitués d'une couche d'éléments filaires métalliques, l'ensemble principal EM2 formant le premier assemblage fractionné AF21 est constitué de la couche constituée du ou des J1' élément(s) filaire(s) métallique(s) enroulés en hélice.

Dans cette sixième variante de la deuxième forme de réalisation de l'étape de séparation du deuxième assemblage transitoire, l'ensemble complémentaire ES2 comprend la couche constituée du ou des K2' élément(s) filaire(s) métallique(s) enroulés en hélice et le deuxième noyau transitoire, le ou les K2' élément(s) filaire(s) métallique(s) étant enroulé(s) en hélice autour du deuxième noyau transitoire. De préférence, dans un mode de réalisation permettant de fabriquer des assemblages finaux constitués d'une couche d'éléments filaires métalliques, l'ensemble complémentaire ES2 est constitué de la couche constituée du ou des K2' élément(s) filaire(s) métallique(s) et du deuxième noyau transitoire, le ou les K2' élément(s) filaire(s) métallique(s) étant enroulé(s) en hélice autour du deuxième noyau transitoire.

De préférence, l'étape de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire comprend une étape de séparation de l'ensemble complémentaire ES2 entre :
- un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée du ou des K2'≥1 élément(s) filaire(s) métallique(s) de l'ensemble complémentaire ES2, et
- le deuxième noyau transitoire ou un ou plusieurs ensembles comprenant le deuxième noyau transitoire, de préférence le deuxième noyau transitoire. On a alors K2'≥I2'.

Ainsi, l'étape de séparation de l'ensemble fractionné EG2 entre l'ensemble principal EM2 et l'ensemble complémentaire ES2 a lieu en amont de l'étape de séparation de l'ensemble complémentaire ES2 entre l'ensemble dérivé ED2 et le deuxième noyau transitoire ou un ou plusieurs ensembles comprenant le deuxième noyau transitoire, de préférence le deuxième noyau transitoire.

Avantageusement, l'étape de séparation de l'ensemble complémentaire ES2 entre l'ensemble dérivé ED2 et le deuxième noyau transitoire ou un ou plusieurs ensembles comprenant le deuxième noyau transitoire, de préférence le deuxième noyau transitoire comprend une étape de fractionnement de l'ensemble complémentaire ES2 en l'ensemble dérivé ED2 et le deuxième noyau transitoire ou un ou plusieurs ensembles comprenant le deuxième noyau transitoire, de préférence le deuxième noyau transitoire. On a alors K2'=I2' dans le cas d'une étape de fractionnement de l'ensemble complémentaire ES2 en l'ensemble dérivé ED2 et le deuxième noyau transitoire.

Dans une septième variantes de la deuxième forme de réalisation de l'étape de séparation du deuxième assemblage transitoire dans laquelle le premier assemblage fractionné AF21, le deuxième assemblage fractionné AF22 et le deuxième noyau transitoire ou un ou plusieurs ensembles comprenant le deuxième noyau transitoire sont séparés simultanément, l'étape de séparation du deuxième assemblage transitoire comprend une étape de fractionnement du deuxième assemblage transitoire entre le premier assemblage fractionné AF21, le deuxième assemblage fractionné AF22, le deuxième noyau transitoire ou un ou plusieurs ensembles comprenant le deuxième noyau transitoire, de préférence le deuxième noyau transitoire et un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des B'>1 éléments filaires métalliques du deuxième assemblage transitoire.

Dans cette septième variante de la deuxième forme de réalisation de l'étape de séparation du deuxième assemblage transitoire, dans un mode de réalisation permettant de fabriquer des assemblages finaux constitués d'une couche d'éléments filaires métalliques, l'ensemble dérivé ED2 est constitué de la couche constituée du ou des I2' élément(s) filaire(s) métallique(s) enroulés en hélice.

Dans un mode de réalisation particulièrement préféré, le premier assemblage final est constitué de la couche constituée de C1'>1 éléments filaires métalliques, le deuxième assemblage final est constitué de la couche constituée de C2'>1 éléments filaires métalliques, le troisième assemblage final est constitué de la couche constituée de C3'>1 éléments filaires métalliques,
le procédé comprenant :
- l'étape de fourniture du premier assemblage transitoire constitué de la couche constituée de A'>1 éléments filaires métalliques enroulés en hélice autour du premier noyau transitoire,
- l'étape de fourniture du deuxième assemblage transitoire constitué de la couche constituée de B'>1 éléments filaires métalliques enroulés en hélice autour du deuxième noyau transitoire,
- l'étape de séparation du premier assemblage transitoire entre au moins:
   - le premier assemblage fractionné AF11 constitué de la couche constituée de D'≥1 élément(s) filaire(s) métallique(s) enroulé(s) en hélice, le ou les D' élément(s) filaire(s) métallique(s) étant issu(s) de la couche constituée de A'>1 éléments filaires métalliques du premier assemblage transitoire,
   - le deuxième assemblage fractionné AF12 constitué de la couche constituée de E'>1 éléments filaires métalliques enroulés en hélice, les E' éléments filaires métalliques étant issus de la couche constituée de A'>1 éléments filaires métalliques du premier assemblage transitoire, le deuxième assemblage fractionné AF12 formant le deuxième assemblage final
   - le premier noyau transitoire ou un ou plusieurs ensembles comprenant le premier noyau transitoire,
- l'étape de séparation du deuxième assemblage transitoire entre au moins:
   - le premier assemblage fractionné AF21 constitué de la couche constituée de F'≥1 élément(s) filaire(s) métallique(s) enroulé(s) en hélice, le ou les F' élément(s) filaire(s) métallique(s) étant issu(s) de la couche constituée de B'>1 éléments filaires métalliques du deuxième assemblage transitoire,
   - le deuxième assemblage fractionné AF22 constitué de la couche constituée de G'>1 éléments filaires métalliques enroulés en hélice, les G' éléments filaires métalliques étant issus de la couche constituée de B'>1 éléments filaires métalliques du deuxième assemblage transitoire, le deuxième assemblage fractionné AF22 formant le troisième assemblage final,
   - le deuxième noyau transitoire ou un ou plusieurs ensembles comprenant le deuxième noyau transitoire.

Dans ce mode de réalisation particulièrement préféré, chaque premier, deuxième et troisième assemblage final est constitué d'une couche de C1', C2', C3' éléments filaires métalliques enroulés en hélice et est donc dépourvu d'âme centrale autour de laquelle seraient enroulés les C1', C2', C3' éléments filaires métalliques.

Avantageusement, chaque valeur C1', C2', C3' va de 2 à 10.

Avantageusement, afin de faciliter la sortie du premier noyau transitoire dans les modes de réalisation dans lesquels le premier noyau transitoire est séparé avec le premier assemblage fractionné AF11 :
- D'=1 ou 2 dans les cas où A'=4 ou A'=5 et
- D' ≤ 0,75 x A' et de préférence D' ≤ 0,70 x A' dans les cas où A'≥6.

Avantageusement, de façon analogue, afin de faciliter la sortie du premier noyau transitoire dans les modes de réalisation dans lesquels le premier noyau transitoire est séparé avec le deuxième assemblage fractionné AF12:
- E'=1 ou 2 dans les cas où A'=4 ou A'=5 et
- E' ≤ 0,75 x A' et de préférence E' ≤ 0,70 x A' dans les cas où A'≥6.

Avantageusement, afin de faciliter la sortie du deuxième noyau transitoire dans les modes de réalisation dans lesquels le deuxième noyau transitoire est séparé avec le premier assemblage fractionné AF21 :
- F'=1 ou 2 dans les cas où B'=4 ou B'=5 et
- F' ≤ 0,75 x B' et de préférence F' ≤ 0,70 x B' dans les cas où B'≥6.

Avantageusement, de façon analogue, afin de faciliter la sortie du deuxième noyau transitoire dans les modes de réalisation dans lesquels le deuxième noyau transitoire est séparé avec le deuxième assemblage fractionné AF22:
- G'=1 ou 2 dans les cas où B'=4 ou B'=5 et
- G' ≤ 0,75 x B' et de préférence G' ≤ 0,70 x B' dans les cas où B'≥6.

De façon très préférentielle, l'étape de fourniture de chaque premier et deuxième assemblage transitoire comprend une étape d'assemblage par retordage respectivement des A', B' éléments filaires métalliques enroulés en hélice autour de chaque premier et deuxième noyau transitoire.

Avantageusement, l'étape de fourniture de chaque premier et deuxième assemblage transitoire comprend une étape d'équilibrage de chaque premier et deuxième assemblage transitoire. Ainsi, l'étape d'équilibrage étant réalisée sur chaque premier et deuxième assemblage transitoire comprenant les A', B' éléments filaires métalliques et chaque premier et deuxième noyau transitoire, l'étape d'équilibrage est implicitement réalisée en amont de chaque étape de séparation de chaque premier et deuxième assemblage transitoire. On évite d'avoir à gérer la torsion résiduelle imposée lors de l'étape d'assemblage de chaque premier et deuxième assemblage transitoire lors du trajet des différents assemblages en aval de chaque étape d'assemblage, notamment dans les moyens de guidage, par exemple les poulies.

Avantageusement, le procédé comprend une étape d'équilibrage de chaque premier, deuxième et troisième assemblage final en aval de l'étape de réassemblage.

Avantageusement, le procédé comprend une étape d'entretien de la rotation de chaque premier, deuxième et troisième assemblage final autour de sa direction de défilement. On réalise cette étape d'entretien de la rotation en aval de chaque étape de séparation de chaque premier et deuxième assemblage transitoire et en amont de l'étape d'équilibrage de chaque premier, deuxième et troisième assemblage final.

De préférence, le procédé est dépourvu d'étapes de préformation individuelle de chacun des éléments filaires métalliques. Dans les procédés de l'état de la technique utilisant une étape de préformation individuelle de chacun des éléments filaires métalliques, ces derniers se voient imposés une forme par des outils de préformation, par exemple des galets, ces outils créant des défauts à la surface des éléments filaires métalliques. Ces défauts réduisent notablement l'endurance des éléments filaires métalliques et donc de l'assemblage final.

De façon très préférée, chaque premier et deuxième noyau transitoire est un élément filaire métallique. Dans un mode de réalisation préféré, chaque premier et deuxième noyau transitoire est un monofilament métallique. Ainsi, on contrôle très précisément le diamètre de l'espace entre les éléments filaire métalliques et donc les caractéristiques géométriques de l'assemblage final au contraire d'un noyau transitoire réalisé dans un matériau textile, par exemple polymérique, dont la compressibilité peut engendrer des variations des caractéristiques géométriques de l'assemblage final.

Dans d'autres modes de réalisation également avantageux, chaque premier et deuxième noyau transitoire est un élément filaire textile. Un tel élément filaire textile comprend au moins un brin textile multifilamentaires ou, en variante, est constitué d'un monofilament textile. Les filaments textiles pouvant être utilisés sont choisis parmi les polyesters, les polycétones, les polyamides aliphatiques ou aromatiques et les mélanges de filaments textiles de ces matériaux. Ainsi, on réduit les risques de casse du noyau transitoire engendrés par les frottements des éléments filaires métalliques sur le noyau transitoire ainsi que par les torsions imposées au noyau transitoire.

L'invention permet de fabriquer un pneumatique comprenant un des assemblages finaux obtenu par le procédé tel que défini ci-dessus.

Un tel pneumatique est notamment destiné à équiper des véhicules à moteur de type tourisme, SUV *("Sport Utility Vehicles*"), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

Avantageusement, le pneumatique comprend un sommet comprenant une bande de roulement et une armature de sommet, le pneumatique comprenant deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement. Dans un mode de réalisation, l'armature de sommet comprend un assemblage final tel que défini ci-dessus.

L'invention a également pour objet une installation de fabrication d'au moins des premier, deuxième et troisième assemblages finaux, le premier assemblage final comprenant au moins une couche constituée de C1'>1 éléments filaires métalliques enroulés en hélice, le deuxième assemblage final comprenant au moins une couche constituée de C2'>1 éléments filaires métalliques enroulés en hélice, le troisième assemblage final comprenant au moins une couche constituée de C3'>1 éléments filaires métalliques enroulés en hélice, l'installation comprenant :
- des moyens de fourniture d'un premier assemblage transitoire comprenant au moins une couche constituée de A'>1 éléments filaires métalliques enroulés en hélice autour d'un premier noyau transitoire,
- des moyens de fourniture d'un deuxième assemblage transitoire comprenant au moins une couche constituée de B'>1 éléments filaires métalliques enroulés en hélice autour d'un deuxième noyau transitoire,
- des moyens de séparation du premier assemblage transitoire entre au moins:
   - un premier assemblage fractionné AF11 comprenant au moins une couche constituée de D'≥1 élément(s) filaire(s) métallique(s) enroulé(s) en hélice, le ou les D' élément(s) filaire(s) métallique(s) étant issu(s) de la couche constituée de A'>1 éléments filaires métalliques du premier assemblage transitoire,
   - un deuxième assemblage fractionné AF12 comprenant au moins une couche constituée de E'>1 éléments filaires métalliques enroulés en hélice, les E' éléments filaires métalliques étant issus de la couche constituée de A'>1 éléments filaires métalliques du premier assemblage transitoire, le deuxième assemblage fractionné AF12 formant le deuxième assemblage final
   - le premier noyau transitoire ou un ou plusieurs ensembles comprenant le premier noyau transitoire,
- des moyens de séparation du deuxième assemblage transitoire entre au moins:
   - un premier assemblage fractionné AF21 comprenant au moins une couche constituée de F'≥1 élément(s) filaire(s) métallique(s) enroulé(s) en hélice, le ou les F' élément(s) filaire(s) métallique(s) étant issu(s) de la couche constituée de B'>1 éléments filaires métalliques du deuxième assemblage transitoire,
   - un deuxième assemblage fractionné AF22 comprenant au moins une couche constituée de G'>1 éléments filaires métalliques enroulés en hélice, les G' éléments filaires métalliques étant issus de la couche constituée de B'>1 éléments filaires métalliques du deuxième assemblage transitoire, le deuxième assemblage fractionné AF22 formant le troisième assemblage final,
   - le deuxième noyau transitoire ou un ou plusieurs ensembles comprenant le deuxième noyau transitoire,

l'installation comprenant des moyens de réassemblage d'au moins le premier assemblage fractionné AF11 avec le premier assemblage fractionné AF21 pour former le premier assemblage final,
les moyens de fourniture et de séparation du premier assemblage transitoire, les moyens de fourniture et de séparation du deuxième assemblage transitoire et les moyens de réassemblage du premier assemblage fractionné AF11 avec le premier assemblage fractionné AF21 étant agencés de façon à permettre la mise en oeuvre d'un procédé tel que défini ci-dessus.

Afin de permettre la mise en oeuvre du procédé décrit ci-dessus et d'assurer facilement l'obtention de mêmes caractéristiques géométriques pour chaque C1', C2', C3' élément filaire métallique, l'installation comprend avantageusement des moyens de synchronisation des moyens de fourniture du premier assemblage transitoire avec les moyens de fourniture du deuxième assemblage transitoire, notamment des moyens de synchronisation entre les moyens d'assemblage de chaque premier et deuxième assemblage transitoire ainsi que des moyens de synchronisation entre les moyens de séparation du premier assemblage transitoire, les moyens de séparation du deuxième assemblage transitoire et les moyens de réassemblage des premiers assemblages fractionnés AF11 et AF21.

Dans la présente invention, des moyens de fractionnement d'un objet initial en plusieurs objets finaux signifient que, en mettant en oeuvre ces moyens de fractionnement, l'objet initial est divisé en les objets finaux et seulement ces objets finaux de sorte que l'objet initial se retrouve intégralement dans les objets finaux. De plus, en utilisant des moyens de fractionnement, l'objet initial est divisé en les objets finaux de façon simultanée, c'est-à-dire que les objets finaux sont séparés en un même point de fractionnement. En particulier, dans le cas d'un objet initial fractionné en au moins trois objets finaux, les trois objets finaux sont, en utilisant des moyens de fractionnement, séparés simultanément les uns des autres et en un même point.

Dans la présente invention, des moyens de séparation d'un objet initial entre plusieurs objets finaux signifient que, pour obtenir ces objets finaux, au moins des moyens de fractionnement sont nécessaires. Ainsi, pour obtenir les objets finaux, les moyens de séparation comprennent des moyens de fractionnement de l'objet initial en les objets finaux ou bien comprennent des moyens de fractionnement de l'objet initial en des objets intermédiaires et des moyens de fractionnement des objets intermédiaires en les objets finaux. En utilisant les moyens de séparation, l'objet initial ne se retrouve pas nécessairement intégralement dans les objets finaux, des ensembles ou assemblages ayant pu être extraits du procédé lors de leur passage dans des moyens de fractionnement et non utilisés lors de leur passage dans des moyens de fractionnement ultérieurs. Enfin, des moyens de séparation peuvent comprendre des moyens de réassemblage entre plusieurs objets intermédiaires issus de moyens de fractionnement des moyens de séparation pour obtenir d'autres objets intermédiaires ou bien les objets finaux.

En outre, comme décrit ci-dessus, suivant les différents modes de réalisation, les moyens de séparation et les moyens de réassemblage sont agencés de sorte que A'+B'≥D'+E'+F'+G', notamment de sorte que A'≥D'+E' et B'≥F'+G'.

Dans une première forme de réalisation permettant un réassemblage total des A' et B' éléments filaires métalliques de chaque couche de chaque assemblage transitoire, les moyens de séparation du premier assemblage transitoire, les moyens de séparation du deuxième assemblage transitoire et les moyens de réassemblage du premier assemblage fractionné AF11 avec le premier assemblage fractionné AF21 sont agencés de sorte que A'=D'+E' et B'=F'+G'.

Dans une première variante de la première forme de réalisation des moyens de séparation du premier assemblage transitoire dans laquelle le premier noyau transitoire est séparé avec le deuxième assemblage fractionné AF12, les moyens de séparation du premier assemblage transitoire comprennent:
- des moyens de séparation du premier assemblage transitoire entre:
   - le premier assemblage fractionné AF11, et
   - un ensemble fractionné EG1 comprenant au moins une couche constituée de G1'>1 éléments filaires métalliques enroulés en hélice autour du premier noyau transitoire, les G1'>1 éléments filaires métalliques étant issus de la couche constituée des A'>1 éléments filaires métalliques du premier assemblage transitoire, et
- des moyens de séparation de l'ensemble fractionné EG1 entre :
   - le deuxième assemblage fractionné AF12 formant le deuxième assemblage final, les E'>1 éléments filaires métalliques étant issus de la couche constituée des G1'>1 éléments filaires métalliques de l'ensemble fractionné EG1, et
   - le premier noyau transitoire.

Dans cette première variante de la première forme de réalisation des moyens de séparation du premier assemblage transitoire, les moyens de séparation du premier assemblage transitoire entre le premier assemblage fractionné AF11 et l'ensemble fractionné EG1 sont agencés en amont des moyens de séparation de l'ensemble fractionné EG1 entre le deuxième assemblage fractionné AF12 formant le deuxième assemblage final et le premier noyau transitoire.

Avantageusement, dans cette première variante de la première forme de réalisation des moyens de séparation du premier assemblage transitoire, les moyens de séparation du premier assemblage transitoire entre le premier assemblage fractionné AF11 et l'ensemble fractionné EG1 comprennent des moyens de fractionnement du premier assemblage transitoire en le premier assemblage fractionné AF11 et l'ensemble fractionné EG1.

Avantageusement, dans cette première variante de la première forme de réalisation des moyens de séparation du premier assemblage transitoire, les moyens de séparation de l'ensemble fractionné EG1 entre le deuxième assemblage fractionné AF12 formant le deuxième assemblage final et le premier noyau transitoire comprennent des moyens de fractionnement de l'ensemble fractionné EG1 en le deuxième assemblage fractionné AF12 formant le deuxième assemblage final et le premier noyau transitoire.

Dans une deuxième variante de la première forme de réalisation des moyens de séparation du premier assemblage transitoire dans laquelle le premier noyau transitoire est séparé avec le premier assemblage fractionné AF11, les moyens de séparation du premier assemblage transitoire comprennent:
- des moyens de séparation du premier assemblage transitoire entre:
   - le deuxième assemblage fractionné AF12 formant le deuxième assemblage final, et
   - un ensemble fractionné EG1 comprenant au moins une couche constituée de G1'≥1 élément(s) filaire(s) métallique(s) enroulé(s) en hélice autour du premier noyau transitoire, le ou les G1'≥1 élément(s) filaire(s) métallique(s) étant issu(s) de la couche constituée des A'>1 éléments filaires métalliques du premier assemblage transitoire, et
- des moyens de séparation de l'ensemble fractionné EG1 entre :
   - le premier assemblage fractionné AF11, le ou les D'≥1 élément(s) filaire(s) métallique(s) étant issu(s) de la couche constituée du ou des G1'≥1 élément(s) filaire(s) métallique(s) de l'ensemble fractionné EG1, et
   - le premier noyau transitoire.

Dans cette deuxième variante de la première forme de réalisation des moyens de séparation du premier assemblage transitoire, les moyens de séparation du premier assemblage transitoire entre le deuxième assemblage fractionné AF12 formant le deuxième assemblage final et l'ensemble fractionné EG1 sont agencés en amont des moyens de séparation de l'ensemble fractionné EG1 entre le premier assemblage fractionné AF11 et le premier noyau transitoire.

Avantageusement, dans la deuxième variante de la première forme de réalisation des moyens de séparation du premier assemblage transitoire, les moyens de séparation du premier assemblage transitoire entre le deuxième assemblage fractionné AF12 formant le deuxième assemblage final et l'ensemble fractionné EG1 comprennent des moyens de fractionnement du premier assemblage transitoire en le deuxième assemblage fractionné AF12 formant le deuxième assemblage final et l'ensemble fractionné EG1.

Avantageusement, dans cette deuxième variante de la première forme de réalisation des moyens de séparation du premier assemblage transitoire, les moyens de séparation de l'ensemble fractionné EG1 entre le premier assemblage fractionné AF11 et le premier noyau transitoire comprennent des moyens de fractionnement de l'ensemble fractionné EG1 en le premier assemblage fractionné AF11 et le premier noyau transitoire.

Dans une troisième variante de la première forme de réalisation des moyens de séparation du premier assemblage transitoire dans laquelle le premier assemblage fractionné AF11, le deuxième assemblage fractionné AF12 et le premier noyau transitoire ou un ou plusieurs ensembles comprenant le premier noyau transitoire sont séparés simultanément, les moyens de séparation du premier assemblage transitoire comprennent des moyens de fractionnement du premier assemblage transitoire entre le premier assemblage fractionné AF11, le deuxième assemblage fractionné AF12 et le premier noyau transitoire ou un ou plusieurs ensembles comprenant le premier noyau transitoire, de préférence le premier noyau transitoire.

Dans une première variante de la première forme de réalisation des moyens de séparation du deuxième assemblage transitoire dans laquelle le deuxième noyau transitoire est séparé avec le deuxième assemblage fractionné AF22 et combinable avec l'une des première et deuxième variantes de la première forme de réalisation des moyens de séparation du premier assemblage transitoire , les moyens de séparation du deuxième assemblage transitoire comprennent:
- des moyens de séparation du deuxième assemblage transitoire entre:
   - le premier assemblage fractionné AF21, et
   - un ensemble fractionné EG2 comprenant au moins une couche constituée de G2'>1 éléments filaires métalliques enroulés en hélice autour du deuxième noyau transitoire, les G2'>1 éléments filaires métalliques étant issus de la couche constituée des B'>1 éléments filaires métalliques du deuxième assemblage transitoire, et
- des moyens de séparation de l'ensemble fractionné EG2 entre :
   - le deuxième assemblage fractionné AF22 formant le troisième assemblage final, les G'>1 éléments filaires métalliques étant issus de la couche constituée des G2'>1 éléments filaires métalliques de l'ensemble fractionné EG2, et
   - le deuxième noyau transitoire.

Dans cette première variante de la première forme de réalisation des moyens de séparation du deuxième assemblage transitoire, les moyens de séparation du deuxième assemblage transitoire entre le premier assemblage fractionné AF21 et l'ensemble fractionné EG2 sont agencés en amont des moyens de séparation de l'ensemble fractionné EG2 entre le deuxième assemblage fractionné AF22 formant le troisième assemblage final et le deuxième noyau transitoire.

Avantageusement, dans cette première variante de la première forme de réalisation des moyens de séparation du deuxième assemblage transitoire, les moyens de séparation du deuxième assemblage transitoire entre le premier assemblage fractionné AF21 et l'ensemble fractionné EG2 comprennent des moyens de fractionnement du deuxième assemblage transitoire en le premier assemblage fractionné AF21 et l'ensemble fractionné EG2.

Avantageusement, dans cette première variante de la première forme de réalisation des moyens de séparation du deuxième assemblage transitoire, les moyens de séparation de l'ensemble fractionné EG2 entre le deuxième assemblage fractionné AF22 formant le troisième assemblage final et le deuxième noyau transitoire comprennent des moyens de fractionnement de l'ensemble fractionné EG1 en le deuxième assemblage fractionné AF22 formant le troisième assemblage final et le deuxième noyau transitoire.

Dans une deuxième variante de la première forme de réalisation des moyens de séparation du premier assemblage transitoire dans laquelle le deuxième noyau transitoire est séparé avec le premier assemblage fractionné AF21 et combinable avec l'une des première et deuxième variantes de la première forme de réalisation des moyens de séparation du premier assemblage transitoire , les moyens de séparation du deuxième assemblage transitoire comprennent:
- des moyens de séparation du deuxième assemblage transitoire entre:
   - le deuxième assemblage fractionné AF22 formant le troisième assemblage final, et
   - un ensemble fractionné EG2 comprenant au moins une couche constituée de G2'≥1 élément(s) filaire(s) métallique(s) enroulé(s) en hélice autour du deuxième noyau transitoire, le ou les G2'≥1 élément(s) filaire(s) métallique(s) étant issu(s) de la couche constituée des B'>1 éléments filaires métalliques du deuxième assemblage transitoire, et
- des moyens de séparation de l'ensemble fractionné EG2 entre :
   - le premier assemblage fractionné AF21, le ou les F'≥1 élément(s) filaire(s) métallique(s) étant issu(s) de la couche constituée du ou des G2'≥1 élément(s) filaire(s) métallique(s) de l'ensemble fractionné EG2, et
   - le deuxième noyau transitoire.

Dans cette deuxième variante de la première forme de réalisation des moyens de séparation du deuxième assemblage transitoire, les moyens de séparation du deuxième assemblage transitoire entre le deuxième assemblage fractionné AF22 formant le troisième assemblage final et l'ensemble fractionné EG2 sont agencés en amont des moyens de séparation de l'ensemble fractionné EG2 entre le premier assemblage fractionné AF21 et le deuxième noyau transitoire.

Avantageusement, dans la deuxième variante de la première forme de réalisation des moyens de séparation du deuxième assemblage transitoire, les moyens de séparation du deuxième assemblage transitoire entre le deuxième assemblage fractionné AF22 formant le troisième assemblage final et l'ensemble fractionné EG2 comprennent des moyens de fractionnement du deuxième assemblage transitoire en le deuxième assemblage fractionné AF22 formant le troisième assemblage final et l'ensemble fractionné EG2.

Avantageusement, dans cette deuxième variante de la première forme de réalisation des moyens de séparation du deuxième assemblage transitoire, les moyens de séparation de l'ensemble fractionné EG2 entre le premier assemblage fractionné AF21 et le deuxième noyau transitoire comprennent des moyens de fractionnement de l'ensemble fractionné EG2 en le premier assemblage fractionné AF21 et le deuxième noyau transitoire.

Dans une troisième variante de la première forme de réalisation des moyens de séparation du deuxième assemblage transitoire dans laquelle le deuxième assemblage fractionné AF21, le deuxième assemblage fractionné AF22 et le deuxième noyau transitoire ou un ou plusieurs ensembles comprenant le deuxième noyau transitoire sont séparés simultanément et combinable avec l'une des première, deuxième et troisième variantes de la première forme de réalisation des moyens de séparation du premier assemblage transitoire, les moyens de séparation du deuxième assemblage transitoire comprennent des moyens de fractionnement du deuxième assemblage transitoire entre le premier assemblage fractionné AF21, le deuxième assemblage fractionné AF22 et le deuxième noyau transitoire ou un ou plusieurs ensembles comprenant le deuxième noyau transitoire, de préférence le deuxième noyau transitoire.

Dans une deuxième forme de réalisation permettant un réassemblage partiel des A' et B' éléments filaires métalliques de chaque couche de chaque assemblage transitoire, les moyens de séparation du premier assemblage transitoire, les moyens de séparation du deuxième assemblage transitoire et les moyens de réassemblage du premier assemblage fractionné AF11 avec le premier assemblage fractionné AF21 sont agencés de sorte que A'>D'+E' et B'>F'+G'.

Dans des première, deuxième et troisième variantes de la deuxième forme de réalisation des moyens de séparation du premier assemblage transitoire dans lesquelles le premier noyau transitoire est séparé avec le deuxième assemblage fractionné AF12, les moyens de séparation du premier assemblage transitoire comprennent:
- des moyens de séparation du premier assemblage transitoire entre :
   - un ensemble fractionné EG1 comprenant au moins une couche constituée de G1'>1 éléments filaires métalliques enroulés en hélice autour du premier noyau transitoire, les G1'>1 éléments filaires métalliques étant issus de la couche constituée des A'>1 éléments filaires métalliques du premier assemblage transitoire, et
   - le premier assemblage fractionné AF11,
- des moyens de séparation de l'ensemble fractionné EG1 entre :
   - le deuxième assemblage fractionné AF12 formant le deuxième assemblage final, les E'>1 éléments filaires métalliques étant issus de la couche constituée des G1'>1 éléments filaires métalliques de l'ensemble fractionné EG1, et
   - le premier noyau transitoire ou un ou plusieurs ensembles comprenant le premier noyau transitoire, de préférence le premier noyau transitoire.

Dans ces première, deuxième et troisième variantes de la deuxième forme de réalisation des moyens de séparation du premier assemblage transitoire, les moyens de séparation du premier assemblage transitoire entre le premier assemblage fractionné AF11 et l'ensemble fractionné EG1 sont agencés en amont des moyens de séparation de l'ensemble fractionné EG1 entre le deuxième assemblage fractionné AF12 formant le deuxième assemblage final et le premier noyau transitoire ou un ou plusieurs ensembles comprenant le premier noyau transitoire, de préférence le premier noyau transitoire.

Avantageusement, les moyens de séparation du premier assemblage transitoire entre l'ensemble fractionné EG1 et le premier assemblage fractionné AF11 comprennent des moyens de fractionnement du premier assemblage transitoire en l'ensemble fractionné EG1 et le premier assemblage fractionné AF11. On a alors A'=G1'+D'.

Dans la première variante de la deuxième forme de réalisation des moyens de séparation du premier assemblage transitoire, les moyens de séparation de l'ensemble fractionné EG1 entre le deuxième assemblage fractionné AF12 et le premier noyau transitoire ou un ou plusieurs ensembles comprenant le premier noyau transitoire, de préférence le premier noyau transitoire comprennent:
- des moyens de séparation de l'ensemble fractionné EG1 entre :
   - un ensemble précurseur EH1 comprenant au moins une couche constituée de H1'>1 éléments filaires métalliques enroulés en hélice autour du premier noyau transitoire, les H1'>1 éléments filaires métalliques étant issus de la couche constituée des G1 '>1 éléments filaires métalliques de l'ensemble fractionné EG1, et
   - un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des G1'>1 éléments filaires métalliques de l'ensemble fractionné EG1,
- des moyens de séparation de l'ensemble précurseur EH1 entre :
   - le deuxième assemblage fractionné AF12 formant le deuxième assemblage final, les E'>1 éléments filaires métalliques étant issus de la couche constituée des H1 '>1 éléments filaires métalliques de l'ensemble précurseur EH1, et
   - le premier noyau transitoire ou un ou plusieurs ensembles comprenant le premier noyau transitoire, de préférence le premier noyau transitoire.

Dans cette première variante de la deuxième forme de réalisation des moyens de séparation du premier assemblage transitoire, les moyens de séparation de l'ensemble fractionné EG1 entre l'ensemble précurseur EH1 et l'ensemble dérivé ED1 sont agencés en amont des moyens de séparation de l'ensemble précurseur EH1 entre le deuxième assemblage fractionné AF12 formant le deuxième assemblage final et le premier noyau transitoire ou un ou plusieurs ensembles comprenant le premier noyau transitoire, de préférence le premier noyau transitoire.

Avantageusement, dans cette première variante de la deuxième forme de réalisation des moyens de séparation du premier assemblage transitoire, les moyens de séparation de l'ensemble fractionné EG1 entre l'ensemble précurseur EH1 et l'ensemble dérivé ED1 comprennent des moyens de fractionnement de l'ensemble fractionné EG1 en l'ensemble précurseur EH1 et l'ensemble dérivé ED1. On a alors G1'=H1'+I1'.

Avantageusement, dans cette première variante de la deuxième forme de réalisation des moyens de séparation du premier assemblage transitoire, les moyens de séparation de l'ensemble précurseur EH1 entre le deuxième assemblage fractionné AF12 formant le deuxième assemblage final et le premier noyau transitoire ou un ou plusieurs ensembles comprenant le premier noyau transitoire, de préférence le premier noyau transitoire comprennent des moyens de fractionnement de l'ensemble précurseur EH1 en le deuxième assemblage fractionné AF12 formant le deuxième assemblage final et le premier noyau transitoire ou un ou plusieurs ensembles comprenant le premier noyau transitoire, de préférence le premier noyau transitoire. On a alors H1'=E' dans le cas de moyens de fractionnement de l'ensemble précurseur EH1 en le deuxième assemblage fractionné AF12 formant le deuxième assemblage final et le premier noyau transitoire.

Dans la deuxième variante de la deuxième forme de réalisation des moyens de séparation du premier assemblage transitoire, les moyens de séparation de l'ensemble fractionné EG1 entre le deuxième assemblage fractionné AF12 et le premier noyau transitoire ou un ou plusieurs ensembles comprenant le premier noyau transitoire, de préférence le premier noyau transitoire comprennent:
- des moyens de séparation de l'ensemble fractionné EG1 entre :
   - un ensemble précurseur EH1 comprenant au moins une couche constituée de H1'>1 éléments filaires métalliques enroulés en hélice, les H1'>1 éléments filaires métalliques étant issus de la couche constituée des G1'>1 éléments filaires métalliques de l'ensemble fractionné EG1, et
   - le premier noyau transitoire ou un ou plusieurs ensembles comprenant le premier noyau transitoire,
- des moyens de séparation de l'ensemble précurseur EH1 entre :
   - le deuxième assemblage fractionné AF12 formant le deuxième assemblage final, les E'>1 éléments filaires métalliques étant issus de la couche constituée des H1'>1 éléments filaires métalliques de l'ensemble précurseur EH1, et
   - un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des H1'>1 éléments filaires métalliques de l'ensemble précurseur EH1.

Dans cette deuxième variante de la deuxième forme de réalisation des moyens de séparation du premier assemblage transitoire, les moyens de séparation de l'ensemble fractionné EG1 entre l'ensemble précurseur EH1 et le premier noyau transitoire ou un ou plusieurs ensembles comprenant le premier noyau transitoire, de préférence le premier noyau transitoire sont agencés en amont des moyens de séparation de l'ensemble précurseur EH1 entre le deuxième assemblage fractionné AF12 formant le deuxième assemblage final et l'ensemble dérivé ED1.

Avantageusement, dans cette deuxième variante de la deuxième forme de réalisation des moyens de séparation du premier assemblage transitoire, les moyens de séparation de l'ensemble fractionné EG1 entre l'ensemble précurseur EH1 et le premier noyau transitoire ou un ou plusieurs ensembles comprenant le premier noyau transitoire, de préférence le premier noyau transitoire comprennent des moyens de fractionnement de l'ensemble fractionné EG1 en l'ensemble précurseur EH1 et le premier noyau transitoire ou un ou plusieurs ensembles comprenant le premier noyau transitoire, de préférence le premier noyau transitoire. On a alors G1'=H1' dans le cas de moyens de fractionnement de l'ensemble fractionné EG1 en l'ensemble précurseur EH1 et le premier noyau transitoire.

Avantageusement, dans cette deuxième variante de la deuxième forme de réalisation des moyens de séparation du premier assemblage transitoire, les moyens de séparation de l'ensemble précurseur EH1 entre le deuxième assemblage fractionné AF12 formant le deuxième assemblage final et l'ensemble dérivé ED1 comprennent des moyens de fractionnement de l'ensemble précurseur EH1 en le deuxième assemblage fractionné AF12 formant le deuxième assemblage final et l'ensemble dérivé ED1. On a alors H1'=E'+I1'.

Dans la troisième variante de la deuxième forme de réalisation des moyens de séparation du premier assemblage transitoire, les moyens de séparation de l'ensemble fractionné EG1 entre le deuxième assemblage fractionné AF12 et le premier noyau transitoire ou un ou plusieurs ensembles comprenant le premier noyau transitoire, de préférence le premier noyau transitoire comprennent:
- des moyens de séparation de l'ensemble fractionné EG1 entre :
   - un ensemble principal EM1 comprenant au moins une couche constituée de J1'≥1 élément(s) filaire(s) métallique(s) enroulé(s) en hélice, le ou les J1'≥1 élément(s) filaire(s) métallique(s) étant issu(s) de la couche constituée des G1'>1 éléments filaires métalliques de l'ensemble fractionné EG1, l'ensemble principal EM1 formant le deuxième assemblage fractionné AF12 formant le deuxième assemblage final, et
   - un ensemble complémentaire ES1 comprenant au moins une couche constituée de K1'≥1 élément(s) filaire(s) métallique(s) enroulé(s) en hélice autour du premier noyau transitoire, le ou les K1'≥1 élément(s) filaire(s) métallique(s) étant issu(s) de la couche constituée des G1'>1 éléments filaires métalliques de l'ensemble fractionné EG1.

Avantageusement, dans cette troisième variante de la deuxième forme de réalisation des moyens de séparation du premier assemblage transitoire, les moyens de séparation de l'ensemble fractionné EG1 entre l'ensemble principal EM1 et l'ensemble complémentaire ES1 comprennent des moyens de fractionnement de l'ensemble fractionné EG1 en l'ensemble principal EM1 et l'ensemble complémentaire ES1. On a alors G1'=J1'+K1'.

De préférence, les moyens de séparation de l'ensemble fractionné EG1 entre le deuxième assemblage fractionné AF12 et le premier noyau transitoire ou un ou plusieurs ensembles comprenant le premier noyau transitoire, de préférence le premier noyau transitoire comprennent des moyens de séparation de l'ensemble complémentaire ES1 entre :
- un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée du ou des K1'≥1 élément(s) filaire(s) métallique(s) de l'ensemble complémentaire ES1, et
- le premier noyau transitoire ou un ou plusieurs ensembles comprenant le premier noyau transitoire, de préférence le premier noyau transitoire. On a alors K1'≥I1'.

Ainsi, les moyens de séparation de l'ensemble fractionné EG1 entre l'ensemble principal EM1 et l'ensemble complémentaire ES1 sont agencés en amont des moyens de séparation de l'ensemble complémentaire ES1 entre l'ensemble dérivé ED1 et le premier noyau transitoire ou un ou plusieurs ensembles comprenant le premier noyau transitoire, de préférence le premier noyau transitoire.

Avantageusement, les moyens de séparation de l'ensemble complémentaire ES1 entre l'ensemble dérivé ED1 et le premier noyau transitoire ou un ou plusieurs ensembles comprenant le premier noyau transitoire, de préférence le premier noyau transitoire comprennent des moyens de fractionnement de l'ensemble complémentaire ES1 en l'ensemble dérivé ED1 et le premier noyau transitoire ou un ou plusieurs ensembles comprenant le premier noyau transitoire, de préférence le premier noyau transitoire. On a alors K1'=I1' dans le cas de moyens de fractionnement de l'ensemble complémentaire ES1 en l'ensemble dérivé ED1 et le premier noyau transitoire.

Dans des quatrième, cinquième et sixième variantes de la deuxième forme de réalisation des moyens de séparation du premier assemblage transitoire dans lesquelles le premier noyau transitoire est séparé avec le premier assemblage fractionné AF11, les moyens de séparation du premier assemblage transitoire comprennent:
- des moyens de séparation du premier assemblage transitoire entre :
   - un ensemble fractionné EG1 comprenant au moins une couche constituée de G1'>1 éléments filaires métalliques enroulés en hélice autour du premier noyau transitoire, les G1'>1 éléments filaires métalliques étant issus de la couche constituée des A'>1 éléments filaires métalliques du premier assemblage transitoire, et
   - le deuxième assemblage fractionné AF12 formant le deuxième assemblage final,
- des moyens de séparation de l'ensemble fractionné EG1 entre :
   - le premier assemblage fractionné AF11, le ou les D'≥1 élément(s) filaire(s) métallique(s) étant issu(s) de la couche constituée des G1'>1 éléments filaires métalliques de l'ensemble fractionné EG1, et
   - le premier noyau transitoire ou un ou plusieurs ensembles comprenant le premier noyau transitoire, de préférence le premier noyau transitoire.

Dans ces quatrième, cinquième et sixième variantes de la deuxième forme de réalisation des moyens de séparation du premier assemblage transitoire, les moyens de séparation du premier assemblage transitoire entre l'ensemble fractionné EG1 et le deuxième assemblage fractionné AF12 formant le deuxième assemblage final sont agencés en amont des moyens de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire.

Avantageusement, les moyens de séparation du premier assemblage transitoire entre l'ensemble fractionné EG1 et le deuxième assemblage fractionné AF12 formant le deuxième assemblage final comprennent des moyens de fractionnement du premier assemblage transitoire en l'ensemble fractionné EG1 et le deuxième assemblage fractionné AF12 formant le deuxième assemblage final. On a ainsi, A'=G1'+E'.

Dans la quatrième variante de la deuxième forme de réalisation des moyens de séparation du premier assemblage transitoire, les moyens de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire comprennent:
- des moyens de séparation de l'ensemble fractionné EG1 entre :
   - un ensemble précurseur EH1 comprenant au moins une couche constituée de H1'≥1 élément(s) filaire(s) métallique(s) enroulé(s) en hélice autour du premier noyau transitoire, le ou les H1'≥1 élément(s) filaire(s) métallique(s) étant issu(s) de la couche constituée des G1'>1 éléments filaires métalliques de l'ensemble fractionné EG1, et
   - un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des G1'>1 éléments filaires métalliques de l'ensemble fractionné EG1,
- des moyens de séparation de l'ensemble précurseur EH1 entre :
   - le premier assemblage fractionné AF11, le ou les D'≥1 élément(s) filaire(s) métallique(s) étant issu(s) de la couche constituée du ou des H1'≥1 élément(s) filaire(s) métallique(s) de l'ensemble précurseur EH1, et
   - le premier noyau transitoire ou un ou plusieurs ensembles comprenant le premier noyau transitoire, de préférence le premier noyau transitoire.

Dans cette quatrième variante de la deuxième forme de réalisation des moyens de séparation du premier assemblage transitoire, les moyens de séparation de l'ensemble fractionné EG1 entre l'ensemble précurseur EH1 et l'ensemble dérivé ED1 sont agencés en amont des moyens de séparation de l'ensemble précurseur EH1 entre le premier assemblage fractionné AF11 et le premier noyau transitoire ou un ou plusieurs ensembles comprenant le premier noyau transitoire, de préférence le premier noyau transitoire.

Avantageusement, dans cette quatrième variante de la deuxième forme de réalisation des moyens de séparation du premier assemblage transitoire, les moyens de séparation de l'ensemble fractionné EG1 entre l'ensemble précurseur EH1 et l'ensemble dérivé ED1 comprennent des moyens de fractionnement de l'ensemble fractionné EG1 en l'ensemble précurseur EH1 et l'ensemble dérivé ED1. On a alors G1'=H1'+I1'.

Avantageusement, dans cette quatrième variante de la deuxième forme de réalisation des moyens de séparation du premier assemblage transitoire, les moyens de séparation de l'ensemble précurseur EH1 entre le premier assemblage fractionné AF11 et le premier noyau transitoire ou un ou plusieurs ensembles comprenant le premier noyau transitoire, de préférence le premier noyau transitoire comprennent des moyens de fractionnement de l'ensemble précurseur EH1 en le premier assemblage fractionné AF11 et le premier noyau transitoire ou un ou plusieurs ensembles comprenant le premier noyau transitoire, de préférence le premier noyau transitoire. On a alors H1'=D' dans le cas de moyens de fractionnement de l'ensemble précurseur EH1 en le premier assemblage fractionné AF11 et le premier noyau transitoire.

Dans une cinquième variante de la deuxième forme de réalisation des moyens de séparation du premier assemblage transitoire, les moyens de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire comprennent:
- des moyens de séparation de l'ensemble fractionné EG1 entre :
   - un ensemble précurseur EH1 comprenant au moins une couche constituée de H1'>1 éléments filaires métalliques enroulés en hélice, les H1'>1 éléments filaires métalliques étant issus de la couche constituée des G1'>1 éléments filaires métalliques de l'ensemble fractionné EG1, et
   - le premier noyau transitoire ou un ou plusieurs ensembles comprenant le premier noyau transitoire,
- des moyens de séparation de l'ensemble précurseur EH1 entre :
   - le premier assemblage fractionné AF11, le ou les D'≥1 élément(s) filaire(s) métallique(s) étant issu(s) de la couche constituée des H1'>1 éléments filaires métalliques de l'ensemble précurseur EH1, et
   - un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des H1'>1 éléments filaires métalliques de l'ensemble précurseur EH1.

Dans cette cinquième variante de la deuxième forme de réalisation des moyens de séparation du premier assemblage transitoire, les moyens de séparation de l'ensemble fractionné EG1 entre l'ensemble précurseur EH1 et le premier noyau transitoire ou un ou plusieurs ensembles comprenant le premier noyau transitoire, de préférence le premier noyau transitoire sont agencés en amont des moyens de séparation de l'ensemble précurseur EH1 entre le premier assemblage fractionné AF11 et l'ensemble dérivé ED1.

Avantageusement, dans cette cinquième variante de la deuxième forme de réalisation des moyens de séparation du premier assemblage transitoire, les moyens de séparation de l'ensemble fractionné EG1 entre l'ensemble précurseur EH1 et le premier noyau transitoire ou un ou plusieurs ensembles comprenant le premier noyau transitoire, de préférence le premier noyau transitoire comprennent des moyens de fractionnement de l'ensemble fractionné EG1 en l'ensemble précurseur EH1 et le premier noyau transitoire ou un ou plusieurs ensembles comprenant le premier noyau transitoire, de préférence le premier noyau transitoire. On a alors G1'=H1' dans le cas de moyens de fractionnement de l'ensemble fractionné EG1 en l'ensemble précurseur EH1 et le premier noyau transitoire.

Avantageusement, dans cette cinquième variante de la deuxième forme de réalisation des moyens de séparation du premier assemblage transitoire, les moyens de séparation de l'ensemble précurseur EH1 entre le premier assemblage fractionné AF11 et l'ensemble dérivé ED1 comprennent des moyens de fractionnement de l'ensemble précurseur EH1 en le premier assemblage fractionné AF11 et l'ensemble dérivé ED1. On a alors H1'=D'+I1'.

Dans la sixième variante de la deuxième forme de réalisation des moyens de séparation du premier assemblage transitoire, les moyens de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire comprennent:
- des moyens de séparation de l'ensemble fractionné EG1 entre :
   - un ensemble principal EM1 comprenant au moins une couche constituée de J1'≥1 élément(s) filaire(s) métallique(s) enroulé(s) en hélice, le ou les J1'≥1 élément(s) filaire(s) métallique(s) étant issu(s) de la couche constituée des G1'>1 éléments filaires métalliques de l'ensemble fractionné EG1, l'ensemble principal EM1 formant le premier assemblage fractionné AF11, et
   - un ensemble complémentaire ES1 comprenant au moins une couche constituée de K1'≥1 élément(s) filaire(s) métallique(s) enroulé(s) en hélice autour du premier noyau transitoire, le ou les K1'≥1 élément(s) filaire(s) métallique(s) étant issu(s) de la couche constituée des G1'>1 éléments filaires métalliques de l'ensemble fractionné EG1.

Avantageusement, dans cette sixième variante de la deuxième forme de réalisation des moyens de séparation du premier assemblage transitoire, les moyens de séparation de l'ensemble fractionné EG1 entre l'ensemble principal EM1 et l'ensemble complémentaire ES1 comprennent des moyens de fractionnement de l'ensemble fractionné EG1 en l'ensemble principal EM1 et l'ensemble complémentaire ES1. On a alors G1'=J1'+K1'.

De préférence, les moyens de séparation de l'ensemble fractionné EG1 entre le premier assemblage fractionné AF11 et le premier noyau transitoire ou un ou plusieurs ensembles comprenant le premier noyau transitoire, de préférence le premier noyau transitoire comprennent des moyens de séparation de l'ensemble complémentaire ES1 entre :
- un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée du ou des K1'≥1 élément(s) filaire(s) métallique(s) de l'ensemble complémentaire ES1, et
- le premier noyau transitoire ou un ou plusieurs ensembles comprenant le premier noyau transitoire, de préférence le premier noyau transitoire. On a alors K1'≥I1'.

Ainsi, les moyens de séparation de l'ensemble fractionné EG1 entre l'ensemble principal EM1 et l'ensemble complémentaire ES1 sont agencés en amont des moyens de séparation de l'ensemble complémentaire ES1 entre l'ensemble dérivé ED1 et le premier noyau transitoire ou un ou plusieurs ensembles comprenant le premier noyau transitoire, de préférence le premier noyau transitoire.

Avantageusement, les moyens de séparation de l'ensemble complémentaire ES1 entre l'ensemble dérivé ED1 et le premier noyau transitoire ou un ou plusieurs ensembles comprenant le premier noyau transitoire, de préférence le premier noyau transitoire comprennent des moyens de fractionnement de l'ensemble complémentaire ES1 en l'ensemble dérivé ED1 et le premier noyau transitoire ou un ou plusieurs ensembles comprenant le premier noyau transitoire, de préférence le premier noyau transitoire. On a alors K1'=I1' dans le cas de moyens de fractionnement de l'ensemble complémentaire ES1 en l'ensemble dérivé ED1 et le premier noyau transitoire.

Dans une septième variantes de la deuxième forme de réalisation des moyens de séparation du premier assemblage transitoire dans laquelle le premier assemblage fractionné AF11, le deuxième assemblage fractionné AF12 et le premier noyau transitoire ou un ou plusieurs ensembles comprenant le premier noyau transitoire sont séparés simultanément, les moyens de séparation du premier assemblage transitoire comprennent des moyens de fractionnement du premier assemblage transitoire entre le premier assemblage fractionné AF11, le deuxième assemblage fractionné AF12, le premier noyau transitoire ou un ou plusieurs ensembles comprenant le premier noyau transitoire, de préférence le premier noyau transitoire et un ensemble dérivé ED1 comprenant au moins une couche constituée de I1'≥1 élément(s) filaire(s) métallique(s) enroulé(s) en hélice, le ou les I1'≥1 élément(s) filaire(s) métallique(s) étant issu(s) de la couche constituée des A'>1 éléments filaires métalliques du premier assemblage transitoire.

Dans des première, deuxième et troisième variantes de la deuxième forme de réalisation des moyens de séparation du deuxième assemblage transitoire dans lesquelles le deuxième noyau transitoire est séparé avec le deuxième assemblage fractionné AF22 et combinables avec l'une des première à sixième variantes de la deuxième forme de réalisation des moyens de séparation du premier assemblage transitoire, les moyens de séparation du deuxième assemblage transitoire comprennent:
- des moyens de séparation du deuxième assemblage transitoire entre :
   - un ensemble fractionné EG2 comprenant au moins une couche constituée de G2'>1 éléments filaires métalliques enroulés en hélice autour du deuxième noyau transitoire, les G2'>1 éléments filaires métalliques étant issus de la couche constituée des B'>1 éléments filaires métalliques du deuxième assemblage transitoire, et
   - le premier assemblage fractionné AF21,
- des moyens de séparation de l'ensemble fractionné EG2 entre :
   - le deuxième assemblage fractionné AF22 formant le troisième assemblage final; les G'>1 éléments filaires métalliques étant issus de la couche constituée des G2'>1 éléments filaires métalliques de l'ensemble fractionné EG2, et
   - le deuxième noyau transitoire ou un ou plusieurs ensembles comprenant le deuxième noyau transitoire, de préférence le deuxième noyau transitoire.

Dans ces première, deuxième et troisième variantes de la deuxième forme de réalisation des moyens de séparation du deuxième assemblage transitoire, les moyens de séparation du deuxième assemblage transitoire entre l'ensemble fractionné EG2 et le premier assemblage fractionné AF21 sont agencés en amont des moyens de séparation de l'ensemble fractionné EG2 entre le deuxième assemblage fractionné AF22 formant le troisième assemblage final et le deuxième noyau transitoire ou un ou plusieurs ensembles comprenant le deuxième noyau transitoire, de préférence le deuxième noyau transitoire.

Avantageusement, les moyens de séparation du deuxième assemblage transitoire entre l'ensemble fractionné EG2 et le premier assemblage fractionné AF21 comprennent des moyens de fractionnement du deuxième assemblage transitoire en l'ensemble fractionné EG2 et le premier assemblage fractionné AF21. On a alors B'=G2'+F'.

Dans la première variante de la deuxième forme de réalisation des moyens de séparation du deuxième assemblage transitoire, les moyens de séparation de l'ensemble fractionné EG2 entre le deuxième assemblage fractionné AF22 et le deuxième noyau transitoire ou un ou plusieurs ensembles comprenant le deuxième noyau transitoire, de préférence le deuxième noyau transitoire comprennent :
- des moyens de séparation de l'ensemble fractionné EG2 entre :
   - un ensemble précurseur EH2 comprenant au moins une couche constituée de H2'>1 éléments filaires métalliques enroulés en hélice autour du deuxième noyau transitoire, les H2'>1 éléments filaires métalliques étant issus de la couche constituée des G2'>1 éléments filaires métalliques de l'ensemble fractionné EG2, et
   - un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des G2'>1 éléments filaires métalliques de l'ensemble fractionné EG2,
- des moyens de séparation de l'ensemble précurseur EH2 entre :
   - le deuxième assemblage fractionné AF22 formant le troisième assemblage final, les G'≥1 éléments filaires métalliques étant issus de la couche constituée des H2'>1 éléments filaires métalliques de l'ensemble précurseur EH2, et
   - le deuxième noyau transitoire ou un ou plusieurs ensembles comprenant le deuxième noyau transitoire, de préférence le deuxième noyau transitoire.

Dans cette première variante de la deuxième forme de réalisation des moyens de séparation du deuxième assemblage transitoire, les moyens de séparation de l'ensemble fractionné EG2 entre l'ensemble précurseur EH2 et l'ensemble dérivé ED2 sont agencés en amont des moyens de séparation de l'ensemble précurseur EH2 entre le deuxième assemblage fractionné AF22 formant le troisième assemblage final et le deuxième noyau transitoire ou un ou plusieurs ensembles comprenant le deuxième noyau transitoire, de préférence le deuxième noyau transitoire.

Avantageusement, dans cette première variante de la deuxième forme de réalisation des moyens de séparation du deuxième assemblage transitoire, les moyens de séparation de l'ensemble fractionné EG2 entre l'ensemble précurseur EH2 et l'ensemble dérivé ED2 comprennent des moyens de fractionnement de l'ensemble fractionné EG2 en l'ensemble précurseur EH2 et l'ensemble dérivé ED2. On a alors G2'=H2'+I2'.

Avantageusement, dans cette première variante de la deuxième forme de réalisation des moyens de séparation du deuxième assemblage transitoire, les moyens de séparation de l'ensemble précurseur EH2 entre le deuxième assemblage fractionné AF22 formant le troisième assemblage final et le deuxième noyau transitoire ou un ou plusieurs ensembles comprenant le deuxième noyau transitoire, de préférence le deuxième noyau transitoire comprennent des moyens de fractionnement de l'ensemble précurseur EH2 en le deuxième assemblage fractionné AF22 formant le troisième assemblage final et le deuxième noyau transitoire ou un ou plusieurs ensembles comprenant le deuxième noyau transitoire, de préférence le deuxième noyau transitoire. On a alors H2'=G' dans le cas d'une étape de fractionnement de l'ensemble précurseur EH2 en le deuxième assemblage fractionné AF22 formant le troisième assemblage final et le deuxième noyau transitoire.

Dans la deuxième variante de la deuxième forme de réalisation des moyens de séparation du premier assemblage transitoire, les moyens de séparation de l'ensemble fractionné EG2 entre le deuxième assemblage fractionné AF22 et le deuxième noyau transitoire ou un ou plusieurs ensembles comprenant le deuxième noyau transitoire, de préférence le deuxième noyau transitoire comprennent:
- des moyens de séparation de l'ensemble fractionné EG2 entre :
   - un ensemble précurseur EH2 comprenant au moins une couche constituée de H2'>1 éléments filaires métalliques enroulés en hélice, les H2'>1 éléments filaires métalliques étant issus de la couche constituée des G2'>1 éléments filaires métalliques de l'ensemble fractionné EG2, et
   - le deuxième noyau transitoire ou un ou plusieurs ensembles comprenant le deuxième noyau transitoire,
- des moyens de séparation de l'ensemble précurseur EH2 entre :
   - le deuxième assemblage fractionné AF22 formant le troisième assemblage final, les G'>1 éléments filaires métalliques étant issus de la couche constituée des H2'>1 éléments filaires métalliques de l'ensemble précurseur EH2, et
   - un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des H2'>1 éléments filaires métalliques de l'ensemble précurseur EH2.

Dans cette deuxième variante de la deuxième forme de réalisation des moyens de séparation du deuxième assemblage transitoire, on a G2'≥H2' et H2'≥G'+I2'.

Dans cette deuxième variante de la deuxième forme de réalisation des moyens de séparation du deuxième assemblage transitoire, les moyens de séparation de l'ensemble fractionné EG2 entre l'ensemble précurseur EH2 et le deuxième noyau transitoire ou un ou plusieurs ensembles comprenant le deuxième noyau transitoire, de préférence le deuxième noyau transitoire sont agencés en amont des moyens de séparation de l'ensemble précurseur EH2 entre le deuxième assemblage fractionné AF22 formant le troisième assemblage final et l'ensemble dérivé ED2.

Avantageusement, dans cette deuxième variante de la deuxième forme de réalisation des moyens de séparation du deuxième assemblage transitoire, les moyens de séparation de l'ensemble fractionné EG2 entre l'ensemble précurseur EH2 et le deuxième noyau transitoire ou un ou plusieurs ensembles comprenant le deuxième noyau transitoire, de préférence le deuxième noyau transitoire comprennent des moyens de fractionnement de l'ensemble fractionné EG2 en l'ensemble précurseur EH2 et le deuxième noyau transitoire ou un ou plusieurs ensembles comprenant le deuxième noyau transitoire, de préférence le deuxième noyau transitoire. On a alors G2'=H2' dans le cas de moyens de fractionnement de l'ensemble fractionné EG2 en l'ensemble précurseur EH2 et le deuxième noyau transitoire.

Avantageusement, dans cette deuxième variante de la deuxième forme de réalisation des moyens de séparation du deuxième assemblage transitoire, les moyens de séparation de l'ensemble précurseur EH2 entre le deuxième assemblage fractionné AF22 formant le troisième assemblage final et l'ensemble dérivé ED2 comprennent des moyens de fractionnement de l'ensemble précurseur EH2 en le deuxième assemblage fractionné AF22 formant le troisième assemblage final et l'ensemble dérivé ED2. On a alors H2'=G'+I2'.

Dans la troisième variante de la deuxième forme de réalisation des moyens de séparation du premier assemblage transitoire, les moyens de séparation de l'ensemble fractionné EG2 entre le deuxième assemblage fractionné AF22 et le deuxième noyau transitoire ou un ou plusieurs ensembles comprenant le deuxième noyau transitoire, de préférence le deuxième noyau transitoire comprennent:
- des moyens de séparation de l'ensemble fractionné EG2 entre :
   - un ensemble principal EM2 comprenant au moins une couche constituée de J2'≥1 élément(s) filaire(s) métallique(s) enroulé(s) en hélice, le ou les J2'≥1 élément(s) filaire(s) métallique(s) étant issu(s) de la couche constituée des G2'>1 éléments filaires métalliques de l'ensemble fractionné EG2, l'ensemble principal EM2 formant le deuxième assemblage fractionné AF22 formant le troisième assemblage final, et
   - un ensemble complémentaire ES2 comprenant au moins une couche constituée de K2'≥1 élément(s) filaire(s) métallique(s) enroulé(s) en hélice autour du deuxième noyau transitoire, le ou les K2'≥1 élément(s) filaire(s) métallique(s) étant issu(s) de la couche constituée des G2'>1 éléments filaires métalliques de l'ensemble fractionné EG2.

Avantageusement, dans cette troisième variante de la deuxième forme de réalisation des moyens de séparation du deuxième assemblage transitoire, les moyens de séparation de l'ensemble fractionné EG2 entre l'ensemble principal EM2 et l'ensemble complémentaire ES2 comprennent des moyens de fractionnement de l'ensemble fractionné EG2 en l'ensemble principal EM2 et l'ensemble complémentaire ES2. On a alors G2'=J2'+K2'.

De préférence, les moyens de séparation de l'ensemble fractionné EG2 entre le deuxième assemblage fractionné AF22 et le deuxième noyau transitoire ou un ou plusieurs ensembles comprenant le deuxième noyau transitoire, de préférence le deuxième noyau transitoire comprennent des moyens de séparation de l'ensemble complémentaire ES2 entre :
- un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée du ou des K2'≥1 élément(s) filaire(s) métallique(s) de l'ensemble complémentaire ES2, et
- le deuxième noyau transitoire ou un ou plusieurs ensembles comprenant le deuxième noyau transitoire, de préférence le deuxième noyau transitoire. On a alors K2'≥I2'.

Ainsi, les moyens de séparation de l'ensemble fractionné EG2 entre l'ensemble principal EM2 et l'ensemble complémentaire ES2 sont agencés en amont des moyens de séparation de l'ensemble complémentaire ES2 entre l'ensemble dérivé ED2 et le deuxième noyau transitoire ou un ou plusieurs ensembles comprenant le deuxième noyau transitoire, de préférence le deuxième noyau transitoire.

Avantageusement, les moyens de séparation de l'ensemble complémentaire ES2 entre l'ensemble dérivé ED2 et le deuxième noyau transitoire ou un ou plusieurs ensembles comprenant le deuxième noyau transitoire, de préférence le deuxième noyau transitoire comprennent des moyens de fractionnement de l'ensemble complémentaire ES2 en l'ensemble dérivé ED2 et le deuxième noyau transitoire ou un ou plusieurs ensembles comprenant le deuxième noyau transitoire, de préférence le deuxième noyau transitoire. On a alors K2'=I2' dans le cas de moyens de fractionnement de l'ensemble complémentaire ES2 en l'ensemble dérivé ED2 et le deuxième noyau transitoire.

Dans des quatrième, cinquième et sixième variantes de la deuxième forme de réalisation des moyens de séparation du deuxième assemblage transitoire dans laquelle le deuxième noyau transitoire est séparé avec le premier assemblage fractionné AF21 et combinables avec l'une des première à sixième variantes de la deuxième forme de réalisation des moyens de séparation du premier assemblage transitoire, les moyens de séparation du deuxième assemblage transitoire comprennent:
- des moyens de séparation du deuxième assemblage transitoire entre :
   - un ensemble fractionné EG2 comprenant au moins une couche constituée de G2'>1 éléments filaires métalliques enroulés en hélice autour du deuxième noyau transitoire, les G2'>1 éléments filaires métalliques étant issus de la couche constituée des B'>1 éléments filaires métalliques du deuxième assemblage transitoire, et
   - le deuxième assemblage fractionné AF22 formant le troisième assemblage final,
- des moyens de séparation de l'ensemble fractionné EG2 entre :
   - le premier assemblage fractionné AF21; le ou les F'≥1 élément(s) filaire(s) métallique(s) étant issu(s) de la couche constituée des G2'>1 éléments filaires métalliques de l'ensemble fractionné EG2, et
   - le deuxième noyau transitoire ou un ou plusieurs ensembles comprenant le deuxième noyau transitoire, de préférence le deuxième noyau transitoire.

Dans ces quatrième, cinquième et sixième variantes de la deuxième forme de réalisation des moyens de séparation du deuxième assemblage transitoire, les moyens de séparation du deuxième assemblage transitoire entre l'ensemble fractionné EG2 et le deuxième assemblage fractionné AF22 formant le troisième assemblage final sont agencés en amont des moyens de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire.

Avantageusement, les moyens de séparation du deuxième assemblage transitoire entre l'ensemble fractionné EG2 et le deuxième assemblage fractionné AF22 formant le troisième assemblage final comprennent des moyens de fractionnement du deuxième assemblage transitoire entre l'ensemble fractionné EG2 et le deuxième assemblage fractionné AF22 formant le troisième assemblage final. On a ainsi, B'=G2'+G'.

Dans la quatrième variante de la deuxième forme de réalisation des moyens de séparation du deuxième assemblage transitoire, les moyens de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire comprennent:
- des moyens de séparation de l'ensemble fractionné EG2 entre :
   - un ensemble précurseur EH2 comprenant au moins une couche constituée de H2'≥1 élément(s) filaire(s) métallique(s) enroulé(s) en hélice autour du deuxième noyau transitoire, le ou les H2'≥1 élément(s) filaire(s) métallique(s) étant issu(s) de la couche constituée des G2'>1 éléments filaires métalliques de l'ensemble fractionné EG2, et
   - un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des G2'>1 éléments filaires métalliques de l'ensemble fractionné EG2,
- des moyens de séparation de l'ensemble précurseur EH2 entre :
   - le premier assemblage fractionné AF21, le ou les F'≥1 élément(s) filaire(s) métallique(s) étant issu(s) de la couche constituée du ou des H2'≥1 élément(s) filaire(s) métallique(s) de l'ensemble précurseur EH2, et
   - le deuxième noyau transitoire ou un ou plusieurs ensembles comprenant le deuxième noyau transitoire, de préférence le deuxième noyau transitoire.

Dans cette quatrième variante de la deuxième forme de réalisation des moyens de séparation du deuxième assemblage transitoire, les moyens de séparation de l'ensemble fractionné EG2 entre l'ensemble précurseur EH2 et l'ensemble dérivé ED2 sont agencés en amont des moyens de séparation de l'ensemble précurseur EH2 entre le premier assemblage fractionné AF21 et le deuxième noyau transitoire ou un ou plusieurs ensembles comprenant le deuxième noyau transitoire, de préférence le deuxième noyau transitoire.

Avantageusement, dans cette quatrième variante de la deuxième forme de réalisation des moyens de séparation du deuxième assemblage transitoire, les moyens de séparation de l'ensemble fractionné EG2 entre l'ensemble précurseur EH2 et l'ensemble dérivé ED2 comprennent des moyens de fractionnement de l'ensemble fractionné EG2 en l'ensemble précurseur EH2 et l'ensemble dérivé ED2. On a alors G2'=H2'+I2'.

Avantageusement, dans cette quatrième variante de la deuxième forme de réalisation des moyens de séparation du deuxième assemblage transitoire, les moyens de séparation de l'ensemble précurseur EH2 entre le deuxième assemblage fractionné AF21 et le deuxième noyau transitoire ou un ou plusieurs ensembles comprenant le deuxième noyau transitoire, de préférence le deuxième noyau transitoire comprennent des moyens de fractionnement de l'ensemble précurseur EH2 en le premier assemblage fractionné AF21 et le deuxième noyau transitoire ou un ou plusieurs ensembles comprenant le deuxième noyau transitoire, de préférence le deuxième noyau transitoire. On a alors H2'=F' dans le cas de moyens de fractionnement de l'ensemble précurseur EH2 en le premier assemblage fractionné AF21 et le deuxième noyau transitoire.

Dans une cinquième variante de la deuxième forme de réalisation des moyens de séparation du deuxième assemblage transitoire, les moyens de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire comprennent:
- des moyens de séparation de l'ensemble fractionné EG2 entre :
   - un ensemble précurseur EH2 comprenant au moins une couche constituée de H2'>1 éléments filaires métalliques enroulés en hélice, les H2'>1 éléments filaires métalliques étant issus de la couche constituée des G2'>1 éléments filaires métalliques de l'ensemble fractionné EG2, et
   - le deuxième noyau transitoire ou un ou plusieurs ensembles comprenant le deuxième noyau transitoire,
- des moyens de séparation de l'ensemble précurseur EH2 entre :
   - le premier assemblage fractionné AF21, le ou les F'≥1 élément(s) filaire(s) métallique(s) étant issu(s) de la couche constituée des H2'>1 éléments filaires métalliques de l'ensemble précurseur EH2, et
   - un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des H2'>1 éléments filaires métalliques de l'ensemble précurseur EH2.

Dans cette cinquième variante de la deuxième forme de réalisation des moyens de séparation du deuxième assemblage transitoire, les moyens de séparation de l'ensemble fractionné EG2 entre l'ensemble précurseur EH2 et le deuxième noyau transitoire ou un ou plusieurs ensembles comprenant le deuxième noyau transitoire, de préférence le deuxième noyau transitoire sont agencés en amont des moyens de séparation de l'ensemble précurseur EH2 entre le premier assemblage fractionné AF21 et l'ensemble dérivé ED2.

Avantageusement, dans cette cinquième variante de la deuxième forme de réalisation des moyens de séparation du deuxième assemblage transitoire, les moyens de séparation de l'ensemble fractionné EG2 entre l'ensemble précurseur EH2 et le deuxième noyau transitoire ou un ou plusieurs ensembles comprenant le deuxième noyau transitoire, de préférence le deuxième noyau transitoire comprennent des moyens de fractionnement de l'ensemble fractionné EG2 en l'ensemble précurseur EH2 et le deuxième noyau transitoire ou un ou plusieurs ensembles comprenant le deuxième noyau transitoire, de préférence le deuxième noyau transitoire. On a alors G2'=H2' dans le cas de moyens de fractionnement de l'ensemble fractionné EG2 en l'ensemble précurseur EH2 et le deuxième noyau transitoire.

Avantageusement, dans cette cinquième variante de la deuxième forme de réalisation des moyens de séparation du deuxième assemblage transitoire, les moyens de séparation de l'ensemble précurseur EH2 entre le deuxième assemblage fractionné AF21 et l'ensemble dérivé ED2 comprennent des moyens de fractionnement de l'ensemble précurseur EH2 en le premier assemblage fractionné AF21 et l'ensemble dérivé ED2. On a alors H2'=F'+I2'.

Dans la sixième variante de la deuxième forme de réalisation des moyens de séparation du deuxième assemblage transitoire, les moyens de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire comprennent:
- des moyens de séparation de l'ensemble fractionné EG2 entre :
   - un ensemble principal EM2 comprenant au moins une couche constituée de J2'≥1 élément(s) filaire(s) métallique(s) enroulé(s) en hélice, le ou les J2'≥1 élément(s) filaire(s) métallique(s) étant issu(s) de la couche constituée des G2'>1 éléments filaires métalliques de l'ensemble fractionné EG2, l'ensemble principal EM2 formant le premier assemblage fractionné AF21, et
   - un ensemble complémentaire ES2 comprenant au moins une couche constituée de K2'≥1 élément(s) filaire(s) métallique(s) enroulé(s) en hélice autour du deuxième noyau transitoire, le ou les K2'≥1 élément(s) filaire(s) métallique(s) étant issu(s) de la couche constituée des G2'>1 éléments filaires métalliques de l'ensemble fractionné EG2.

Avantageusement, dans cette sixième variante de la deuxième forme de réalisation des moyens de séparation du deuxième assemblage transitoire, les moyens de séparation de l'ensemble fractionné EG2 entre l'ensemble principal EM2 et l'ensemble complémentaire ES2 comprennent des moyens de fractionnement de l'ensemble fractionné EG2 en l'ensemble principal EM2 et l'ensemble complémentaire ES2. On a alors G2'=J2'+K2'.

De préférence, les moyens de séparation de l'ensemble fractionné EG2 entre le premier assemblage fractionné AF21 et le deuxième noyau transitoire ou un ou plusieurs ensembles comprenant le deuxième noyau transitoire, de préférence le deuxième noyau transitoire comprennent des moyens de séparation de l'ensemble complémentaire ES2 entre :
- un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée du ou des K2'≥1 élément(s) filaire(s) métallique(s) de l'ensemble complémentaire ES2, et
- le deuxième noyau transitoire ou un ou plusieurs ensembles comprenant le deuxième noyau transitoire, de préférence le deuxième noyau transitoire. On a alors K2'≥I2'.

Ainsi, les moyens de séparation de l'ensemble fractionné EG2 entre l'ensemble principal EM2 et l'ensemble complémentaire ES2 sont agencés en amont des moyens de séparation de l'ensemble complémentaire ES2 entre l'ensemble dérivé ED2 et le deuxième noyau transitoire ou un ou plusieurs ensembles comprenant le deuxième noyau transitoire, de préférence le deuxième noyau transitoire.

Avantageusement, les moyens de séparation de l'ensemble complémentaire ES2 entre l'ensemble dérivé ED2 et le deuxième noyau transitoire ou un ou plusieurs ensembles comprenant le deuxième noyau transitoire, de préférence le deuxième noyau transitoire comprennent des moyens de fractionnement de l'ensemble complémentaire ES2 en l'ensemble dérivé ED2 et le deuxième noyau transitoire ou un ou plusieurs ensembles comprenant le deuxième noyau transitoire, de préférence le deuxième noyau transitoire. On a alors K2'=I2' dans le cas de moyens de fractionnement de l'ensemble complémentaire ES2 en l'ensemble dérivé ED2 et le deuxième noyau transitoire.

Dans une septième variantes de la deuxième forme de réalisation des moyens de séparation du deuxième assemblage transitoire dans laquelle le premier assemblage fractionné AF21, le deuxième assemblage fractionné AF22 et le deuxième noyau transitoire ou un ou plusieurs ensembles comprenant le deuxième noyau transitoire sont séparés simultanément, les moyens de séparation du deuxième assemblage transitoire comprennent des moyens de fractionnement du deuxième assemblage transitoire entre le premier assemblage fractionné AF21, le deuxième assemblage fractionné AF22, le deuxième noyau transitoire ou un ou plusieurs ensembles comprenant le deuxième noyau transitoire, de préférence le deuxième noyau transitoire et un ensemble dérivé ED2 comprenant au moins une couche constituée de I2'≥1 élément(s) filaire(s) métallique(s) enroulé(s) en hélice, le ou les I2'≥1 élément(s) filaire(s) métallique(s) étant issu(s) de la couche constituée des B'>1 éléments filaires métalliques du deuxième assemblage transitoire.

De façon très préférentielle, les moyens de fourniture de chaque premier et deuxième assemblage transitoire comprennent des moyens d'assemblage par retordage respectivement des A', B' éléments filaires métalliques enroulés en hélice autour de chaque premier et deuxième noyau transitoire.

Avantageusement, les moyens de fourniture de chaque premier et deuxième assemblage transitoire comprennent des moyens d'équilibrage de chaque premier et deuxième assemblage transitoire.

L'invention sera mieux comprise à la lecture de la description qui va suivre, donnée uniquement à titre d'exemple non limitatif et faite en se référant aux dessins dans lesquels:
- la figure 1 est un schéma d'une installation selon un premier mode de réalisation de l'invention permettant de mettre en oeuvre un procédé selon un premier mode de réalisation de l'invention et de fabriquer les assemblages finaux de la figure 8 ;
- la figure 2 est une représentation schématique de l'installation et du procédé illustrés sur la figure 1 ;
- les figures 3 et 4 sont des schémas de moyens de fractionnement et de réassemblage de l'installation de la figure 1 ;
- la figure 5 est une vue en coupe perpendiculaire à l'axe de l'assemblage (supposé rectiligne et au repos) des premier et deuxième assemblages transitoires du procédé illustré sur les figures 1 et 2;
- la figure 6 est une vue en coupe perpendiculaire à l'axe de l'assemblage (supposé rectiligne et au repos) des premier assemblages fractionnés AF11 et AF21 issus des premier et deuxième assemblages transitoires de la figure 5;
- la figure 7 est une vue en coupe perpendiculaire à l'axe de l'assemblage (supposé rectiligne et au repos) d'ensembles fractionnés issus des premier et deuxième assemblages transitoires de la figure 5;
- la figure 8 est une vue en coupe perpendiculaire à l'axe de l'assemblage (supposé rectiligne et au repos) des premier, deuxième et troisième assemblages finaux;
- les figures 9 à 17 sont des représentations analogues à celle de la figure 2 d'une installation et d'un procédé selon d'autres modes de réalisation de l'invention.

### INSTALLATION ET PROCEDE SELON UN PREMIER MODE DE REALISATION DE L'INVENTION

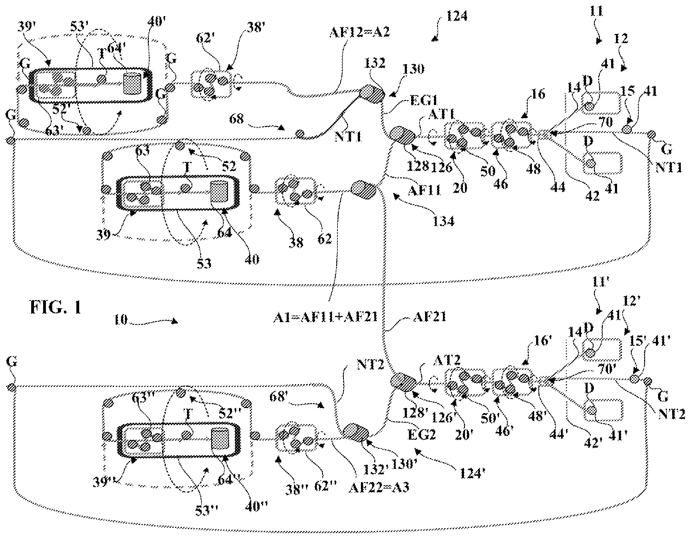

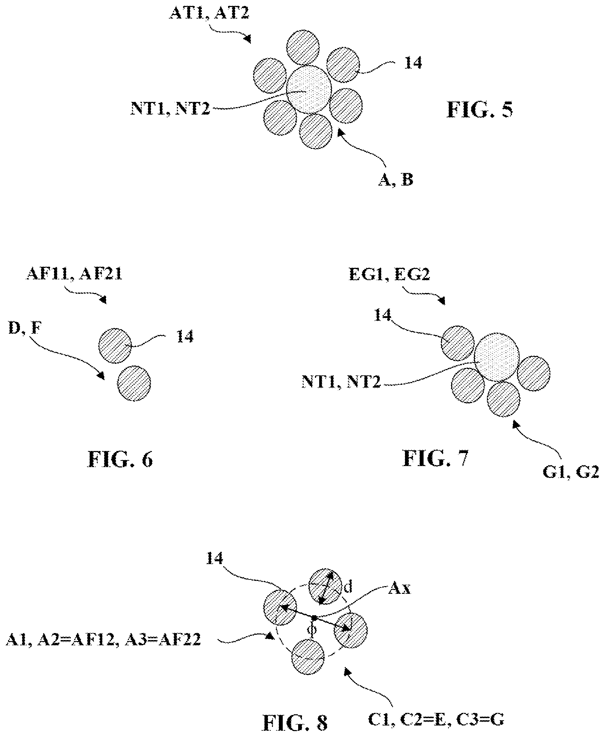

On a représenté sur la figure 1 une installation de fabrication de premier, deuxième et troisième assemblages finaux respectivement désignés par les références A1, A2, A3 comprenant au moins une couche et comprenant ici respectivement une couche C1, C2, C3 constituée respectivement de C1'>1, C2'>1, C3'>1 éléments filaires métalliques 14 enroulés en hélice. En l'espèce, chaque premier, deuxième et troisième assemblage final A1, A2, A3, représenté sur la figure 8, est constitué de chaque couche C1, C2, C3 avec C1'=C2'=C3'=4. Ainsi, chaque assemblage final A1, A2, A3 est constitué de l'unique couche C1, C2, C3, autrement dit chaque assemblage final A1, A2, A3 ne comprend pas d'autre élément filaire métallique que ceux de chaque couche C1, C2, C3. Chaque assemblage final A1, A2, A3 présente un axe principal Ax s'étendant sensiblement parallèlement à la direction selon laquelle chaque assemblage final A1, A2, A3 s'étend selon sa plus grande longueur. Chaque élément filaire métallique 14 de chaque couche C1, C2, C3 décrit, lorsque chaque assemblage final A1, A2, A3, s'étend selon une direction sensiblement rectiligne, une trajectoire en forme d'hélice autour de l'axe principal Ax sensiblement parallèle à la direction sensiblement rectiligne, de sorte que, dans un plan de coupe sensiblement perpendiculaire à l'axe principal Ax, la distance entre le centre de chaque élément filaire métallique 14 de chaque couche C1, C2, C3 et l'axe principal Ax est sensiblement constante et égale pour tous les éléments filaires métalliques 14 de chaque couche C1, C2, C3. Cette distance constante entre le centre de chaque élément filaire métallique 14 de chaque couche C1, C2, C3 et l'axe principal Ax est égale à la moitié du diamètre d'hélice de chaque élément filaire métallique de chaque assemblage final A1, A2, A3.

L'installation est désignée par la référence générale 10. L'installation 10 comprend tout d'abord des moyens 11, 11' de fourniture respectivement de premier et deuxième assemblages transitoires AT1, AT2 comprenant chacun au moins une couche et comprenant ici respectivement une couche A, B constituée respectivement de A'>1, B'>1 éléments filaires métalliques 14 enroulés en hélice autour respectivement d'un premier et deuxième noyau transitoire NT1, NT2. En l'espèce, chaque premier et deuxième assemblage transitoire AT1, AT2 illustré sur la figure 5 comprend respectivement chaque couche A, B et chaque noyau transitoire NT1, NT2, les A', B' éléments filaires métalliques 14 étant enroulés en hélice respectivement autour de chaque premier et deuxième noyau transitoire NT1, NT2. Ici, chaque premier et deuxième assemblage transitoire AT1, AT2 est constitué respectivement de la couche A, B et de chaque premier et deuxième noyau transitoire NT1, NT2. Avantageusement, A' va de 2 à 10 et B' va de 2 à 10. Ici, A'=B'=6.

Chaque élément filaire métallique 14 comprend, ici est constitué d'un unique monofilament élémentaire métallique de section circulaire, ici en acier au carbone, présentant un diamètre d allant de 0,05 mm à 0,50 mm, de préférence de 0,10 mm à 0,48 mm et plus préférentiellement de 0,15 mm à 0,45 mm et ici d=0,32 mm. Le noyau transitoire est ici un élément filaire textile, plus particulièrement est ici un brin textile multifilamentaire en polyester présentant un titre de 334 tex et de diamètre égal à 0,60 mm.

Les moyens 11, 11' de fourniture comprennent respectivement des moyens 12, 12' d'alimentation des A', B' éléments filaires métalliques 14 et des moyens d'alimentation 15, 15' respectivement de chaque premier et deuxième noyau transitoire NT1, NT2. Les moyens de fourniture 11, 11' comprennent également respectivement des moyens 16, 16' d'assemblage par retordage des A', B' éléments filaires métalliques 14 ensemble en respectivement les couche A, B d'éléments filaires métalliques 14 autour de chaque premier et deuxième noyau transitoire NT1, NT2 pour former chaque premier et deuxième assemblage transitoire AT1, AT2. En outre, les moyens de fourniture 11, 11' comprennent des moyens 20, 20' d'équilibrage de chaque premier et deuxième assemblage transitoire AT1, AT2. En sortie des moyens 20, 20', chaque élément filaire métallique 14 de chaque premier et deuxième assemblage transitoire AT1, AT2 est ici assemblé à un pas transitoire égal à 5 mm. Le diamètre d'hélice transitoire de chaque élément filaire métallique 14 de chaque premier et deuxième assemblage transitoire AT1, AT2 est ici sensiblement égal à 0,92 mm.

En aval des moyens de fourniture 11, 11' en considérant le sens de défilement des éléments filaires métalliques 14, l'installation 10 comprend des moyens 124, 124' de séparation respectivement de chaque premier et deuxième assemblage transitoire AT1, AT2. Les moyens de séparation 124 sont agencés de façon à permettre une séparation du premier assemblage transitoire AT1 entre un premier assemblage fractionné AF11, un deuxième assemblage fractionné AF12 et le premier noyau transitoire NT1 ou un ou plusieurs ensembles comprenant le premier noyau transitoire NT1, ici le premier noyau transitoire NT1. Les moyens de séparation 124' sont agencés de façon à permettre une séparation du deuxième assemblage transitoire AT2 entre un premier assemblage fractionné AF21, un deuxième assemblage fractionné AF22 et le deuxième noyau transitoire NT2 ou un ou plusieurs ensembles comprenant le deuxième noyau transitoire NT2, ici le deuxième noyau transitoire NT2.

Le premier assemblage fractionné AF11, ici identique au premier assemblage fractionné AF21, est représenté sur la figure 6. Chaque premier assemblage fractionné AF11, AF21 comprend au moins respectivement une couche D, F constituée de D'≥1, F'≥1 élément(s) filaire(s) métallique(s) 14 enroulé(s) en hélice. Le ou les D' élément(s) filaire(s) métallique(s) 14 sont issu(s) de la couche A constituée de A'>1 éléments filaires métalliques 14 du premier assemblage transitoire AT1. Le ou les F' élément(s) filaire(s) métallique(s) 14 sont issu(s) de la couche B constituée de B'>1 éléments filaires métalliques 14 du deuxième assemblage transitoire AT2. En l'espèce, chaque premier assemblage fractionné AF11, AF21 est constitué respectivement de la couche D, F constituée de D'=F'=2 éléments filaires métalliques 14 enroulés en hélice.

Le deuxième assemblage fractionné AF12, ici identique au deuxième assemblage fractionné AF22, est représenté sur la figure 8. Chaque deuxième assemblage fractionné AF12, AF22 comprend au moins respectivement une couche E, G constituée de E'>1, G'>1 éléments filaires métalliques 14 enroulés en hélice. Les E' éléments filaires métalliques 14 sont issus de la couche A constituée de A'>1 éléments filaires métalliques 14 du premier assemblage transitoire AT1 et les G' éléments filaires métalliques 14 sont issus de la couche B' constituée de B'>1 éléments filaires métalliques 14 du deuxième assemblage transitoire AT2. En l'espèce, chaque deuxième assemblage fractionné AF12, AF22 est constitué respectivement de la couche E, G constituée de E'=G'=4 éléments filaires métalliques 14 enroulés en hélice. Chaque deuxième assemblage fractionné AF12, AF22 forme respectivement chaque deuxième et troisième assemblage final A2, A3.

En aval des moyens de fourniture 11, les moyens de séparation 124 du premier assemblage transitoire AT1 comprennent des moyens 126 de séparation du premier assemblage transitoire AT1 entre un ensemble fractionné EG1 et le premier assemblage fractionné AF11. En l'espèce, les moyens de séparation 126 comprennent des moyens 128 de fractionnement du premier assemblage transitoire AT1 en l'ensemble fractionné EG1 et le premier assemblage fractionné AF11.

L'ensemble fractionné EG1 illustré sur la figure 7 comprend une couche G1 constituée de G1'≥1 élément(s) filaire(s) métallique(s) 14 enroulé(s) en hélice autour du premier noyau transitoire NT1. Le ou les G1' élément(s) filaire(s) métallique(s) 14 sont issus de la couche A constituée de A'>1 éléments filaires métalliques 14 du premier assemblage transitoire AT1. L'ensemble fractionné EG1 comprend ici la couche G1 et le premier noyau transitoire NT1, le ou les G1'≥1 élément(s) filaire(s) métallique(s) 14 étant enroulé(s) en hélice autour du premier noyau transitoire NT1. En l'espèce, l'ensemble fractionné EG1 est constitué de la couche G1 avec G1'=4 et du premier noyau transitoire NT1, les G1'=4 éléments filaires métalliques 14 étant enroulés en hélice autour du premier noyau transitoire NT1.

Les moyens de séparation 124 du premier assemblage transitoire AT1 comprennent également des moyens 130 de séparation de l'ensemble fractionné EG1 entre le deuxième assemblage fractionné AF12 formant le deuxième assemblage final A2 et le premier noyau transitoire NT1. En l'espèce, les moyens de séparation 130 comprennent des moyens 132 de fractionnement de l'ensemble fractionné EG1 en le deuxième assemblage fractionné AF12 formant le deuxième assemblage final A2 et le premier noyau transitoire NT1. On notera que les moyens 130 de séparation sont agencés de façon à ce que les E'>1 éléments filaires métalliques soient issus de la couche G1 constituée des G1'>1 éléments filaires métalliques de l'ensemble fractionné EG1.

On notera que les moyens 126 de séparation du premier assemblage transitoire AT1 entre l'ensemble fractionné EG1 et le premier assemblage fractionné AF11 sont agencés en amont des moyens 130 de séparation de l'ensemble fractionné EG1 entre le deuxième assemblage fractionné AF12 formant le deuxième assemblage final A2 et le premier noyau transitoire NT1.

En aval des moyens de fourniture 11', les moyens de séparation 124' du deuxième assemblage transitoire AT2 comprennent des moyens 126' de séparation du deuxième assemblage transitoire AT2 entre un ensemble fractionné EG2 et le premier assemblage fractionné AF21. En l'espèce, les moyens de séparation 126' comprennent des moyens 128' de fractionnement du deuxième assemblage transitoire AT2 en l'ensemble fractionné EG2 et le premier assemblage fractionné AF21.

L'ensemble fractionné EG2 est identique à l'ensemble fractionné EG1 et est illustré sur la figure 7. L'ensemble fractionné EG2 comprend une couche G2 constituée de G2'≥1 élément(s) filaire(s) métallique(s) 14 enroulé(s) en hélice autour du deuxième noyau transitoire NT2. Le ou les G2' élément(s) filaire(s) métallique(s) 14 sont issus de la couche B constituée de B'>1 éléments filaires métalliques 14 du deuxième assemblage transitoire AT2. L'ensemble fractionné EG2 comprend ici la couche G2 et le deuxième noyau transitoire NT2, le ou les G2'≥1 élément(s) filaire(s) métallique(s) 14 étant enroulé(s) en hélice autour du deuxième noyau transitoire NT2. En l'espèce, l'ensemble fractionné EG2 est constitué de la couche G2 avec G2'=4 et du deuxième noyau transitoire NT2, les G2'=4 éléments filaires métalliques 14 étant enroulés en hélice autour du deuxième noyau transitoire NT2.

Les moyens de séparation 124' du deuxième assemblage transitoire AT2 comprennent également des moyens 130' de séparation de l'ensemble fractionné EG2 entre le deuxième assemblage fractionné AF22 formant le troisième assemblage final A3 et le deuxième noyau transitoire NT2. En l'espèce, les moyens de séparation 130' comprennent des moyens 132' de fractionnement de l'ensemble fractionné EG2 en le deuxième assemblage fractionné AF22 formant le troisième assemblage final A3 et le deuxième noyau transitoire NT2. Les moyens 130' de séparation sont agencés de façon à ce que les G'>1 éléments filaires métalliques soient issus de la couche G2 constituée des G2'>1 éléments filaires métalliques de l'ensemble fractionné EG2.

On notera que les moyens 126' de séparation du deuxième assemblage transitoire AT2 entre l'ensemble fractionné EG2 et le deuxième assemblage fractionné AF21 sont agencés en amont des moyens 130' de séparation de l'ensemble fractionné EG2 entre le deuxième assemblage fractionné AF22 formant le troisième assemblage final A3 et le deuxième noyau transitoire NT2.

En aval des moyens de séparation 124, 124', 126, 126', 130, 130', l'installation 10 comprend des moyens 134 de réassemblage du premier assemblage fractionné AF11 avec le premier assemblage fractionné AF21 pour former, le premier assemblage final A1 et ici la couche C1 constituée de C1' éléments filaires métalliques 14 enroulés en hélice.

Ainsi, dans ce premier mode de réalisation, les moyens 124 de séparation du premier assemblage transitoire AT1, les moyens 124' de séparation du deuxième assemblage transitoire AT2 et les moyens 134 de réassemblage du premier assemblage fractionné AF11 avec le premier assemblage fractionné AF21 sont agencés de sorte que A'=D'+E' et B'=F'+G'.

De plus, afin d'obtenir des premier, deuxième et troisième assemblages finaux A1, A2, A3 présentant les mêmes caractéristiques géométriques, les moyens de fourniture 11, 11', les moyens de séparation 124, 124' et les moyens de réassemblage 134 sont agencés de façon à permettre la mise en oeuvre d'un procédé tel que décrit ci-dessous dans lequel D'+F'=E'=G'=C1'=C2'=C3' et dans lequel tous les C1', C2', C3' éléments filaires métalliques 14 présentent un même diamètre d=0,32 mm, sont enroulés en hélice selon un même pas p=7,8 mm et présentent un même diamètre d'hélice φ=0,95 mm.

En l'espèce, en raison du retour élastique de chaque élément filaire métallique 14 en réponse à l'étape de retordage, le pas de chaque élément filaire métallique 14 de chaque premier et deuxième assemblage transitoire AT1, AT2 passe du pas transitoire égal à 5 mm au pas p égal ici à 7,8 mm. L'homme du métier saura déterminer quel pas transitoire appliquer afin d'obtenir le pas p désiré.

Le diamètre d'hélice φ de chaque élément filaire métallique 14 dans chaque premier, deuxième et troisième assemblage final est ici sensiblement supérieur au diamètre d'hélice transitoire de chaque élément filaire 14 dans chaque premier et deuxième assemblage transitoire AT1, AT2 et ce en raison du retour élastique. Le diamètre d'hélice φ de chaque élément filaire métallique 14 dans chaque premier, deuxième et troisième assemblage final est d'autant plus supérieur au diamètre d'hélice transitoire de chaque élément filaire 14 dans chaque premier et deuxième assemblage transitoire que le taux de retordage est important. L'homme du métier saura déterminer quel diamètre d'hélice transitoire appliquer afin d'obtenir le diamètre d'hélice φ désiré, et ce en fonction du taux de retordage et de la nature du noyau transitoire.

En aval des moyens de réassemblage 134 en considérant le sens de défilement des éléments filaires métalliques 14, l'installation 10 comprend des moyens 38, 38', 38" d'entretien de la rotation respectivement du premier assemblage final A1, du deuxième assemblage final A2 et du troisième assemblage final A3 autour de leur direction de défilement.

En aval des moyens d'entretien de la rotation 38, 38', 38" en considérant le sens de défilement des éléments filaires métalliques 14, l'installation 10 comprend des moyens d'équilibrage 39, 39', 39" respectivement du premier assemblage final A1, du deuxième assemblage final A2 et du troisième assemblage final A3.

En aval des moyens d'équilibrage 39, 39', 39" en considérant le sens de défilement des éléments filaires métalliques 14, l'installation 10 comprend des moyens 40, 40', 40" de stockage respectivement du premier assemblage final A1, du deuxième assemblage final A2 et du troisième assemblage final A3.

L'installation 10 comprend également des moyens de guidage G, de déroulage D et de traction T des éléments filaires, des ensembles et des assemblages classiquement utilisés par l'homme du métier, par exemple des poulies et des cabestans.

Les moyens d'alimentation 12, 12' comprennent ici respectivement six bobines 41, 41' de stockage des A', B' éléments filaires métalliques 14. Les moyens d'alimentation 15, 15' comprennent respectivement une bobine 41, 41' de stockage de chaque premier et deuxième noyau transitoire NT1, NT2. Sur la figure 1, seules deux des quatre bobines 41 de stockage des A', B' éléments filaires métalliques 14 sont représentées à des fins de clarté de la figure.

Les moyens d'assemblage 16, 16' comprennent respectivement des répartiteurs 42, 42' et des grains d'assemblage 44, 44'. Les moyens d'assemblage 16, 16' comprennent des moyens 46, 46' de retordage des A' et B' éléments filaires 14 et de chaque premier et deuxième noyau transitoire NT1, NT2. Les moyens de retordage 46, 46' comprennent respectivement un retordeur 48, 48', également appelé communément « twister » par l'homme du métier, par exemple un twister à quatre poulies. En aval de ces moyens de retordage 46, 46', les moyens d'équilibrage 20, 20' comprennent respectivement un twister 50, 50', par exemple un twister à quatre poulies. Enfin, en aval de chaque retordeur 48, 48', les moyens d'assemblage 16, 16' comprennent respectivement une lyre 52, 52', 52" ainsi qu'une nacelle 53, 53', 53" portant les moyens d'équilibrage 39, 39', 39" final et les moyens 40, 40', 40" de stockage. Chaque lyre 52, 52', 52" et chaque nacelle 53, 53', 53" sont montées mobiles en rotation de façon à conserver le pas d'assemblage de chaque assemblage final A1, A2, A3.

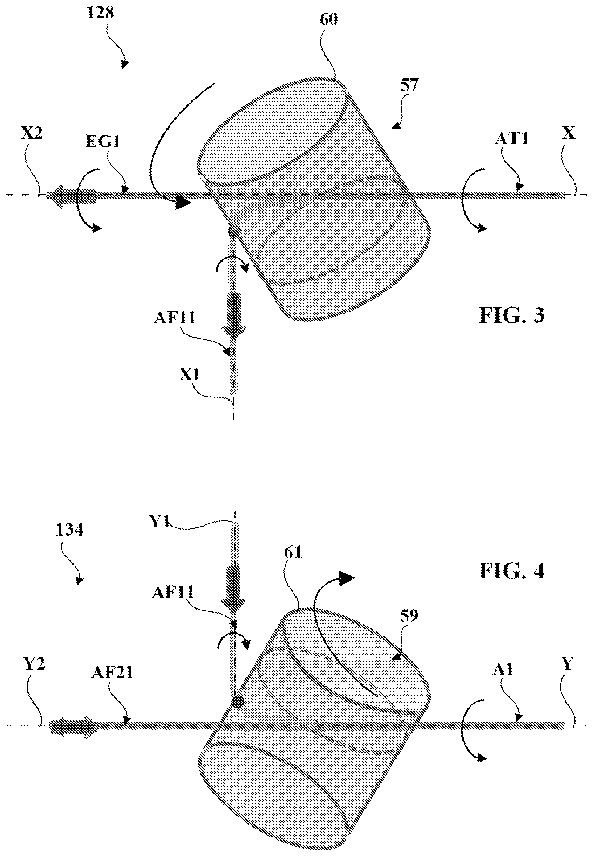

On a représenté sur la figure 3 les moyens de fractionnement 128. Le premier assemblage transitoire AT1 défile selon une direction de défilement amont X. Après le passage dans les moyens de fractionnement 128, l'ensemble fractionné EG1 défile selon une direction de défilement aval X2 et le premier assemblage fractionné AF11 selon une direction aval X1. Les moyens de fractionnement 128 comprennent des moyens 57 de guidage permettant d'une part, la translation de l'ensemble fractionné EG1 et du premier assemblage fractionné AF11 respectivement selon les directions avals X2, X1 et d'autre part, la rotation de l'ensemble fractionné EG1 et du premier assemblage fractionné AF11 respectivement autour des directions avals X2, X1. En l'espèce, les moyens 57 comprennent un rouleau 60 rotatif incliné. Les moyens de fractionnement 128', 132 et 132' sont analogues aux moyens de fractionnement 128 décrits ci-dessus. Lors du procédé, le premier assemblage fractionné AF11 entre en contact avec le rouleau 60 en aval du point de fractionnement entre l'ensemble fractionné EG1 et le premier assemblage fractionné AF11.

On a représenté sur la figure 4 les moyens de réassemblage 134. Le premier assemblage fractionné AF11 défile selon une direction de défilement amont Y1. Le premier assemblage fractionné AF21 défile selon une direction de défilement amont Y2. Le premier assemblage final A1 défile selon une direction de défilement aval Y. Les moyens de réassemblage 134 comprennent des moyens 59 de guidage permettant d'une part, la translation des premiers assemblages fractionnés AF11, AF21 respectivement selon les directions avals Y1, Y2 et d'autre part, la rotation des premiers assemblages fractionnés AF11, AF21 respectivement autour des directions avals Y1, Y2. En l'espèce, les moyens 59 comprennent un rouleau 61 rotatif incliné. Lors du procédé, le premier assemblage fractionné AF11 entre en contact avec le rouleau 61 en amont du point de réassemblage des premiers assemblages fractionnés AF11, AF21 entre eux.

Les moyens 38, 38', 38" d'entretien de la rotation comprennent des twisters 62, 62', 62" par exemple des twisters à quatre poulies permettant d'entretenir la rotation de chaque premier, deuxième et troisième assemblage final A1, A2, A3 respectivement autour de la direction aval. Les moyens d'équilibrage 39, 39', 29" final comprennent également des twister 63, 63', 63" par exemple des twisters à quatre poulies. Les moyens de stockage 40, 40', 40" comprennent ici des bobines 64, 64', 64" de stockage respectivement de chaque premier, deuxième et troisième assemblage final.

Afin de recycler chaque premier et deuxième noyau transitoire NT1, NT2, l'installation 10 comprend des moyens de guidage G de chaque premier et deuxième noyau transitoire NT1, NT2 entre, d'une part, une sortie 68, 68' des moyens de séparation 124, 124', ici en aval des moyens de fractionnement 132, 132' et d'autre part, une entrée 70, 70' dans les moyens d'assemblage 16, 16'.

On notera que l'installation 10 est dépourvue de moyens de préformation, en particulier des moyens de préformation individuelle des éléments filaires 14 agencés en amont des moyens d'assemblage 16, 16'.

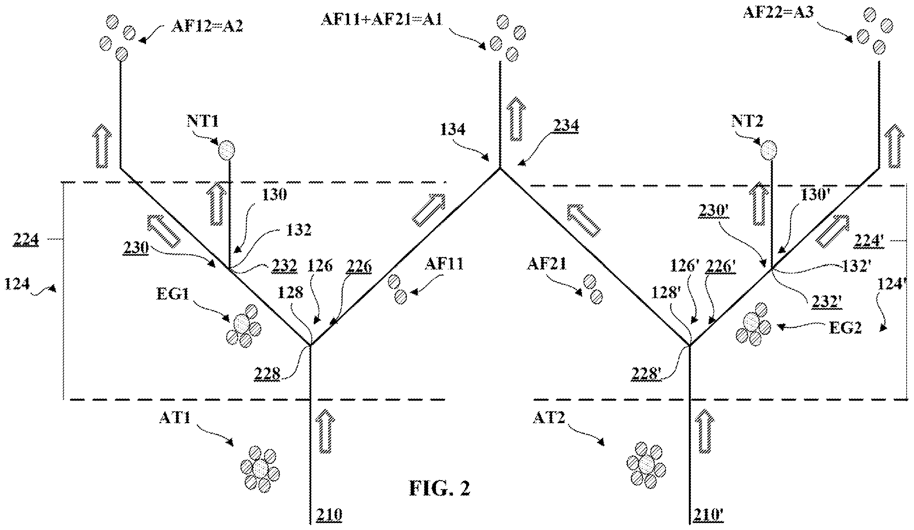

Les différents moyens 124, 124', 126, 126', 128, 128', 130, 130', 132, 132', 134 ainsi que les différents assemblages et ensembles A1, A2, A3, AF11, AF12, AF21, AF22, AT1, AT2, NT1, NT2, EG1, EG2 sont représentés de façon schématique sur la figure 2 sur laquelle les flèches indiquent le sens de défilement de ces assemblages et ensembles d'aval vers l'amont.

On va maintenant décrire le procédé selon le premier mode de réalisation permettant de mettre en oeuvre l'installation 10 décrite ci-dessus. Le procédé permet de fabriquer les assemblages finaux A1, A2, A3 décrits ci-dessus.

Tout d'abord, on déroule les éléments filaires 14 et chaque premier et deuxième noyau transitoire NT1, NT2 depuis les moyens d'alimentation 12, 12', 15 et 15', ici les bobines 41, 41'.

Puis, le procédé comprend deux étapes 210, 210' de fourniture respectivement de chaque premier et deuxième assemblage transitoire AT1, AT2 comprenant d'une part une étape d'assemblage par retordage des A', B' éléments filaires métalliques 14 autour respectivement de chaque premier et deuxième noyau transitoire NT1, NT2 et d'autre part, une étape d'équilibrage de chaque premier et deuxième assemblage transitoire AT1, AT2 réalisée grâce au twister 50, 50'.

Le procédé comprend une étape 224 de séparation du premier assemblage transitoire NT1 entre le premier assemblage fractionné AF11, le deuxième assemblage fractionné AF12 formant le deuxième assemblage final A2 et le premier noyau transitoire NT1 ou un ou plusieurs ensembles comprenant le premier noyau transitoire NT1, ici le premier noyau transitoire NT1. Le procédé comprend également une étape 224' de séparation du deuxième assemblage transitoire NT2 entre le premier assemblage fractionné AF21, le deuxième assemblage fractionné AF22 formant le troisième assemblage final A3 et le deuxième noyau transitoire NT2 ou un ou plusieurs ensembles comprenant le deuxième noyau transitoire NT2, ici le deuxième noyau transitoire NT2.

En aval de l'étape de fourniture 210, l'étape de séparation 224 du premier assemblage transitoire NT1 comprend une étape 226 de séparation du premier assemblage transitoire AT1 entre le premier assemblage fractionné AF11 et l'ensemble fractionné EG1. En l'espèce, l'étape de séparation 226 comprend une étape 228 de fractionnement du premier assemblage transitoire AT1 en l'ensemble fractionné EG1 et le premier assemblage fractionné AF11.

L'étape de séparation 224 du premier assemblage transitoire AT1 comprend également une étape 230 de séparation de l'ensemble fractionné EG1 entre le deuxième assemblage fractionné AF12 formant le deuxième assemblage final A2 et le premier noyau transitoire NT1. En l'espèce, l'étape de séparation 230 comprend une étape 232 de fractionnement de l'ensemble fractionné EG1 en le deuxième assemblage fractionné AF12 formant le deuxième assemblage final A2 et le premier noyau transitoire NT1. A l'issue de cette étape 230 de séparation, les E'>1 éléments filaires métalliques sont issus de la couche G1 constituée des G1'>1 éléments filaires métalliques de l'ensemble fractionné EG1.

On notera que l'étape 226 de séparation du premier assemblage transitoire AT1 entre l'ensemble fractionné EG1 et le premier assemblage fractionné AF11 est réalisée en amont de l'étape 230 de séparation de l'ensemble fractionné EG1 entre le deuxième assemblage fractionné AF12 formant le deuxième assemblage final A2 et le premier noyau transitoire NT1.

En aval de l'étape de fourniture 210', l'étape de séparation 224' du deuxième assemblage transitoire AT2 comprend une étape 226' de séparation du deuxième assemblage transitoire AT2 entre un ensemble fractionné EG2 et le premier assemblage fractionné AF21. En l'espèce, l'étape de séparation 226' comprend une étape 228' de fractionnement du deuxième assemblage transitoire AT2 en l'ensemble fractionné EG2 et le premier assemblage fractionné AF21.

L'étape de séparation 224' du deuxième assemblage transitoire AT2 comprend également une étape 230' de séparation de l'ensemble fractionné EG2 entre le deuxième assemblage fractionné AF22 formant le troisième assemblage final A3 et le deuxième noyau transitoire NT2. En l'espèce, l'étape de séparation 230' comprend une étape 232' de fractionnement de l'ensemble fractionné EG2 en le deuxième assemblage fractionné AF22 formant le troisième assemblage final A3 et le deuxième noyau transitoire NT2. A l'issue de cette étape 230' de séparation, les G'>1 éléments filaires métalliques sont issus de la couche G2 constituée des G2'>1 éléments filaires métalliques de l'ensemble fractionné EG2.

On notera que l'étape 226' de séparation du deuxième assemblage transitoire AT2 entre l'ensemble fractionné EG2 et le deuxième assemblage fractionné AF21 est réalisée en amont de l'étape 230' de séparation de l'ensemble fractionné EG2 entre le deuxième assemblage fractionné AF22 formant le troisième assemblage final A3 et le deuxième noyau transitoire NT2.

En aval des étapes 224, 224', 226, 226', 228, 228', 230, 230', le procédé comprend une étape 234 de réassemblage du premier assemblage fractionné AF11 avec le premier assemblage fractionné AF21 pour former la couche C1 constituée de C1' éléments filaires métalliques 14 enroulés en hélice du premier assemblage final A1. Ainsi, l'étape de réassemblage 234 permet de réassembler les premiers assemblages fractionnés AF11 , AF21 pour former le premier assemblage final A1.

Ainsi, dans ce premier mode de réalisation, l'étape 224 de séparation du premier assemblage transitoire AT1, l'étape 224' de séparation du deuxième assemblage transitoire AT2 et l'étape 234 de réassemblage du premier assemblage fractionné AF11 avec le premier assemblage fractionné AF21 sont réalisées de sorte que A'=D'+E' et B'=F'+G'.

De plus, afin d'obtenir des premier, deuxième et troisième assemblage finaux A1, A2, A3 présentant les mêmes caractéristiques géométriques, les étapes de fourniture 210, 210', les étapes de séparation 224, 224' et l'étape de réassemblage 234 sont réalisées sorte que D'+F'=E'=G'=C1'=C2'=C3' et de sorte que tous les C1', C2', C3' éléments filaires métalliques 14 présentent un même diamètre d, sont enroulés en hélice selon un même pas p et présentent un même diamètre d'hélice φ.

En outre, on notera que le deuxième assemblage fractionné AF12 formant le deuxième assemblage final A2, on a E'=C2'. On a également A'=D'+G1' et G1'=E'. Le deuxième assemblage fractionné AF22 formant le troisième assemblage final A3, on a G'=C3'. On a également B'=F'+G2' et G'=E'.

On notera enfin que, afin de faciliter la sortie du premier noyau transitoire NT1, E'=1 ou 2 dans les cas où A'=4 ou A'=5 et E' ≤ 0,75 x A' et de préférence E' ≤ 0,70 x A' dans les cas où A'≥6. ici A'=6 et E'=4<0,7x6=4,2<0,75x6=4,5. De façon analogue, afin de faciliter la sortie du deuxième noyau transitoire NT2, G'=1 ou 2 dans les cas où B'=4 ou B'=5 et G' ≤ 0,75 x B' et de préférence G' ≤ 0,70 x B' dans les cas où B'≥6. Ici B'=6 et G'=4<0,7x6=4.2<0,75x6=4,5.

En outre, le procédé comprend des étapes d'entretien de la rotation de chaque premier, deuxième et troisième assemblage final A1, A2, A3 autour de leurs directions de défilement respectives. On réalise ces étapes d'entretien en aval des étapes de séparation 224, 224' grâce aux moyens 38, 38', 38".

On réalise une étape d'équilibrage final grâce aux moyens 39, 39', 39".

Enfin, on stocke chaque premier, deuxième et troisième assemblage final A1, A2, A3 dans les bobines de stockage 64, 64', 64".

Concernant chaque premier et deuxième noyau transitoire NT1, NT2, le procédé comprend une étape de recyclage de chaque premier et deuxième noyau transitoire NT1, NT2. Durant cette étape de recyclage, on récupère chaque premier et deuxième noyau transitoire NT1, NT2 en aval de chaque étape de séparation 224, 224', ici en aval de chaque étape de séparation 232, 232', et on introduit chaque premier et deuxième noyau transitoire NT1, NT2 récupéré précédemment en amont de chaque étape d'assemblage. Cette étape de recyclage est continue.

On notera que le procédé ainsi décrit est dépourvu d'étapes de préformation individuelle de chacun des éléments filaires métalliques 14.

### INSTALLATION ET PROCEDE SELON UN DEUXIEME MODE DE REALISATION DE L'INVENTION

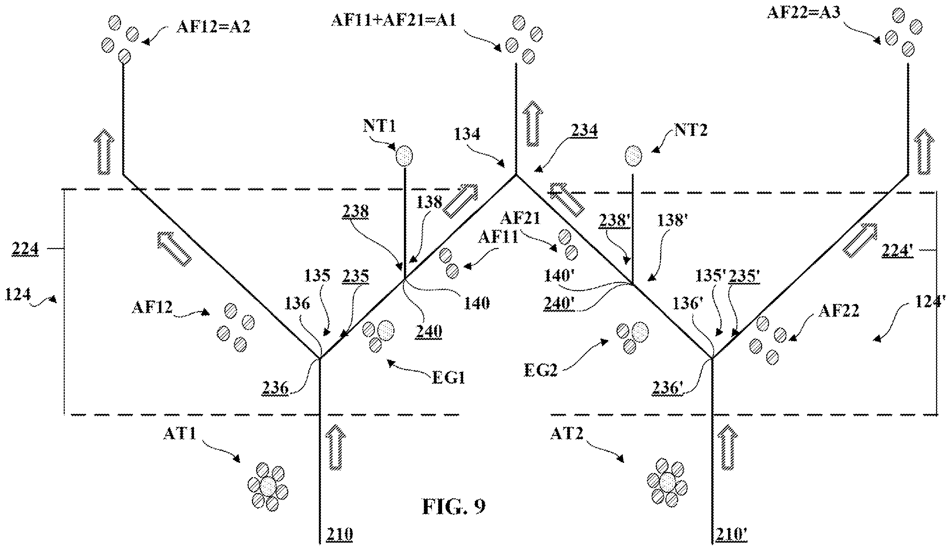

On va maintenant décrire une installation et un procédé selon le deuxième mode de réalisation de l'invention en référence à la figure 9. Les éléments analogues à ceux du premier mode de réalisation sont désignés par des références identiques.

A la différence du premier mode de réalisation, les moyens 124 de séparation du premier assemblage transitoire AT1 comprennent des moyens 135 de séparation du premier assemblage transitoire AT1 entre le deuxième assemblage fractionné AF12 formant le deuxième assemblage final A2 et l'ensemble fractionné EG1 dans lequel G1'=2. En l'espèce, les moyens de séparation 135 comprennent des moyens 136 de fractionnement du premier assemblage transitoire AT1 en le deuxième assemblage fractionné AF12 formant le deuxième assemblage final A2 et l'ensemble fractionné EG1. De façon analogue, l'étape 224 de séparation du premier assemblage transitoire AT1 comprend une étape 235 de séparation du premier assemblage transitoire AT1 entre le deuxième assemblage fractionné AF12 formant le deuxième assemblage final A2 et l'ensemble fractionné EG1. En l'espèce, l'étape de séparation 235 comprend une étape 236 de fractionnement du premier assemblage transitoire AT1 en le deuxième assemblage fractionné AF12 formant le deuxième assemblage final A2 et l'ensemble fractionné EG1.

A la différence du premier mode de réalisation, les moyens 124 de séparation du premier assemblage transitoire AT1 comprennent également des moyens 138 de séparation de l'ensemble fractionné EG1 entre le premier assemblage fractionné AF11 et le premier noyau transitoire NT1. En l'espèce, les moyens de séparation 138 comprennent des moyens 140 de fractionnement de l'ensemble fractionné EG1 entre le premier assemblage fractionné AF11 et le premier noyau transitoire NT1. Les moyens 138 de séparation sont agencés de façon à ce que les D' éléments filaires métalliques soient issus de la couche G1 constituée des G1' éléments filaires métalliques de l'ensemble fractionné EG1. De façon analogue, l'étape 224 de séparation du premier assemblage transitoire AT1 comprend également une étape 238 de séparation de l'ensemble fractionné EG1 entre le premier assemblage fractionné AF11 et le premier noyau transitoire NT1. En l'espèce, l'étape de séparation 238 comprend une étape 240 de fractionnement de l'ensemble fractionné EG1 entre le premier assemblage fractionné AF11 et le premier noyau transitoire NT1. A l'issue de cette étape 238 de séparation, les D' éléments filaires métalliques sont issus de la couche G1 constituée des G1' éléments filaires métalliques de l'ensemble fractionné EG1.

On notera que les moyens 135 de séparation du premier assemblage transitoire AT1 entre le deuxième assemblage fractionné AF12 formant le deuxième assemblage final A2 et l'ensemble fractionné EG1 sont agencés en amont des moyens 138 de séparation de l'ensemble fractionné EG1 entre le premier assemblage fractionné AF11 et le premier noyau transitoire NT1. De façon analogue, on notera que l'étape 235 de séparation du premier assemblage transitoire AT1 entre le deuxième assemblage fractionné AF12 formant le deuxième assemblage final A2 et l'ensemble fractionné EG1 a lieu en amont de l'étape 238 de séparation de l'ensemble fractionné EG1 entre le premier assemblage fractionné AF11 et le premier noyau transitoire NT1.

On notera également que le deuxième assemblage fractionné AF12 formant le deuxième assemblage final, on a E'=C2'. On a également A'=E'+G1' et G1'=D'. Le deuxième assemblage fractionné AF12 formant le deuxième assemblage final, on a G'=C3'. On a également B'=G'+G2' et G2'=F'.

Les moyens et étapes 135', 136', 138', 140', 235', 236', 238', 240' ainsi que les caractéristiques des assemblages et ensembles EG2, EH2, ED2, AF21, AF22, NT2 se déduisent mutatis mutandis des moyens et étapes 135, 136, 138, 140, 235, 236, 238, 240 et des caractéristiques des assemblages et ensembles EG1, EH1, ED1, AF11, AF12, NT1 décrits précédemment. Les autres moyens et étapes se déduisent *mutatis mutandis* de ceux et celles du premier mode de réalisation.

### INSTALLATION ET PROCEDE SELON UN TROISIEME MODE DE REALISATION DE L'INVENTION

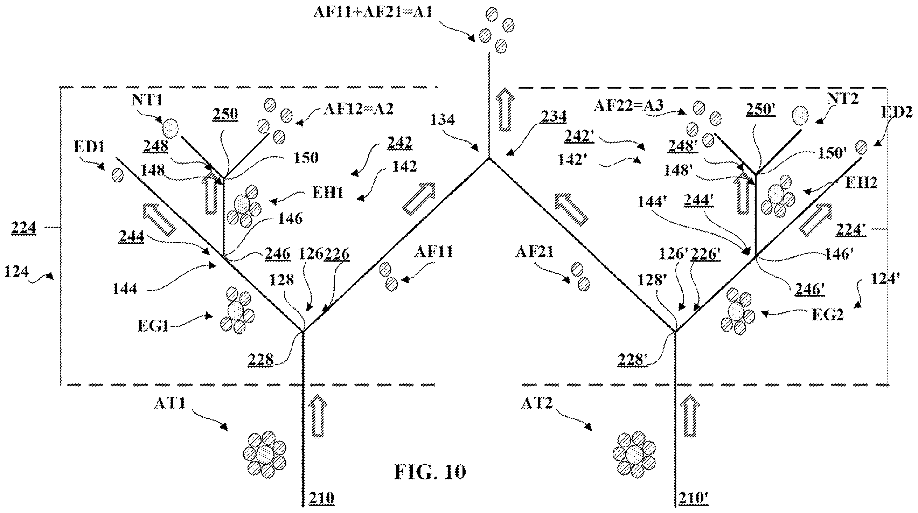

On va maintenant décrire une installation et un procédé selon le troisième mode de réalisation de l'invention en référence à la figure 10. Les éléments analogues à ceux des modes de réalisation précédents sont désignés par des références identiques.

A la différence du premier mode de réalisation, les moyens 124 de séparation du premier assemblage transitoire AT1, les moyens 124' de séparation du deuxième assemblage transitoire AT2 et les moyens 134 de réassemblage du premier assemblage fractionné AF11 avec le premier assemblage fractionné AF21 sont agencés de sorte que A'>D'+E' et B'>F'+G'. Ici, A'=B'=7. De façon analogue, l'étape 224 de séparation du premier assemblage transitoire AT1, l'étape de 224' de séparation du deuxième assemblage transitoire AT2, et l'étape 234 de réassemblage du premier assemblage fractionné AF11 avec le premier assemblage fractionné AF21 sont réalisées de sorte que A'>D'+E' et B'>F'+G'.

A la différence du premier mode de réalisation, les moyens 124 de séparation du premier assemblage transitoire AT1 comprennent des moyens 142 de séparation de l'ensemble fractionné EG1 entre le deuxième assemblage fractionné AF12 formant le deuxième assemblage final A2 et le premier noyau transitoire NT1. Les moyens 142 de séparation sont agencés de façon à ce que les E' éléments filaires métalliques soient issus de la couche G1 constituée des G1' éléments filaires métalliques de l'ensemble fractionné EG1. De façon analogue, l'étape 224 de séparation du premier assemblage transitoire AT1 comprend une étape 242 de séparation de l'ensemble fractionné EG1 entre le deuxième assemblage fractionné AF12 formant le deuxième assemblage final A2 et le premier noyau transitoire NT1. Ici, G1'=5. A l'issue de cette étape 242 de séparation, les D' éléments filaires métalliques sont issus de la couche G1 constituée des G1' éléments filaires métalliques de l'ensemble fractionné EG1.

Les moyens 142 de séparation de l'ensemble fractionné EG1 entre le deuxième assemblage fractionné AF12 et le premier noyau transitoire NT1 comprennent des moyens 144 de séparation de l'ensemble fractionné EG1 entre un ensemble précurseur EH1 et un ensemble dérivé ED1. En l'espèce, les moyens de séparation 144 comprennent des moyens 146 de fractionnement de l'ensemble fractionné EG1 en l'ensemble précurseur EH1 et l'ensemble dérivé ED1. De façon analogue, l'étape 242 de séparation de l'ensemble fractionné EG1 entre le deuxième assemblage fractionné AF12 et le premier noyau transitoire NT1 comprend une étape 244 de séparation de l'ensemble fractionné EG1 entre l'ensemble précurseur EH1 et l'ensemble dérivé ED1. En l'espèce, l'étape de séparation 244 comprend une étape 246 de fractionnement de l'ensemble fractionné EG1 en l'ensemble précurseur EH1 et l'ensemble dérivé ED1.

L'ensemble précurseur EH1 comprend une couche H1 constituée de H1'≥1 élément(s) filaire(s) métallique(s) 14 enroulé(s) en hélice autour du premier noyau transitoire NT1. Le ou les G1' élément(s) filaire(s) métallique(s) 14 sont issus de la couche G1 constituée de G1'>1 éléments filaires métalliques 14 de l'ensemble fractionné EG1. L'ensemble précurseur EH1 comprend ici la couche H1 et le premier noyau transitoire NT1, le ou les H1'≥1 élément(s) filaire(s) métallique(s) 14 étant enroulé(s) en hélice autour du premier noyau transitoire NT1. En l'espèce, l'ensemble précurseur EH1 est constitué de la couche H1 avec H1'=4 et du premier noyau transitoire NT1, les H1'≥1 éléments filaires métalliques 14 étant enroulés en hélice autour du premier noyau transitoire NT1.

L'ensemble dérivé ED1 comprend une couche I1 constituée de I1'≥1 élément(s) filaire(s) métallique(s) 14 enroulé(s) en hélice. Le ou les I1' élément(s) filaire(s) métallique(s) 14 sont issus de la couche G1 constituée de G1'>1 éléments filaires métalliques 14 de l'ensemble fractionné EG1. En l'espèce, l'ensemble dérivé ED1 est constitué de la couche I1 avec I1'=1, le I1'=1 élément filaire métallique 14 étant enroulé en hélice.

Les moyens 142 de séparation de l'ensemble fractionné EG1 entre le deuxième assemblage fractionné AF12 et le premier noyau transitoire NT1 comprennent des moyens 148 de séparation de l'ensemble précurseur EH1 entre le deuxième assemblage fractionné AF12 formant le deuxième assemblage final A2 et le premier noyau transitoire NT1. En l'espèce, les moyens de séparation 148 comprennent des moyens 150 de fractionnement de l'ensemble précurseur EH1 entre le deuxième assemblage fractionné AF12 formant le deuxième assemblage final A2 et le premier noyau transitoire NT1. Les moyens 148 de séparation sont agencés de façon à ce que les E' éléments filaires métalliques soient issus de la couche H1 constituée des H1' éléments filaires métalliques de l'ensemble précurseur EH1. De façon analogue, l'étape 242 de séparation de l'ensemble fractionné EG1 entre le deuxième assemblage fractionné AF12 et le premier noyau transitoire NT1 comprend une étape 248 de séparation de l'ensemble précurseur EH1 entre le deuxième assemblage fractionné AF12 formant le deuxième assemblage final A2 et le premier noyau transitoire NT1. En l'espèce, l'étape de séparation 248 comprend une étape 250 de fractionnement de l'ensemble précurseur EH1 en le deuxième assemblage fractionné AF12 formant le deuxième assemblage final A2 et le premier noyau transitoire NT1. A l'issue de cette étape 248 de séparation, les E' éléments filaires métalliques sont issus de la couche H1 constituée des H1' éléments filaires métalliques de l'ensemble précurseur EH1.

Les moyens 126 de séparation du premier assemblage transitoire AT1 entre le premier assemblage fractionné AF11 et l'ensemble fractionné EG1 sont agencés en amont des moyens 142 de séparation de l'ensemble fractionné EG1 entre le deuxième assemblage fractionné AF12 formant le deuxième assemblage final A2 et le premier noyau transitoire NT1. De façon analogue, l'étape 226 de séparation du premier assemblage transitoire AT1 entre le premier assemblage fractionné AF11 et l'ensemble fractionné EG1 a lieu en amont de l'étape 242 de séparation de l'ensemble fractionné EG1 entre le deuxième assemblage fractionné AF12 formant le deuxième assemblage final A2 et le premier noyau transitoire NT1.

Les moyens 144 de séparation de l'ensemble fractionné EG1 entre l'ensemble précurseur EH1 et l'ensemble dérivé ED1 sont agencés en amont des moyens 148 de séparation de l'ensemble précurseur EH1 entre le deuxième assemblage fractionné AF12 formant le deuxième assemblage final A2 et le premier noyau transitoire NT1. De façon analogue, l'étape 244 de séparation de l'ensemble fractionné EG1 entre l'ensemble précurseur EH1 et l'ensemble dérivé ED1 a lieu en amont de l'étape 248 de séparation de l'ensemble précurseur EH1 entre le deuxième assemblage fractionné AF12 formant le deuxième assemblage final A2 et le premier noyau transitoire NT1.

On notera que dans ce troisième mode de réalisation, G1'≥H1'+I1' et H1'≥E' et ici en G1'=H1'+I1' et H1'=E'. On a également A'≥D'+G1' et G1'≥E' et ici A'=D'+G1' et G1'>E'.

Les moyens et étapes 142', 242', 144', 244', 146', 246', 148', 248', 150', 250' ainsi que les caractéristiques des assemblages et ensembles EG2, EH2, ED2, AF21, AF22, NT2 se déduisent mutatis mutandis des moyens et étapes 142, 242, 144, 244, 146, 246, 148, 248, 150, 250 et des caractéristiques des assemblages et ensembles EG1, EH1, ED1, AF11, AF12, NT1 décrits précédemment. Les autres moyens et étapes se déduisent *mutatis mutandis* de ceux et celles des modes de réalisation précédents.

### INSTALLATION ET PROCEDE SELON UN QUATRIEME MODE DE REALISATION DE L'INVENTION

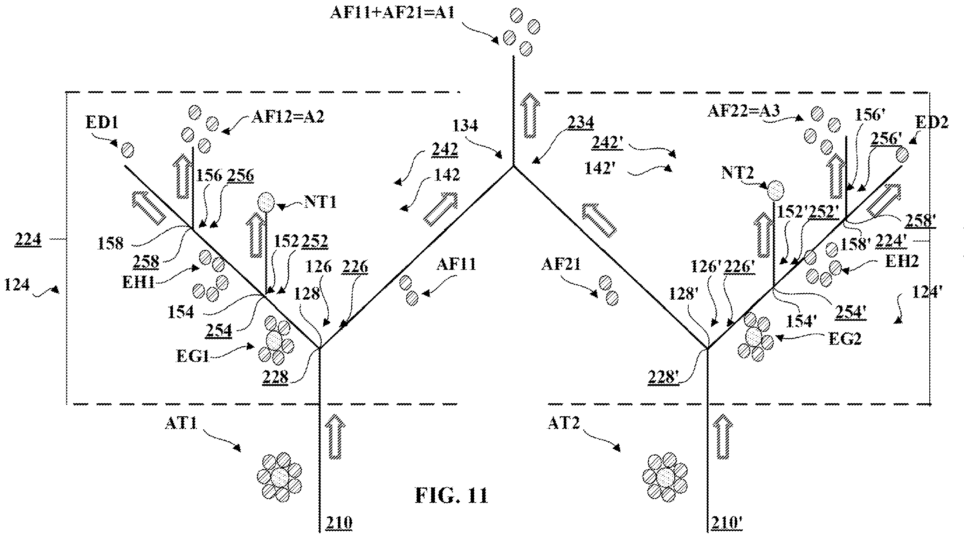

On va maintenant décrire une installation et un procédé selon le quatrième mode de réalisation de l'invention en référence à la figure 11. Les éléments analogues à ceux des modes de réalisation précédents sont désignés par des références identiques.

A la différence du troisième mode de réalisation, les moyens 142 de séparation de l'ensemble fractionné EG1 entre le deuxième assemblage fractionné AF12 et le premier noyau transitoire NT1 comprennent des moyens 152 de séparation de l'ensemble fractionné EG1 entre un ensemble précurseur EH1 et le premier noyau transitoire NT1. En l'espèce, les moyens de séparation 152 comprennent des moyens 154 de fractionnement de l'ensemble fractionné EG1 en l'ensemble précurseur EH1 et le premier noyau transitoire NT1. De façon analogue, l'étape 242 de séparation de l'ensemble fractionné EG1 entre le deuxième assemblage fractionné AF12 et le premier noyau transitoire NT1 comprend une étape 252 de séparation de l'ensemble fractionné EG1 entre l'ensemble précurseur EH1 et le premier noyau transitoire NT1. En l'espèce, l'étape de séparation 252 comprend une étape 254 de fractionnement de l'ensemble fractionné EG1 en l'ensemble précurseur EH1 et le premier noyau transitoire NT1.

L'ensemble précurseur EH1 comprend une couche H1 constituée de H1'>1 éléments filaires métalliques 14 enroulés en hélice. Les H1'>1 éléments filaires métalliques 14 sont issus de la couche G1 constituée de G1'>1 éléments filaires métalliques 14 de l'ensemble fractionné EG1. En l'espèce, l'ensemble précurseur EH1 est constitué de la couche H1 avec H1'=5, les H1'=5 éléments filaires métalliques 14 étant enroulés en hélice.

A la différence du troisième mode de réalisation, les moyens 142 de séparation de l'ensemble fractionné EG1 entre le deuxième assemblage fractionné AF12 et le premier noyau transitoire NT1 comprennent des moyens 156 de séparation de l'ensemble précurseur EH1 entre le deuxième assemblage fractionné AF12 formant le deuxième assemblage final A2 et un ensemble dérivé ED1. En l'espèce, les moyens de séparation 156 comprennent des moyens 158 de fractionnement de l'ensemble précurseur EH1 en le deuxième assemblage fractionné AF12 formant le deuxième assemblage final A2 et l'ensemble dérivé ED1. Les moyens 156 de séparation sont agencés de façon à ce que les E' éléments filaires métalliques soient issus de la couche H1 constituée des H1' éléments filaires métalliques de l'ensemble précurseur EH1. De façon analogue, l'étape 242 de séparation de l'ensemble fractionné EG1 entre le deuxième assemblage fractionné AF12 et le premier noyau transitoire NT1 comprend une étape 256 de séparation de l'ensemble précurseur EH1 entre le deuxième assemblage fractionné AF12 formant le deuxième assemblage final A2 et l'ensemble dérivé ED1. En l'espèce, l'étape de séparation 256 comprend une étape 258 de fractionnement de l'ensemble précurseur EH1 en le deuxième assemblage fractionné AF12 formant le deuxième assemblage final A2 et l'ensemble dérivé ED1. A l'issue de cette étape 256 de séparation, les E' éléments filaires métalliques sont issus de la couche H1 constituée des H1' éléments filaires métalliques de l'ensemble précurseur EH1.

L'ensemble dérivé ED1 comprend une couche I1 constituée de I1'≥1 élément(s) filaire(s) métallique(s) 14 enroulé(s) en hélice. Le ou les I1'≥1 élément(s) filaire(s) métallique(s) 14 est ou sont issus de la couche H1 constituée de H1'>1 éléments filaires métalliques 14 de l'ensemble précurseur EH1. En l'espèce, l'ensemble dérivé ED1 est constitué de la couche I1 avec I1'=1, le I1'=1 élément filaire métallique 14 étant enroulé en hélice.

Les moyens 152 de séparation de l'ensemble fractionné EG1 entre l'ensemble précurseur EH1 et le premier noyau transitoire NT1 sont agencés en amont des moyens 156 de séparation de l'ensemble précurseur EH1 entre le deuxième assemblage fractionné AF12 formant le deuxième assemblage final A2 et l'ensemble dérivé ED1. De façon analogue, l'étape 252 de séparation de l'ensemble fractionné EG1 entre l'ensemble précurseur EH1 et le premier noyau transitoire NT1 a lieu en amont de l'étape 256 de séparation de l'ensemble précurseur EH1 entre le deuxième assemblage fractionné AF12 formant le deuxième assemblage final A2 et l'ensemble dérivé ED1.

On notera que dans ce quatrième mode de réalisation, on a G1'≥H1' et H1'≥E'+I1' et ici G1'=H1' et H1'=E'+I1'.

Les moyens et étapes 142', 242', 152', 252', 154', 254', 156', 256', 158', 258' ainsi que les caractéristiques des assemblages et ensembles EG2, EH2, ED2, AF21, AF22, NT2 se déduisent mutatis mutandis des moyens et étapes 142, 242, 152, 252, 154, 254, 156, 256, 158, 258 et des caractéristiques des assemblages et ensembles EG1, EH1, ED1, AF11, AF12, NT1 décrits précédemment. Les autres moyens et étapes se déduisent *mutatis mutandis* de ceux et celles des modes de réalisation précédents.

### INSTALLATION ET PROCEDE SELON UN CINQUIEME MODE DE REALISATION DE L'INVENTION

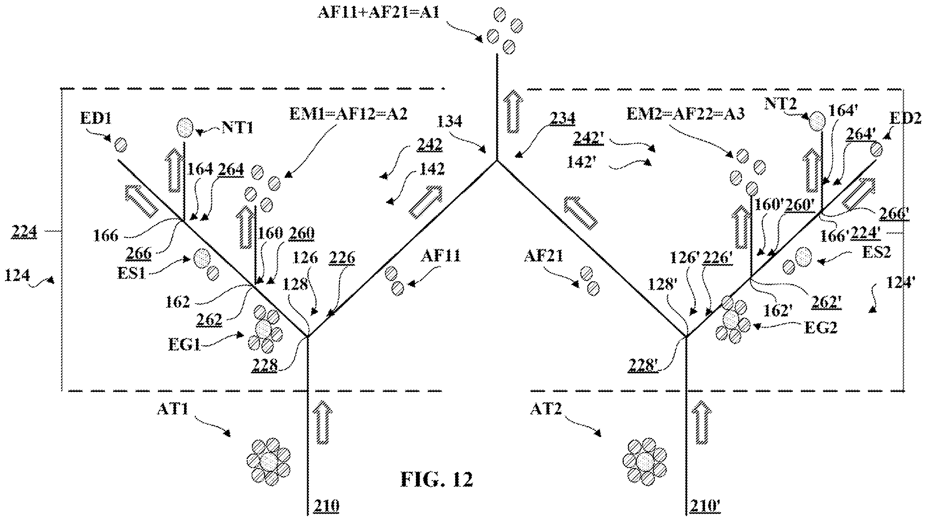

On va maintenant décrire une installation et un procédé selon le cinquième mode de réalisation de l'invention en référence à la figure 12. Les éléments analogues à ceux des modes de réalisation précédents sont désignés par des références identiques.

A la différence du troisième mode de réalisation, les moyens 142 de séparation de l'ensemble fractionné EG1 entre le deuxième assemblage fractionné AF12 et le premier noyau transitoire NT1 comprennent des moyens 160 de séparation de l'ensemble fractionné EG1 entre un ensemble principal EM1 formant le deuxième assemblage fractionné AF12 formant le deuxième assemblage final A2 et un ensemble complémentaire ES1. En l'espèce, les moyens de séparation 160 comprennent des moyens 162 de fractionnement de l'ensemble fractionné EG1 en l'ensemble principal EM1 et l'ensemble complémentaire ES1. De façon analogue, l'étape 242 de séparation de l'ensemble fractionné EG1 entre le deuxième assemblage fractionné AF12 et le premier noyau transitoire NT1 comprend une étape 260 de séparation de l'ensemble fractionné EG1 entre l'ensemble principal EM1 formant le deuxième assemblage fractionné AF12 formant le deuxième assemblage final A2 et l'ensemble complémentaire ES1. En l'espèce, l'étape de séparation 260 comprend une étape 262 de fractionnement de l'ensemble fractionné EG1 en l'ensemble principal EM1 et l'ensemble complémentaire ES1.

L'ensemble principal EM1 comprend une couche J1 constituée de J1'>1 éléments filaires métalliques 14 enroulés en hélice. Les J1'>1 éléments filaires métalliques 14 sont issus de la couche G1 constituée de G1'>1 éléments filaires métalliques 14 de l'ensemble fractionné EG1. En l'espèce, l'ensemble principal EM1 est constitué de la couche J1 avec J1'=4, les J1'=4 éléments filaires métalliques 14 étant enroulés en hélice. L'ensemble principal EM1 formant le deuxième assemblage fractionné AF12 formant le deuxième assemblage final A2, on a J2=E=C2 et J1'=E'=C2'.

L'ensemble complémentaire ES1 comprend une couche K1 constituée de K1'≥1 élément(s) filaire(s) métallique(s) 14 enroulé(s) en hélice autour du premier noyau transitoire NT1. Le ou les K1' élément(s) filaire(s) métallique(s) 14 sont issus de la couche G1 constituée de G1'>1 éléments filaires métalliques 14 de l'ensemble fractionné EG1. L'ensemble complémentaire ES1 comprend ici la couche K1 et le premier noyau transitoire NT1, le ou les K1'≥1 élément(s) filaire(s) métallique(s) 14 étant enroulé(s) en hélice autour du premier noyau transitoire NT1. En l'espèce, l'ensemble complémentaire ES1 est constitué de la couche K1 avec K1'=1 et du premier noyau transitoire NT1, le K1'=1 élément filaire métallique 14 étant enroulé en hélice autour du premier noyau transitoire NT1.

A la différence du troisième mode de réalisation, les moyens 142 de séparation de l'ensemble fractionné EG1 entre le deuxième assemblage fractionné AF12 et le premier noyau transitoire NT1 comprennent également des moyens 164 de séparation de l'ensemble complémentaire ES1 entre un ensemble dérivé ED1 et le premier noyau transitoire NT1. En l'espèce, les moyens de séparation 164 comprennent des moyens 166 de fractionnement de l'ensemble complémentaire ES1 en l'ensemble dérivé ED1 et le premier noyau transitoire NT1. De façon analogue, l'étape 242 de séparation de l'ensemble fractionné EG1 entre le deuxième assemblage fractionné AF12 et le premier noyau transitoire NT1 comprend une étape 264 de séparation de l'ensemble complémentaire ES1 entre l'ensemble dérivé ED1 et le premier noyau transitoire NT1. En l'espèce, l'étape de séparation 264 comprend une étape 266 de fractionnement de l'ensemble complémentaire ES1 en l'ensemble dérivé ED1 et le premier noyau transitoire NT1

L'ensemble dérivé ED1 comprend une couche I1 constituée de I1'≥1 élément(s) filaire(s) métallique(s) enroulé(s) en hélice. Le ou les I1'≥1 élément(s) filaire(s) métallique(s) 14 est ou sont issu(s) de la couche K1 constituée du ou des K1'≥1 élément(s) filaire(s) métallique(s) 14 de l'ensemble complémentaire ES1. En l'espèce, l'ensemble dérivé ED1 est constitué de la couche I1 avec I1'=1, le I1'=1 élément filaire métallique 14 étant enroulé en hélice.

Les moyens 160 de séparation de l'ensemble fractionné EG1 entre l'ensemble principal EM1 et l'ensemble complémentaire ES1 sont agencés en amont des moyens 164 de séparation de l'ensemble complémentaire ES1 entre l'ensemble dérivé ED1 et le premier noyau transitoire NT1. De façon analogue, l'étape 260 de séparation de l'ensemble complémentaire ES1 entre l'ensemble dérivé ED1 et le premier noyau transitoire NT1 comprend une étape 264 de fractionnement de l'ensemble complémentaire ES1 en l'ensemble dérivé ED1 et le premier noyau transitoire NT1.

On notera que dans ce cinquième mode de réalisation, on a G1'≥J1'+K1' et K1'≥I1' et ici G1'=J1'+K1' et K1'=I1'.

Les moyens et étapes 142', 242', 160', 260', 162', 262', 164', 264', 166', 266' ainsi que les caractéristiques des assemblages et ensembles EG2, EH2, ED2, EM2, ES2, AF21, AF22, NT2 se déduisent mutatis mutandis des moyens et étapes 142, 242, 160, 260, 162, 262, 164, 264, 166, 266 et des caractéristiques des assemblages et ensembles EG1, EH1, ED1, EM1, ES1, AF11, AF12, NT1 décrits précédemment. Les autres moyens et étapes se déduisent *mutatis mutandis* de ceux et celles des modes de réalisation précédents.

### INSTALLATION ET PROCEDE SELON UN SIXIEME MODE DE REALISATION DE L'INVENTION

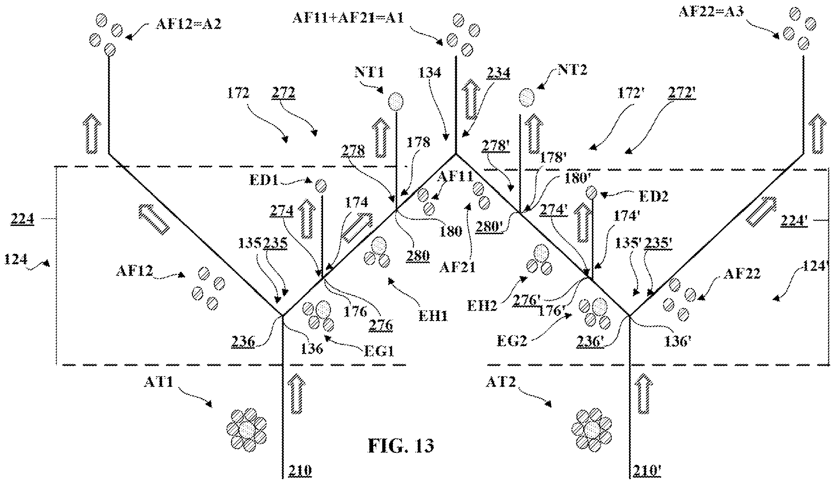

On va maintenant décrire une installation et un procédé selon le sixième mode de réalisation de l'invention en référence à la figure 13. Les éléments analogues à ceux des modes de réalisation précédents sont désignés par des références identiques.

A la différence du troisième mode de réalisation, les moyens 124 de séparation du premier assemblage transitoire AT1 comprennent des moyens 135 de séparation du premier assemblage transitoire AT1 entre un ensemble fractionné EG1 et le deuxième assemblage fractionné AF12 formant le deuxième assemblage final A2. L'ensemble fractionné EG1 est identique à celui du troisième mode de réalisation. En l'espèce, les moyens de séparation 135 comprennent des moyens 136 de fractionnement du premier assemblage transitoire AT1 en l'ensemble fractionné EG1 et le deuxième assemblage fractionné AF12 formant le deuxième assemblage final A2. De façon analogue, l'étape 224 de séparation du premier assemblage transitoire AT1 comprend une étape 235 de séparation du premier assemblage transitoire AT1 entre l'ensemble fractionné EG1 et le deuxième assemblage fractionné AF12 formant le deuxième assemblage final A2. En l'espèce, l'étape de séparation 235 comprend une étape 236 de fractionnement du premier assemblage transitoire AT1 en l'ensemble fractionné EG1 et le deuxième assemblage fractionné AF12 formant le deuxième assemblage final A2.

A la différence du troisième mode de réalisation, les moyens 124 de séparation du premier assemblage transitoire AT1 comprennent également des moyens 172 de séparation de l'ensemble fractionné EG1 entre le premier assemblage fractionné AF11 et le premier noyau transitoire NT1. Les moyens 172 de séparation sont agencés de façon à ce que les D' éléments filaires métalliques soient issus de la couche G1 constituée des G1' éléments filaires métalliques de l'ensemble fractionné EG1. De façon analogue, l'étape 224 de séparation du premier assemblage transitoire AT1 comprend une étape 272 de séparation de l'ensemble fractionné EG1 entre le premier assemblage fractionné AF11 et le premier noyau transitoire NT1. A l'issue de cette étape 272 de séparation, les D' éléments filaires métalliques sont issus de la couche G1 constituée des G1' éléments filaires métalliques de l'ensemble fractionné EG1.

Les moyens 135 de séparation du premier assemblage transitoire AT1 entre l'ensemble fractionné EG1 et le deuxième assemblage fractionné AF12 formant le deuxième assemblage final A2 sont agencés en amont des moyens 172 de séparation de l'ensemble fractionné EG1 entre le premier assemblage fractionné AF11 et le premier noyau transitoire NT1. De façon analogue, l'étape 235 de séparation du premier assemblage transitoire AT1 entre l'ensemble fractionné EG1 et le deuxième assemblage fractionné AF12 formant le deuxième assemblage final A2 a lieu en amont de l'étape 272 de séparation de l'ensemble fractionné EG1 entre le premier assemblage fractionné AF11 et le premier noyau transitoire NT1.

Les moyens 172 de séparation de l'ensemble fractionné EG1 entre le premier assemblage fractionné AF11 et le premier noyau transitoire NT1 comprennent des moyens 174 de séparation de l'ensemble fractionné EG1 entre un ensemble précurseur EH1 et un ensemble dérivé ED1. L'ensemble fractionné EG1 et l'ensemble précurseur EH1 sont identiques respectivement à l'ensemble fractionné EG1 et à l'ensemble précurseur EH1 du troisième mode de réalisation. En l'espèce, les moyens de séparation 174 de l'ensemble fractionné EG1 entre l'ensemble précurseur EH1 et l'ensemble dérivé ED1 comprennent des moyens 176 de fractionnement de l'ensemble fractionné EG1 en l'ensemble précurseur EH1 et l'ensemble dérivé ED1. De façon analogue, l'étape 272 de séparation de l'ensemble fractionné EG1 entre le premier assemblage fractionné AF11 et le premier noyau transitoire NT1 comprend une étape 274 de séparation de l'ensemble fractionné EG1 entre l'ensemble précurseur EH1 et l'ensemble dérivé ED1. En l'espèce, l'étape de séparation 274 comprend une étape 276 de fractionnement de l'ensemble fractionné EG1 en l'ensemble précurseur EH1 et l'ensemble dérivé ED1.

Les moyens 172 de séparation de l'ensemble fractionné EG1 entre le premier assemblage fractionné AF11 et le premier noyau transitoire NT1 comprennent également des moyens 178 de séparation de l'ensemble précurseur EH1 entre le premier assemblage fractionné AF11 et le premier noyau transitoire NT1. En l'espèce, les moyens de séparation 178 comprennent des moyens 180 de fractionnement de l'ensemble précurseur EH1 en le premier assemblage fractionné AF11 et le premier noyau transitoire NT1. Les moyens 178 de séparation sont agencés de façon à ce que les D' éléments filaires métalliques soient issus de la couche H1 constituée des H1' éléments filaires métalliques de l'ensemble précurseur EH1. De façon analogue, l'étape 272 de séparation de l'ensemble fractionné EG1 entre le premier assemblage fractionné AF11 et le premier noyau transitoire NT1 comprend une étape 278 de séparation de l'ensemble précurseur EH1 entre le premier assemblage fractionné AF11 et le premier noyau transitoire NT1. En l'espèce, l'étape de séparation 278 comprend une étape 280 de fractionnement de l'ensemble précurseur EH1 en le premier assemblage fractionné AF11 et le premier noyau transitoire NT1. A l'issue de cette étape 278 de séparation, les D' éléments filaires métalliques sont issus de la couche H1 constituée des H1' éléments filaires métalliques de l'ensemble fractionné EH1.

Les moyens 174 de séparation de l'ensemble fractionné EG1 entre l'ensemble précurseur EH1 et l'ensemble dérivé ED1 sont agencés en amont des moyens 178 de séparation de l'ensemble précurseur EH1 entre le premier assemblage fractionné AF11 et le premier noyau transitoire NT1 De façon analogue, l'étape 274 de séparation de l'ensemble fractionné EG1 entre l'ensemble précurseur EH1 et l'ensemble dérivé ED1 a lieu en amont de l'étape 278 de séparation de l'ensemble précurseur EH1 entre le premier assemblage fractionné AF11 et le premier noyau transitoire NT1.

On notera que dans ce sixième mode de réalisation, on a A'≥E'+G1' et G1'≥D' et ici A'=G1'+E' et G1'>D'. On a G1'≥H1'+I1' et H1'≥D' et ici G1'=H1'+I1' et H1'=D'.

Les moyens et étapes 135', 235', 136', 236', 172', 272', 174', 274', 176', 276', 178', 278', 180', 280' ainsi que les caractéristiques des assemblages et ensembles EG2, EH2, ED2, AF21, AF22, NT2 se déduisent mutatis mutandis des moyens et étapes 135, 235, 136, 236, 172, 272, 174, 274, 176, 276, 178, 278, 180, 280 et des caractéristiques des assemblages et ensembles EG1, EH1, ED1, AF11, AF12, NT1 décrits précédemment. Les autres moyens et étapes se déduisent *mutatis mutandis* de ceux et celles des modes de réalisation précédents.

### INSTALLATION ET PROCEDE SELON UN SEPTIEME MODE DE REALISATION DE L'INVENTION

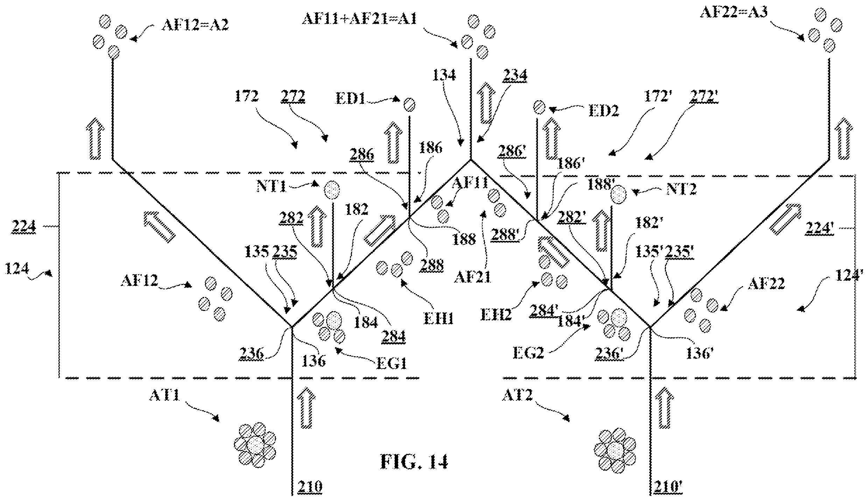

On va maintenant décrire une installation et un procédé selon le septième mode de réalisation de l'invention en référence à la figure 14. Les éléments analogues à ceux des modes de réalisation précédents sont désignés par des références identiques.

A la différence du sixième mode de réalisation, les moyens 172 de séparation de l'ensemble fractionné EG1 entre le premier assemblage fractionné AF11 et le premier noyau transitoire NT1 comprennent des moyens 182 de séparation de l'ensemble fractionné EG1 entre un ensemble précurseur EH1 et le premier noyau transitoire NT1. L'ensemble précurseur EH1 est identique à l'ensemble précurseur EH1 du quatrième mode de réalisation. En l'espèce, les moyens de séparation 182 comprennent des moyens 184 de fractionnement de l'ensemble fractionné EG1 en l'ensemble précurseur EH1 et le premier noyau transitoire NT1. De façon analogue, l'étape 272 de séparation de l'ensemble fractionné EG1 entre le premier assemblage fractionné AF11 et le premier noyau transitoire NT1 comprend une étape 282 de séparation de l'ensemble fractionné EG1 entre l'ensemble précurseur EH1 et le premier noyau transitoire NT1. En l'espèce, l'étape de séparation 282 comprend une étape 284 de fractionnement de l'ensemble fractionné EG1 en l'ensemble précurseur EH1 et le premier noyau transitoire NT1.

A la différence du sixième mode de réalisation, les moyens 172 de séparation de l'ensemble fractionné EG1 entre le premier assemblage fractionné AF11 et le premier noyau transitoire NT1 comprennent des moyens 186 de séparation de l'ensemble précurseur EH1 entre le premier assemblage fractionné AF11 et un ensemble dérivé ED1. L'ensemble dérivé ED1 est identique à l'ensemble dérivé ED1 du quatrième mode de réalisation. En l'espèce, les moyens de séparation 186 comprennent des moyens 188 de fractionnement de l'ensemble précurseur EH1 en le premier assemblage fractionné AF11 et l'ensemble dérivé ED1. Les moyens 186 de séparation sont agencés de façon à ce que les D' éléments filaires métalliques soient issus de la couche H1 constituée des H1' éléments filaires métalliques de l'ensemble précurseur EH1. De façon analogue, l'étape 272 de séparation de l'ensemble fractionné EG1 entre le premier assemblage fractionné AF11 et le premier noyau transitoire NT1 comprend une étape 286 de séparation de l'ensemble précurseur EH1 entre le premier assemblage fractionné AF11 et l'ensemble dérivé ED1. En l'espèce, l'étape de séparation 286 comprend une étape 288 de fractionnement de l'ensemble précurseur EH1 en le premier assemblage fractionné AF11 et l'ensemble dérivé ED1. A l'issue de cette étape 286 de séparation, les D' éléments filaires métalliques sont issus de la couche H1 constituée des H1' éléments filaires métalliques de l'ensemble fractionné EH1.

Les moyens 182 de séparation de l'ensemble fractionné EG1 entre l'ensemble précurseur EH1 et le premier noyau transitoire NT1 sont agencés en amont des moyens 186 de séparation de l'ensemble précurseur EH1 entre le premier assemblage fractionné AF11 et l'ensemble dérivé ED1. De façon analogue, l'étape 282 de séparation de l'ensemble fractionné EG1 entre l'ensemble précurseur EH1 et le premier noyau transitoire NT1 a lieu en amont de l'étape 286 de séparation de l'ensemble précurseur EH1 entre le premier assemblage fractionné AF11 et l'ensemble dérivé ED1.

On notera que dans ce septième mode de réalisation, on a G1'≥H1' et H1'≥D'+I1' et ici G1'=H1' et H1'=D'+I1'.

Les moyens et étapes 182', 282', 184', 284', 186', 286', 188', 288' ainsi que les caractéristiques des assemblages et ensembles EG2, EH2, ED2, AF21, AF22, NT2 se déduisent mutatis mutandis des moyens et étapes 182, 282, 184, 284, 186, 286, 188, 288 et des caractéristiques des assemblages et ensembles EG1, EH1, ED1, AF11, AF12, NT1 décrits précédemment. Les autres moyens et étapes se déduisent *mutatis mutandis* de ceux et celles des modes de réalisation précédents.

### INSTALLATION ET PROCEDE SELON UN HUITIEME MODE DE REALISATION DE L'INVENTION

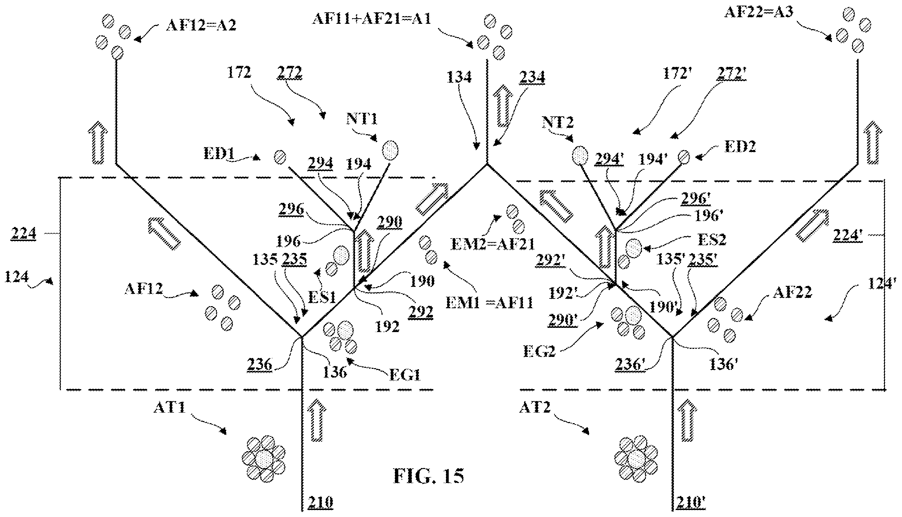

On va maintenant décrire une installation et un procédé selon le huitième mode de réalisation de l'invention en référence à la figure 15. Les éléments analogues à ceux des modes de réalisation précédents sont désignés par des références identiques.

A la différence du sixième mode de réalisation, les moyens 172 de séparation de l'ensemble fractionné EG1 entre le premier assemblage fractionné AF11 et le premier noyau transitoire NT1 comprennent des moyens 190 de séparation de l'ensemble fractionné EG1 entre un ensemble principal EM1 formant le premier assemblage fractionné AF11 et un ensemble complémentaire ES1. Chaque ensemble principal EM1 et ensemble complémentaire ES1 est identique respectivement à chaque ensemble principal EM1 et ensemble complémentaire ES1 du cinquième mode de réalisation. En l'espèce, les moyens de séparation 190 comprennent des moyens 192 de fractionnement de l'ensemble fractionné EG1 en l'ensemble principal EM1 et l'ensemble complémentaire ES1. De façon analogue, l'étape 272 de séparation de l'ensemble fractionné EG1 entre le premier assemblage fractionné AF11 et le premier noyau transitoire NT1 comprend une étape 290 de séparation de l'ensemble fractionné EG1 entre l'ensemble principal EM1 et l'ensemble complémentaire ES1. En l'espèce, l'étape de séparation 290 comprend une étape 292 de fractionnement de l'ensemble fractionné EG1 en l'ensemble principal EM1 et l'ensemble complémentaire ES1.

A la différence du sixième mode de réalisation, les moyens 172 de séparation de l'ensemble fractionné EG1 entre le premier assemblage fractionné AF11 et le premier noyau transitoire NT1 comprennent des moyens 194 de séparation de l'ensemble complémentaire ES1 entre un ensemble dérivé ED1 et le premier noyau transitoire NT1. L'ensemble dérivé ED1 est identique à l'ensemble dérivé ED1 du cinquième mode de réalisation. En l'espèce, les moyens de séparation 194 comprennent des moyens 196 de fractionnement de l'ensemble complémentaire ES1 en l'ensemble dérivé ED1 et le premier noyau transitoire NT1. De façon analogue, l'étape 272 de séparation de l'ensemble fractionné EG1 entre le premier assemblage fractionné AF11 et le premier noyau transitoire NT1 comprend une étape 294 de séparation de l'ensemble complémentaire ES1 entre l'ensemble dérivé ED1 et le premier noyau transitoire NT1. En l'espèce, l'étape de séparation 294 comprend une étape 296 de fractionnement de l'ensemble complémentaire ES1 en l'ensemble dérivé ED1 et le premier noyau transitoire NT1.

Les moyens 190 de séparation de l'ensemble fractionné EG1 entre l'ensemble principal EM1 et l'ensemble complémentaire ES1 sont agencés en amont des moyens 194 de séparation de l'ensemble complémentaire ES1 entre l'ensemble dérivé ED1 et le premier noyau transitoire NT1. De façon analogue, l'étape 290 de séparation de l'ensemble fractionné EG1 entre l'ensemble principal EM1 et l'ensemble complémentaire ES1 a lieu en amont de l'étape 294 de séparation de l'ensemble complémentaire ES1 entre l'ensemble dérivé ED1 et le premier noyau transitoire NT1.

On notera que dans ce huitième mode de réalisation, on a J1'=D', G1'≥J1'+K1' et K1'≥I1' et ici G1'=J1'+K1' et K1'=I1'.

Les moyens et étapes 190', 290', 192', 292', 194', 294', 196', 296' ainsi que les caractéristiques des assemblages et ensembles EG2, ES2, ED2, EM2=AF21, AF22, NT2 se déduisent mutatis mutandis des moyens et étapes 190, 290, 192, 292, 194, 294, 196, 296 et des caractéristiques des assemblages et ensembles EG1, ES1, ED1, EM1=AF11, AF12, NT1 décrits précédemment. Les autres moyens et étapes se déduisent *mutatis mutandis* de ceux et celles des modes de réalisation précédents.

### INSTALLATION ET PROCEDE SELON UN NEUVIEME MODE DE REALISATION DE L'INVENTION

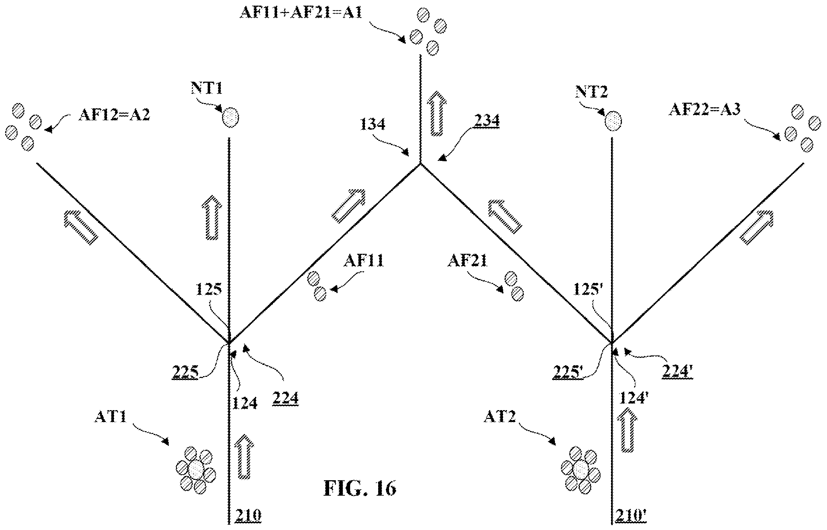

On va maintenant décrire une installation et un procédé selon le neuvième mode de réalisation de l'invention en référence à la figure 16. Les éléments analogues à ceux des modes de réalisation précédents sont désignés par des références identiques.

A la différence du premier mode de réalisation, les moyens 124 de séparation du premier assemblage transitoire AT1 comprennent des moyens 125 de fractionnement du premier assemblage transitoire AT1 entre le premier assemblage fractionné AF11, le deuxième assemblage fractionné AF12 et le premier noyau transitoire NT1. De façon analogue, l'étape 224 de séparation du premier assemblage transitoire AT1 comprend une étape 225 de fractionnement du premier assemblage transitoire AT1 entre le premier assemblage fractionné AF11, le deuxième assemblage fractionné AF12 et le premier noyau transitoire NT1.

Les moyens et étapes 124', 224', 125', 225' ainsi que les caractéristiques des assemblages et ensembles AF21, AF22, NT2 se déduisent mutatis mutandis des moyens et étapes 124, 224, 125, 225 décrits précédemment. Les autres moyens et étapes se déduisent *mutatis mutandis* de ceux et celles des modes de réalisation précédents.

### INSTALLATION ET PROCEDE SELON UN DIXIEME MODE DE REALISATION DE L'INVENTION

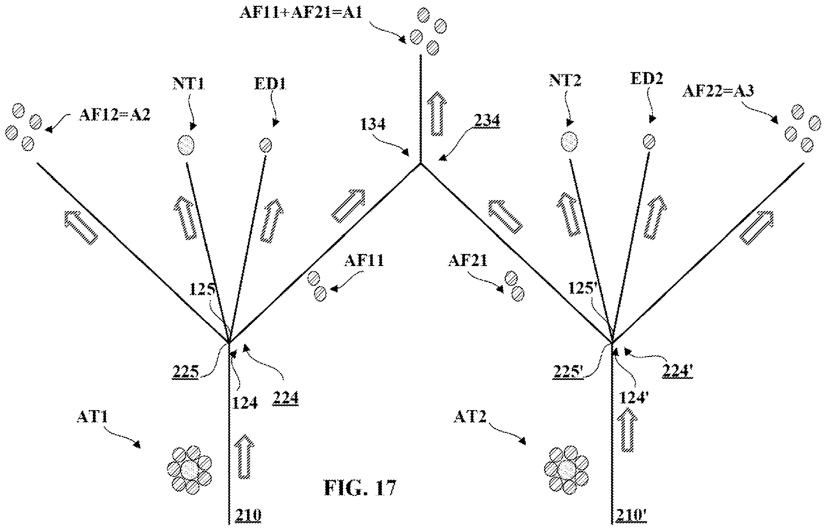

On va maintenant décrire une installation et un procédé selon le dixième mode de réalisation de l'invention en référence à la figure 17. Les éléments analogues à ceux des modes de réalisation précédents sont désignés par des références identiques.

A la différence de chacun des troisième à huitième modes de réalisation, les moyens 124 de séparation du premier assemblage transitoire AT1 comprennent des moyens 125 de fractionnement du premier assemblage transitoire AT1 entre le premier assemblage fractionné AF11, le deuxième assemblage fractionné AF12, le premier noyau transitoire NT1 et un ensemble dérivé ED1 comprenant au moins une couche I1 constituée de I1'≥1 élément(s) filaire(s) métallique(s) enroulé(s) en hélice, le ou les I1'≥1 élément(s) filaire(s) métallique(s) étant issu(s) de la couche constituée des A'>1 éléments filaires métalliques 14 du premier assemblage transitoire AT1. Ici, l'ensemble dérivé ED1 est constitué de la couche I1 constituée du I1'=1 élément filaire métallique enroulés en hélice. De façon analogue, l'étape 224 de séparation du premier assemblage transitoire AT1 comprend une étape 225 de fractionnement du premier assemblage transitoire AT1 entre le premier assemblage fractionné AF11, le deuxième assemblage fractionné AF12, le premier noyau transitoire NT1 et l'ensemble dérivé ED1.

Les moyens et étapes 124', 224', 125', 225' ainsi que les caractéristiques des assemblages et ensembles ED2, AF21, AF22, NT2 se déduisent mutatis mutandis des moyens et étapes 124, 224, 125, 225 décrits précédemment. Les autres moyens et étapes se déduisent *mutatis mutandis* de ceux et celles des modes de réalisation précédents.

L'invention ne se limite pas aux modes de réalisation décrits ci-dessus. On pourra envisager, sans sortir du cadre de l'invention, que chaque premier et deuxième noyau transitoire comprennent des première et deuxième partie dont la première partie serait séparée avec un premier ensemble fractionné dont serait issu, après une ou plusieurs étapes de séparation, chaque premier ou le deuxième assemblages fractionnés et dont la deuxième partie serait séparée avec un deuxième ensemble fractionné dont serait issu, après une ou plusieurs étapes de séparation, chaque premier ou le deuxième assemblage fractionné.

On pourra également envisager des étapes de séparation, respectivement des moyens de séparation des premier et deuxième assemblages transitoires en plus que les premier, deuxième assemblages fractionnés AF11, AF12, AF21 et AF22, par exemple trois voire quatre assemblages fractionnés. Dans ces modes de réalisation, l'étape de réassemblage, respectivement les moyens de réassemblage pourront permettre le réassemblage de plus que les premiers assemblages fractionnés AF11, AF21, par exemple le réassemblage de trois voire quatre assemblages fractionnés.

## Revendications

1. Procédé de fabrication d'au moins des premier, deuxième et troisième assemblages finaux (A1, A2, A3),
le premier assemblage final (A1) comprenant au moins une couche (C1) constituée de C1'>1 éléments filaires métalliques (14) enroulés en hélice, le deuxième assemblage final (A2) comprenant au moins une couche (C2) constituée de C2'>1 éléments filaires métalliques (14) enroulés en hélice, le troisième assemblage final (A3) comprenant au moins une couche (C3) constituée de C3'>1 éléments filaires métalliques (14) enroulés en hélice,
le procédé comprenant :
- une étape (210) de fourniture d'un premier assemblage transitoire (AT1) comprenant au moins une couche (A) constituée de A'>1 éléments filaires métalliques (14) enroulés en hélice autour d'un premier noyau transitoire (NT1),
- une étape (210') de fourniture d'un deuxième assemblage transitoire (AT2) comprenant au moins une couche (B) constituée de B'>1 éléments filaires métalliques (14) enroulés en hélice autour d'un deuxième noyau transitoire (NT2),
- une étape (224) de séparation du premier assemblage transitoire (AT1) entre au moins:
- un premier assemblage fractionné AF11 comprenant au moins une couche (D) constituée de D'≥1 élément(s) filaire(s) métallique(s) (14) enroulé(s) en hélice, le ou les D' élément(s) filaire(s) métallique(s) (14) étant issu(s) de la couche (A) constituée de A'>1 éléments filaires métalliques (14) du premier assemblage transitoire (AT1),
- un deuxième assemblage fractionné AF12 comprenant au moins une couche (E) constituée de E'>1 éléments filaires métalliques (14) enroulés en hélice, les E' éléments filaires métalliques (14) étant issus de la couche (A) constituée de A'>1 éléments filaires métalliques (14) du premier assemblage transitoire (AT1), le deuxième assemblage fractionné AF12 formant le deuxième assemblage final (A2)
- le premier noyau transitoire (NT1) ou un ou plusieurs ensembles comprenant le premier noyau transitoire (NT1),
- une étape (224') de séparation du deuxième assemblage transitoire (AT2) entre au moins:
- un premier assemblage fractionné AF21 comprenant au moins une couche (F) constituée de F'≥1 élément(s) filaire(s) métallique(s) (14) enroulé(s) en hélice, le ou les F' élément(s) filaire(s) métallique(s) (14) étant issu(s) de la couche (B) constituée de B'>1 éléments filaires métalliques (14) du deuxième assemblage transitoire (AT2),
- un deuxième assemblage fractionné AF22 comprenant au moins une couche (G) constituée de G'>1 éléments filaires métalliques (14) enroulés en hélice, les G' éléments filaires métalliques (14) étant issus de la couche (B) constituée de B'>1 éléments filaires métalliques (14) du deuxième assemblage transitoire (AT2), le deuxième assemblage fractionné AF22 formant le troisième assemblage final (A3),
- le deuxième noyau transitoire (NT2) ou un ou plusieurs ensembles comprenant le deuxième noyau transitoire (NT2),
le procédé comprenant une étape (234) de réassemblage d'au moins le premier assemblage fractionné AF11 avec le premier assemblage fractionné AF21 pour former le premier assemblage final (A1),
les étapes de fourniture (210) et de séparation (224) du premier assemblage transitoire (AT1), les étapes de fourniture (210') et de séparation (224') du deuxième assemblage transitoire (AT2), et l'étape (234) de réassemblage du premier assemblage fractionné AF11 avec le premier assemblage fractionné AF21 étant réalisées de sorte que D'+F'=E'=G'=C1'=C2'=C3' et de sorte que tous les C1', C2', C3' éléments filaires métalliques (14) présentent un même diamètre d, sont enroulés en hélice selon un même pas p et présentent un même diamètre d'hélice φ; avec A'+B'≥6.

2. Procédé selon la revendication 1, dans lequel l'étape (224) de séparation du premier assemblage transitoire (AT1), l'étape de (224') de séparation du deuxième assemblage transitoire (AT2), et l'étape (234) de réassemblage du premier assemblage fractionné AF11 avec le premier assemblage fractionné AF21 sont réalisées de sorte que A'=D'+E' et B'=F'+G'.

3. Procédé selon la revendication 2, dans lequel l'étape (224) de séparation du premier assemblage transitoire (AT1) comprend :
- une étape (226) de séparation du premier assemblage transitoire (AT1) entre:
- le premier assemblage fractionné AF11, et
- un ensemble fractionné EG1 comprenant au moins une couche (G1) constituée de G1'>1 éléments filaires métalliques (14) enroulés en hélice autour du premier noyau transitoire (NT1), les G1'>1 éléments filaires métalliques (14) étant issus de la couche (A) constituée des A'>1 éléments filaires métalliques (14) du premier assemblage transitoire (AT1), et
- une étape (230) de séparation de l'ensemble fractionné EG1 entre :
- le deuxième assemblage fractionné AF12 formant le deuxième assemblage final (A2), les E'>1 éléments filaires métalliques (14) étant issus de la couche (G1) constituée des G1'>1 éléments filaires métalliques (14) de l'ensemble fractionné EG1, et
- le premier noyau transitoire (NT1).

4. Procédé selon la revendication 2, dans lequel l'étape (124) de séparation du premier assemblage transitoire (AT1) comprend :
- une étape (235) de séparation du premier assemblage transitoire (AT1) entre:
- le deuxième assemblage fractionné AF12 formant le deuxième assemblage final (A2), et
- un ensemble fractionné EG1 comprenant au moins une couche (G1) constituée de G1'≥1 élément(s) filaire(s) métallique(s) (14) enroulé(s) en hélice autour du premier noyau transitoire (NT1), le ou les G1'≥1 élément(s) filaire(s) métallique(s) (14) étant issu(s) de la couche (A) constituée des A'>1 éléments filaires métalliques (14) du premier assemblage transitoire (AT1), et
- une étape (238) de séparation de l'ensemble fractionné EG1 entre :
- le premier assemblage fractionné AF11, le ou les D'≥1 élément(s) filaire(s) métallique(s) (14) étant issu(s) de la couche (G1) constituée des G1'≥1 élément(s) filaire(s) métallique(s) (14) de l'ensemble fractionné EG1, et
- le premier noyau transitoire (NT1).

5. Procédé selon l'une quelconque des revendications 2 à 4, dans lequel l'étape (224') de séparation du deuxième assemblage transitoire (AT2) comprend :
- une étape (226') de séparation du deuxième assemblage transitoire (AT2) entre:
- le premier assemblage fractionné AF21, et
- un ensemble fractionné EG2 comprenant au moins une couche (G2) constituée de G2'>1 éléments filaires métalliques (14) enroulés en hélice autour du deuxième noyau transitoire (NT2), les G2'>1 éléments filaires métalliques (14) étant issus de la couche (B) constituée des B'>1 éléments filaires métalliques (14) du deuxième assemblage transitoire (AT2), et
- une étape (230') de séparation de l'ensemble fractionné EG2 entre :
- le deuxième assemblage fractionné AF22 formant le troisième assemblage final (A3), les G'>1 éléments filaires métalliques (14) étant issus de la couche (G2) constituée des G2'>1 éléments filaires métalliques (14) de l'ensemble fractionné EG2, et
- le deuxième noyau transitoire (NT2).

6. Procédé selon l'une quelconque des revendications 2 à 4, dans lequel l'étape (224') de séparation du deuxième assemblage transitoire (AT2) comprend :
- une étape (235') de séparation du deuxième assemblage transitoire (AT2) entre:
- le deuxième assemblage fractionné AF22 formant le troisième assemblage final (A3), et
- un ensemble fractionné EG2 comprenant au moins une couche (G2) constituée de G2'≥1 élément(s) filaire(s) métallique(s) (14) enroulé(s) en hélice autour du deuxième noyau transitoire (NT2), le ou les G2'≥1 élément(s) filaire(s) métallique(s) (14) étant issu(s) de la couche (B) constituée des B'>1 éléments filaires métalliques (14) du deuxième assemblage transitoire (AT2), et
- une étape (238') de séparation de l'ensemble fractionné EG2 entre :
- le premier assemblage fractionné AF21, le ou les F'≥1 élément(s) filaire(s) métallique(s) (14) étant issu(s) de la couche (G2) constituée des G2'≥1 élément(s) filaire(s) métallique(s) (14) de l'ensemble fractionné EG2, et
- le deuxième noyau transitoire (NT2).

7. Procédé selon la revendication 1, dans lequel l'étape (224) de séparation du premier assemblage transitoire (AT1), l'étape de (224') de séparation du deuxième assemblage transitoire (AT2), et l'étape (234) de réassemblage du premier assemblage fractionné AF11 avec le premier assemblage fractionné AF21 sont réalisées de sorte que A'>D'+E' et B'>F'+G'.

8. Procédé selon la revendication 7, dans lequel l'étape (224) de séparation du premier assemblage transitoire (AT1) comprend :
- une étape (226) de séparation du premier assemblage transitoire (AT1) entre :
- un ensemble fractionné EG1 comprenant au moins une couche (G1) constituée de G1'>1 éléments filaires métalliques (14) enroulés en hélice autour du premier noyau transitoire (NT1), les G1'>1 éléments filaires métalliques (14) étant issus de la couche (A) constituée des A'>1 éléments filaires métalliques (14) du premier assemblage transitoire (AT1), et
- le premier assemblage fractionné AF11,
- une étape (242) de séparation de l'ensemble fractionné EG1 entre :
- le deuxième assemblage fractionné AF12 formant le deuxième assemblage final (A2), les E'>1 éléments filaires métalliques (14) étant issus de la couche (G1) constituée des G1'>1 éléments filaires métalliques (14) de l'ensemble fractionné EG1 et
- le premier noyau transitoire (NT1) ou un ou plusieurs ensembles comprenant le premier noyau transitoire (NT1), de préférence le premier noyau transitoire (NT1).

9. Procédé selon la revendication 7, dans lequel l'étape (224) de séparation du premier assemblage transitoire (AT1) comprend :
- une étape (235) de séparation du premier assemblage transitoire (AT1) entre :
- un ensemble fractionné EG1 comprenant au moins une couche (G1) constituée de G1'>1 éléments filaires métalliques (14) enroulés en hélice autour du premier noyau transitoire (NT1), les G1'>1 éléments filaires métalliques (14) étant issus de la couche (A) constituée des A'>1 éléments filaires métalliques (14) du premier assemblage transitoire (AT1), et
- le deuxième assemblage fractionné AF12 formant le deuxième assemblage final (A2),
- une étape (272) de séparation de l'ensemble fractionné EG1 entre :
- le premier assemblage fractionné AF11, le ou les D'≥1 élément(s) filaire(s) métallique(s) (14) étant issu(s) de la couche (G1) constituée des G1'>1 éléments filaires métalliques (14) de l'ensemble fractionné EG1, et
- le premier noyau transitoire (NT1) ou un ou plusieurs ensembles comprenant le premier noyau transitoire (NT1), de préférence le premier noyau transitoire (NT1).

10. Procédé selon l'une quelconque des revendications 7 à 9, dans lequel l'étape (224') de séparation du deuxième assemblage transitoire (AT2) comprend :
- une étape (226') de séparation du deuxième assemblage transitoire (AT2) entre :
- un ensemble fractionné EG2 comprenant au moins une couche (G2) constituée de G2'>1 éléments filaires métalliques (14) enroulés en hélice autour du deuxième noyau transitoire (NT2), les G2'>1 éléments filaires métalliques (14) étant issus de la couche (B) constituée des B'>1 éléments filaires métalliques (14) du deuxième assemblage transitoire (AT2), et
- le premier assemblage fractionné AF21,
- une étape (242) de séparation de l'ensemble fractionné EG2 entre :
- le deuxième assemblage fractionné AF22 formant le troisième assemblage final (A3), les G'>1 éléments filaires métalliques (14) étant issus de la couche (G2) constituée des G2'>1 éléments filaires métalliques (14) de l'ensemble fractionné EG2, et
- le deuxième noyau transitoire (NT2) ou un ou plusieurs ensembles comprenant le deuxième noyau transitoire (NT2), de préférence le deuxième noyau transitoire (NT2).

11. Procédé selon l'une quelconque des revendications 7 à 9, dans lequel l'étape (224') de séparation du deuxième assemblage transitoire (AT2) comprend :
- une étape (235') de séparation du deuxième assemblage transitoire (AT2) entre :
- un ensemble fractionné EG2 comprenant au moins une couche (G2) constituée de G2'>1 éléments filaires métalliques (14) enroulés en hélice autour du deuxième noyau transitoire (NT2), les G2'>1 éléments filaires métalliques (14) étant issus de la couche (B) constituée des B'>1 éléments filaires métalliques (14) du deuxième assemblage transitoire (AT2), et
- le deuxième assemblage fractionné AF22 formant le troisième assemblage final (A3),
- une étape (272') de séparation de l'ensemble fractionné EG2 entre :
- le premier assemblage fractionné AF21, le ou les F'≥1 élément(s) filaire(s) métallique(s) (14) étant issu(s) de la couche (G2) constituée des G2'>1 éléments filaires métalliques (14) de l'ensemble fractionné EG2, et
- le deuxième noyau transitoire (NT2) ou un ou plusieurs ensembles comprenant le deuxième noyau transitoire (NT2), de préférence le deuxième noyau transitoire (NT2).

12. Procédé selon l'une quelconque des revendications précédentes, dans lequel le premier assemblage final (A1) est constitué de la couche (C1) constituée de C1'>1 éléments filaires métalliques (14), le deuxième assemblage final (A2) est constitué de la couche (C2) constituée de C2'>1 éléments filaires métalliques (14), le troisième assemblage final (A3) est constitué de la couche (C3) constituée de C3'>1 éléments filaires métalliques (14),
le procédé comprenant :
- l'étape (210) de fourniture du premier assemblage transitoire (AT1) constitué de la couche (A) constituée de A'>1 éléments filaires métalliques (14) enroulés en hélice autour du premier noyau transitoire (NT1),
- l'étape (210') de fourniture du deuxième assemblage transitoire (AT2) constitué de la couche (B) constituée de B'>1 éléments filaires métalliques (14) enroulés en hélice autour du deuxième noyau transitoire (NT2),
- l'étape (224) de séparation du premier assemblage transitoire (AT1) entre au moins:
- le premier assemblage fractionné AF11 constitué de la couche (D) constituée de D'≥1 élément(s) filaire(s) métallique(s) (14) enroulé(s) en hélice, le ou les D' élément(s) filaire(s) métallique(s) (14) étant issu(s) de la couche (A) constituée de A'>1 éléments filaires métalliques (14) du premier assemblage transitoire (AT1),
- le deuxième assemblage fractionné AF12 constitué de la couche (E) constituée de E'>1 éléments filaires métalliques (14) enroulés en hélice, les E' éléments filaires métalliques (14) étant issus de la couche (A) constituée de A'>1 éléments filaires métalliques (14) du premier assemblage transitoire (AT1), le deuxième assemblage fractionné AF12 formant le deuxième assemblage final (A2)
- le premier noyau transitoire (NT1) ou un ou plusieurs ensembles comprenant le premier noyau transitoire (NT1),
- l'étape (224') de séparation du deuxième assemblage transitoire (AT2) entre au moins:
- le premier assemblage fractionné AF21 constitué de la couche (F) constituée de F'≥1 élément(s) filaire(s) métallique(s) (14) enroulé(s) en hélice, le ou les F' élément(s) filaire(s) métallique(s) (14) étant issu(s) de la couche (B) constituée de B'>1 éléments filaires métalliques (14) du deuxième assemblage transitoire (AT2),
- le deuxième assemblage fractionné AF22 constitué de la couche (G) constituée de G'>1 éléments filaires métalliques (14) enroulés en hélice, les G' éléments filaires métalliques (14) étant issus de la couche (B) constituée de B'>1 éléments filaires métalliques (14) du deuxième assemblage transitoire (AT2), le deuxième assemblage fractionné AF22 formant le troisième assemblage final (A3),
- le deuxième noyau transitoire (NT2) ou un ou plusieurs ensembles comprenant le deuxième noyau transitoire (NT2).

13. Installation (10) de fabrication d'au moins des premier, deuxième et troisième assemblages finaux (A1, A2, A3),
le premier assemblage final (A1) comprenant au moins une couche (C1) constituée de C1'>1 éléments filaires métalliques (14) enroulés en hélice, le deuxième assemblage final (A2) comprenant au moins une couche (C2) constituée de C2'>1 éléments filaires métalliques (14) enroulés en hélice, le troisième assemblage final (A3) comprenant au moins une couche (C3) constituée de C3'>1 éléments filaires métalliques (14) enroulés en hélice,
l'installation (10) comprenant :
- des moyens (110) de fourniture d'un premier assemblage transitoire (AT1) comprenant au moins une couche (A) constituée de A'>1 éléments filaires métalliques (14) enroulés en hélice autour d'un premier noyau transitoire (NT1),
- des moyens (110') de fourniture d'un deuxième assemblage transitoire (AT2) comprenant au moins une couche (B) constituée de B'>1 éléments filaires métalliques (14) enroulés en hélice autour d'un deuxième noyau transitoire (NT2),
- des moyens (124) de séparation du premier assemblage transitoire (AT1) entre au moins:
- un premier assemblage fractionné AF11 comprenant au moins une couche (D) constituée de D'≥1 élément(s) filaire(s) métallique(s) (14) enroulé(s) en hélice, le ou les D' élément(s) filaire(s) métallique(s) (14) étant issu(s) de la couche (A) constituée de A'>1 éléments filaires métalliques (14) du premier assemblage transitoire (AT1),
- un deuxième assemblage fractionné AF12 comprenant au moins une couche (E) constituée de E'>1 éléments filaires métalliques (14) enroulés en hélice, les E' éléments filaires métalliques (14) étant issus de la couche (A) constituée de A'>1 éléments filaires métalliques (14) du premier assemblage transitoire (AT1), le deuxième assemblage fractionné AF12 formant le deuxième assemblage final (A2)
- le premier noyau transitoire (NT1) ou un ou plusieurs ensembles comprenant le premier noyau transitoire (NT1),
- des moyens (124') de séparation du deuxième assemblage transitoire (AT2) entre au moins:
- un premier assemblage fractionné AF21 comprenant au moins une couche (F) constituée de F'≥1 élément(s) filaire(s) métallique(s) (14) enroulé(s) en hélice, le ou les F' élément(s) filaire(s) métallique(s) (14) étant issu(s) de la couche (B) constituée de B'>1 éléments filaires métalliques (14) du deuxième assemblage transitoire (AT2),
- un deuxième assemblage fractionné AF22 comprenant au moins une couche (G) constituée de G'>1 éléments filaires métalliques (14) enroulés en hélice, les G' éléments filaires métalliques (14) étant issus de la couche (B) constituée de B'>1 éléments filaires métalliques (14) du deuxième assemblage transitoire (AT2), le deuxième assemblage fractionné AF22 formant le troisième assemblage final (A3),
- le deuxième noyau transitoire (NT2) ou un ou plusieurs ensembles comprenant le deuxième noyau transitoire (NT2),
l'installation (10) comprenant des moyens (134) de réassemblage d'au moins le premier assemblage fractionné AF11 avec le premier assemblage fractionné AF21 pour former le premier assemblage final (A1),
les moyens (110) de fourniture et (124) de séparation du premier assemblage transitoire (AT1), les moyens (110') de fourniture et (124') de séparation du deuxième assemblage transitoire (AT2) et les moyens (134) de réassemblage du premier assemblage fractionné AF11 avec le premier assemblage fractionné AF21 étant agencés de façon à permettre la mise en oeuvre d'un procédé selon l'une quelconque des revendications précédentes ;
avec A'+B'≥6.

14. Installation (10) selon la revendication 13, dans laquelle les moyens de séparation (124) du premier assemblage transitoire (AT1), les moyens (124') de séparation du deuxième assemblage transitoire (AT2) et les moyens (134) de réassemblage du premier assemblage fractionné AF11 avec le premier assemblage fractionné AF21 sont agencés de sorte que A'=D'+E' et B'=F'+G'.

15. Installation (10) selon la revendication 13, dans laquelle les moyens (124) de séparation du premier assemblage transitoire (AT1), les moyens (124') de séparation du deuxième assemblage transitoire (AT2) et les moyens (134) de réassemblage du premier assemblage fractionné AF11 avec le premier assemblage fractionné AF21 sont agencés de sorte que A'>D'+E' et B'>F'+G'.

## Patentansprüche

1. Verfahren zur Herstellung von mindestens ersten, zweiten und dritten endgültigen Verbänden (A1, A2, A3), wobei der erste endgültige Verband (A1) mindestens eine Lage (C1), die aus C1'>1 helixartig gewundenen Metalldrahtelementen (14) besteht, wobei der zweite endgültige Verband (A2) mindestens eine Lage (C2) umfasst, die aus C2'>1 helixartig gewundenen Metalldrahtelementen (14) besteht, wobei der dritte endgültige Verband (A3) mindestens eine Lage (C3) umfasst, die aus C3'>1 helixartig gewundenen Metalldrahtelementen (14) besteht,
wobei das Verfahren umfasst:
- einen Schritt (210) des Bereitstellens eines ersten Übergangsverbands (AT1), umfassend mindestens eine Lage (A), die aus A'>1 helixartig um einen ersten Übergangskern (NT1) gewundenen Metalldrahtelementen (14) besteht,
- einen Schritt (210') des Bereitstellens eines zweiten Übergangsverbands (AT2), umfassend mindestens eine Lage (B), die aus B'>1 helixartig um einen zweiten Übergangskern (NT2) gewundenen Metalldrahtelementen (14) besteht,
- einen Schritt (224) des Trennens des ersten Übergangsverbands (AT1) in mindestens:
- einen ersten fraktionierten Verband AF11, umfassend mindestens eine Lage (D), die aus D'≥1 Metalldrahtelement(en) (14) besteht, das(die) helixartig gewunden ist(sind), wobei das oder die D' Metalldrahtelement(e) (14) aus der aus A'>1 Metalldrahtelementen (14) bestehenden Lage (A) des ersten Übergangsverbands (AT1) stammt(stammen),
- einen zweiten fraktionierten Verband AF12, umfassend mindestens eine Lage (E), die aus E'>1 helixartig gewundenen Metalldrahtelementen (14) besteht, wobei die E' Metalldrahtelemente (14) aus der aus A'>1 Metalldrahtelementen (14) bestehenden Lage (A) des ersten Übergangsverbands (AT1) stammen, wobei der zweite fraktionierte Verband AF12 den zweiten endgültigen Verband (A2) bildet
- den ersten Übergangskern (NT1) oder eine oder mehrere Anordnungen, die den ersten Übergangskern (NT1) umfassen,
- einen Schritt (224') des Trennens des zweiten Übergangsverbands (AT2) in mindestens:
- einen ersten fraktionierten Verband AF21, umfassend mindestens eine Lage (F), die aus F'≥1 Metalldrahtelement(en) (14) besteht, das(die) helixartig gewunden ist(sind), wobei das oder die F' Metalldrahtelement (e) (14) aus der aus B'>1 Metalldrahtelementen (14) bestehenden Lage (B) des zweiten Übergangsverbands (AT2) stammt(stammen),
- einen zweiten fraktionierten Verband AF22, umfassend mindestens eine Lage (G), die aus G'>1 helixartig gewundenen Metalldrahtelementen (14) besteht, wobei die G' Metalldrahtelemente (14) aus der aus B'>1 Metalldrahtelementen (14) bestehenden Lage (B) des zweiten Übergangsverbands (AT2) stammen, wobei der zweite fraktionierte Verband AF22 den dritten endgültigen Verband (A3) bildet,
- den zweiten Übergangskern (NT2) oder eine oder mehrere Anordnungen, die den zweiten Übergangskern (NT2) umfassen,
wobei das Verfahren einen Schritt (234) des Wiederzusammensetzens mindestens des ersten fraktionierten Verbands AF11 mit dem ersten fraktionierten Verband AF21 umfasst, um den ersten endgültigen Verband (A1) zu bilden,
wobei die Schritte des Bereitstellens (210) und des Trennens (224) des ersten Übergangsverbands (AT1), die Schritte des Bereitstellens (210') und des Trennens (224') des zweiten Übergangsverbands (AT2) und der Schritt (234) des Wiederzusammensetzens des ersten fraktionierten Verbands AF11 mit dem ersten fraktionierten Verband AF21 so ausgeführt werden, dass D'+F'=E'=G'=C1'=C2'=C3', und so, dass alle C1', C2', C3' Metalldrahtelemente (14) einen selben Durchmesser d aufweisen, gemäß einer selben Schlaglänge p helixartig gewunden sind und einen selben Helixdurchmesser φ aufweisen; mit A'+B'≥6.

2. Verfahren nach Anspruch 1, wobei der Schritt (224) des Trennens des ersten Übergangsverbands (AT1), der Schritt (224') des Trennens des zweiten Übergangsverbands (AT2) und der Schritt (234) des Wiederzusammensetzens des ersten fraktionierten Verbands AF11 mit dem ersten fraktionierten Verband AF21 so ausgeführt werden, dass A'=D'+E' und B'=F'+G' .

3. Verfahren nach Anspruch 2, wobei der Schritt (224) des Trennens des ersten Übergangsverbands (AT1) umfasst:
- einen Schritt (226) des Trennens des ersten Übergangsverbands (AT1) in:
- den ersten fraktionierten Verband AF11 und
- eine fraktionierte Anordnung EG1, umfassend mindestens eine Lage (G1), die aus G1'>1 helixartig um den ersten Übergangskern (NT1) gewundenen Metalldrahtelementen (14) besteht, wobei die G1'>1 Metalldrahtelemente (14) aus der aus A'>1 Metalldrahtelementen (14) bestehenden Lage (A) des ersten Übergangsverbands (AT1) stammen, und
- einen Schritt (230) des Trennens der fraktionierten Anordnung EG1 in:
- die zweite fraktionierte Anordnung AF12, die die zweite endgültige Anordnung (A2) bildet, wobei die E'>1 Metalldrahtelemente (14) aus der aus G1'>1 Metalldrahtelementen (14) bestehenden Lage (G1) der fraktionierten Anordnung EG1 stammen, und
- den ersten Übergangskern (NT1).

4. Verfahren nach Anspruch 2, wobei der Schritt (124) des Trennens des ersten Übergangsverbands (AT1) umfasst:
- einen Schritt (235) des Trennens des ersten Übergangsverbands (AT1) in:
- den zweiten fraktionierten Verband AF12, der den zweiten endgültigen Verband (A2) bildet, und
- eine fraktionierte Anordnung EG1, umfassend mindestens eine Lage (G1), die aus G1'≥1 Metalldrahtelement(en) (14) besteht, das(die) helixartig um den ersten Übergangskern (NT1) gewunden ist(sind), wobei das oder die G1'≥1 Metalldrahtelement(e) (14) aus der aus A'>1 Metalldrahtelementen (14) bestehenden Lage (A) des ersten Übergangsverbands (AT1) stammt(stammen), und
- einen Schritt (238) des Trennens der fraktionierten Anordnung EG1 in:
- den ersten fraktionierten Verband AF11, wobei das oder die D'≥1 Metalldrahtelement (e) (14) aus der aus G1'≥1 Metalldrahtelement(en) (14) bestehenden Lage (G1) der fraktionierten Anordnung EG1 stammt(stammen), und
- den ersten Übergangskern (NT1).

5. Verfahren nach einem der Ansprüche 2 bis 4, wobei der Schritt (224') des Trennens des zweiten Übergangsverbands (AT2) umfasst:
- einen Schritt (226') des Trennens des zweiten Übergangsverbands (AT2) in:
- den ersten fraktionierten Verband AF21 und
- eine fraktionierte Anordnung EG2, umfassend mindestens eine Lage (G2), die aus G2'>1 helixartig um den zweiten Übergangskern (NT2) gewundenen Metalldrahtelementen (14) besteht, wobei die G2'>1 Metalldrahtelemente (14) aus der aus B'>1 Metalldrahtelementen (14) bestehenden Lage (B) des zweiten Übergangsverbands (AT2) stammen, und
- einen Schritt (230') des Trennens der fraktionierten Anordnung EG2 in:
- die zweite fraktionierte Anordnung AF22, die die dritte endgültige Anordnung (A3) bildet, wobei die G'>1 Metalldrahtelemente (14) aus der aus G2'>1 Metalldrahtelementen (14) bestehenden Lage (G2) der fraktionierten Anordnung EG2 stammen, und
- den zweiten Übergangskern (NT2).

6. Verfahren nach einem der Ansprüche 2 bis 4, wobei der Schritt (224') des Trennens des zweiten Übergangsverbands (AT2) umfasst:
- einen Schritt (235') des Trennens des zweiten Übergangsverbands (AT2) in:
- den zweiten fraktionierten Verband AF22, der den dritten endgültigen Verband (A3) bildet, und
- eine fraktionierte Anordnung EG2, umfassend mindestens eine Lage (G2), die aus G2'≥1 Metalldrahtelement(en) (14) besteht, das(die) helixartig um den zweiten Übergangskern (NT2) gewunden ist(sind), wobei das oder die G2'≥1Metalldrahtelement(e) (14) aus der aus B'>1 Metalldrahtelementen (14) bestehenden Lage (B) des zweiten Übergangsverbands (AT2) stammt(stammen), und
- einen Schritt (238') des Trennens der fraktionierten Anordnung EG2 in:
- den ersten fraktionierten Verband AF21, wobei das oder die F'≥1 Metalldrahtelement (e) (14) aus der aus G2'≥1Metalldrahtelement(en) (14) bestehenden Lage (G2) der fraktionierten Anordnung EG2 stammt(stammen), und
- den zweiten Übergangskern (NT2).

7. Verfahren nach Anspruch 1, wobei der Schritt (224) des Trennens des ersten Übergangsverbands (AT1), der Schritt (224') des Trennens des zweiten Übergangsverbands (AT2) und der Schritt (234) des Wiederzusammensetzens des ersten fraktionierten Verbands AF11 mit dem ersten fraktionierten Verband AF21 so ausgeführt werden, dass A'>D'+E' und B'>F'+G'.

8. Verfahren nach Anspruch 7, wobei der Schritt (224) des Trennens des ersten Übergangsverbands (AT1) umfasst:
- einen Schritt (226) des Trennens des ersten Übergangsverbands (AT1) in:
- eine fraktionierte Anordnung EG1, umfassend mindestens eine Lage (G1), die aus G1'>1 helixartig um den ersten Übergangskern (NT1) gewundenen Metalldrahtelementen (14) besteht, wobei die G1'>1 Metalldrahtelemente (14) aus der aus A'>1 Metalldrahtelementen (14) bestehenden Lage (A) des ersten Übergangsverbands (AT1) stammen, und
- den ersten fraktionierten Verband AF11,
- einen Schritt (242) des Trennens der fraktionierten Anordnung EG1 in:
- die zweite fraktionierte Anordnung AF12, die die zweite endgültige Anordnung (A2) bildet, wobei die E'>1 Metalldrahtelemente (14) aus der aus G1'>1 Metalldrahtelementen (14) bestehenden Lage (G1) der fraktionierten Anordnung EG1 stammen, und
- den ersten Übergangskern (NT1) oder eine oder mehrere Anordnungen, die den ersten Übergangskern (NT1) umfassen, bevorzugt den ersten Übergangskern (NT1).

9. Verfahren nach Anspruch 7, wobei der Schritt (224) des Trennens des ersten Übergangsverbands (AT1) umfasst:
- einen Schritt (235) des Trennens des ersten Übergangsverbands (AT1) in:
- eine fraktionierte Anordnung EG1, umfassend mindestens eine Lage (G1), die aus G1'>1 helixartig um den ersten Übergangskern (NT1) gewundenen Metalldrahtelementen (14) besteht, wobei die G1'>1 Metalldrahtelemente (14) aus der aus A'>1 Metalldrahtelementen (14) bestehenden Lage (A) des ersten Übergangsverbands (AT1) stammen, und
- den zweiten fraktionierten Verband AF12, der den zweiten endgültigen Verband (A2) bildet,
- einen Schritt (272) des Trennens der fraktionierten Anordnung EG1 in:
- den ersten fraktionierten Verband AF11, wobei das oder die D'≥1 Metalldrahtelement (e) (14) aus der aus G1'>1 Metalldrahtelementen (14) bestehenden Lage (G1) der fraktionierten Anordnung EG1 stammt(stammen), und
- den ersten Übergangskern (NT1) oder eine oder mehrere Anordnungen, die den ersten Übergangskern (NT1) umfassen, bevorzugt den ersten Übergangskern (NT1).

10. Verfahren nach einem der Ansprüche 7 bis 9, wobei der Schritt (224') des Trennens des zweiten Übergangsverbands (AT2) umfasst:
- einen Schritt (226') des Trennens des zweiten Übergangsverbands (AT2) in:
- eine fraktionierte Anordnung EG2, umfassend mindestens eine Lage (G2), die aus G2'>1 helixartig um den zweiten Übergangskern (NT2) gewundenen Metalldrahtelementen (14) besteht, wobei die G2'>1 Metalldrahtelemente (14) aus der aus B'>1 Metalldrahtelementen (14) bestehenden Lage (B) des zweiten Übergangsverbands (AT2) stammen, und
- den ersten fraktionierten Verband AF21,
- einen Schritt (242) des Trennens der fraktionierten Anordnung EG2 in:
- die zweite fraktionierte Anordnung AF22, die die dritte endgültige Anordnung (A3) bildet, wobei die G'>1 Metalldrahtelemente (14) aus der aus G2'>1 Metalldrahtelementen (14) bestehenden Lage (G2) der fraktionierten Anordnung EG2 stammen, und
- den zweiten Übergangskern (NT2) oder eine oder mehrere Anordnungen, die den zweiten Übergangskern (NT2) umfassen, bevorzugt den zweiten Übergangskern (NT2).

11. Verfahren nach einem der Ansprüche 7 bis 9, wobei der Schritt (224') des Trennens des zweiten Übergangsverbands (AT2) umfasst:
- einen Schritt (235') des Trennens des zweiten Übergangsverbands (AT2) in:
- eine fraktionierte Anordnung EG2, umfassend mindestens eine Lage (G2), die aus G2'>1 helixartig um den zweiten Übergangskern (NT2) gewundenen Metalldrahtelementen (14) besteht, wobei die G2'>1 Metalldrahtelemente (14) aus der aus B'>1 Metalldrahtelementen (14) bestehenden Lage (B) des zweiten Übergangsverbands (AT2) stammen, und
- den zweiten fraktionierten Verband AF22, der den dritten endgültigen Verband (A3) bildet,
- einen Schritt (272') des Trennens der fraktionierten Anordnung EG2 in:
- den ersten fraktionierten Verband AF21, wobei das oder die F'≥1 Metalldrahtelement (e) (14) aus der aus G2'>1 Metalldrahtelementen (14) bestehenden Lage (G2) der fraktionierten Anordnung EG2 stammt(stammen), und
- den zweiten Übergangskern (NT2) oder eine oder mehrere Anordnungen, die den zweiten Übergangskern (NT2) umfassen, bevorzugt den zweiten Übergangskern (NT2).

12. Verfahren nach einem der vorhergehenden Ansprüche, wobei der erste endgültige Verband (A1) aus der aus C1'>1 Metalldrahtelementen (14) bestehenden Lage (C1) besteht, der zweite endgültige Verband (A2) aus der aus C2'>1 Metalldrahtelementen (14) bestehenden Lage (C2) besteht, der dritte endgültige Verband (A3) aus der aus C3'>1 Metalldrahtelementen (14) bestehenden Lage (C3) besteht, wobei das Verfahren umfasst:
- den Schritt (210) des Bereitstellens des ersten Übergangsverbands (AT1), der aus der Lage (A) besteht, die aus A'>1 helixartig um den ersten Übergangskern (NT1) gewundenen Metalldrahtelementen (14) besteht,
- den Schritt (210') des Bereitstellens des zweiten Übergangsverbands (AT2), der aus der Lage (B) besteht, die aus B'>1 helixartig um den zweiten Übergangskern (NT2) gewundenen Metalldrahtelementen (14) besteht,
- den Schritt (224) des Trennens des ersten Übergangsverbands (AT1) in mindestens:
- den ersten fraktionierten Verband AF11, der aus der Lage (D) besteht, die aus D'≥1 Metalldrahtelement(en) (14) besteht, das(die) helixartig gewunden ist(sind), wobei das oder die D' Metalldrahtelement(e) (14) aus der aus A'>1 Metalldrahtelementen (14) bestehenden Lage (A) des ersten Übergangsverbands (AT1) stammt(stammen),
- den zweiten fraktionierten Verband AF12, der aus der Lage (E) besteht, die aus E'>1 helixartig gewundenen Metalldrahtelementen (14) besteht, wobei die E' Metalldrahtelemente (14) aus der aus A'>1 Metalldrahtelementen (14) bestehenden Lage (A) des ersten Übergangsverbands (AT1) stammen, wobei der zweite fraktionierte Verband AF12 den zweiten endgültigen Verband (A2) bildet
- den ersten Übergangskern (NT1) oder eine oder mehrere Anordnungen, die den ersten Übergangskern (NT1) umfassen,
- den Schritt (224') des Trennens des zweiten Übergangsverbands (AT2) in mindestens:
- den ersten fraktionierten Verband AF21, der aus der Lage (F) besteht, die aus F'≥1 Metalldrahtelement(en) (14) besteht, das(die) helixartig gewunden ist(sind), wobei das oder die F' Metalldrahtelement(e) (14) aus der aus B'>1 Metalldrahtelementen (14) bestehenden Lage (B) des zweiten Übergangsverbands (AT2) stammt(stammen),
- den zweiten fraktionierten Verband AF22, der aus der Lage (G) besteht, die aus G'>1 helixartig gewundenen Metalldrahtelementen (14) besteht, wobei die G' Metalldrahtelemente (14) aus der aus B'>1 Metalldrahtelementen (14) bestehenden Lage (B) des zweiten Übergangsverbands (AT2) stammen, wobei der zweite fraktionierte Verband AF22 den dritten endgültigen Verband (A3) bildet,
- den zweiten Übergangskern (NT2) oder eine oder mehrere Anordnungen, die den zweiten Übergangskern (NT2) umfassen.

13. Anlage (10) zur Herstellung von mindestens ersten, zweiten und dritten endgültigen Verbänden (A1, A2, A3), wobei der erste endgültige Verband (A1) mindestens eine Lage (C1) umfasst, die aus C1'>1 helixartig gewundenen Metalldrahtelementen (14) besteht, wobei der zweite endgültige Verband (A2) mindestens eine Lage (C2) umfasst, die aus C2'>1 helixartig gewundenen Metalldrahtelementen (14) besteht, wobei der dritte endgültige Verband (A3) mindestens eine Lage (C3) umfasst, die aus C3'>1 helixartig gewundenen Metalldrahtelementen (14) besteht,
wobei die Anlage (10) umfasst:
- Mittel (110) zum Bereitstellen eines ersten Übergangsverbands (AT1), umfassend mindestens eine Lage (A), die aus A'>1 helixartig um einen ersten Übergangskern (NT1) gewundenen Metalldrahtelementen (14) besteht,
- Mittel (110') zum Bereitstellen eines zweiten Übergangsverbands (AT2), umfassend mindestens eine Lage (B), die aus B'>1 helixartig um einen zweiten Übergangskern (NT2) gewundenen Metalldrahtelementen (14) besteht,
- Mittel (124) zum Trennen des ersten Übergangsverbands (AT1) in mindestens:
- einen ersten fraktionierten Verband AF11, umfassend mindestens eine Lage (D), die aus D'≥1 Metalldrahtelement(en) (14) besteht, das(die) helixartig gewunden ist(sind), wobei das oder die D' Metalldrahtelement(e) (14) aus der aus A'>1 Metalldrahtelementen (14) bestehenden Lage (A) des ersten Übergangsverbands (AT1) stammt(stammen),
- einen zweiten fraktionierten Verband AF12, umfassend mindestens eine Lage (E), die aus E'>1 helixartig gewundenen Metalldrahtelementen (14) besteht, wobei die E' Metalldrahtelemente (14) aus der aus A'>1 Metalldrahtelementen (14) bestehenden Lage (A) des ersten Übergangsverbands (AT1) stammen, wobei der zweite fraktionierte Verband AF12 den zweiten endgültigen Verband (A2) bildet
- den ersten Übergangskern (NT1) oder eine oder mehrere Anordnungen, die den ersten Übergangskern (NT1) umfassen,
- Mittel (124') zum Trennen des zweiten Übergangsverbands (AT2) in mindestens:
- einen ersten fraktionierten Verband AF21, umfassend mindestens eine Lage (F), die aus F'≥1 Metalldrahtelement(en) (14) besteht, das(die) helixartig gewunden ist(sind), wobei das oder die F' Metalldrahtelement (e) (14) aus der aus B'>1 Metalldrahtelementen (14) bestehenden Lage (B) des zweiten Übergangsverbands (AT2) stammt(stammen),
- einen zweiten fraktionierten Verband AF22, umfassend mindestens eine Lage (G), die aus G'>1 helixartig gewundenen Metalldrahtelementen (14) besteht, wobei die G' Metalldrahtelemente (14) aus der aus B'>1 Metalldrahtelementen (14) bestehenden Lage (B) des zweiten Übergangsverbands (AT2) stammen, wobei der zweite fraktionierte Verband AF22 den dritten endgültigen Verband (A3) bildet,
- den zweiten Übergangskern (NT2) oder eine oder mehrere Anordnungen, die den zweiten Übergangskern (NT2) umfassen,
wobei die Anlage (10) Mittel (134) zum Wiederzusammensetzen mindestens des ersten fraktionierten Verbands AF11 mit dem ersten fraktionierten Verband AF21 umfasst, um den ersten endgültigen Verband (A1) zu bilden,
wobei die Mittel (110) zum Bereitstellen und (124) zum Trennen des ersten Übergangsverbands (AT1), die Mittel (110') zum Bereitstellen und (124') zum Trennen des zweiten Übergangsverbands (AT2) und die Mittel (134) zum Wiederzusammensetzen des ersten fraktionierten Verbands AF11 mit dem ersten fraktionierten Verband AF21 so gestaltet sind, dass sie die Durchführung eines Verfahrens nach einem der vorhergehenden Ansprüche ermöglichen;
mit A'+B'≥6.

14. Anlage (10) nach Anspruch 13, wobei die Mittel zum Trennen (124) des ersten Übergangsverbands (AT1), die Mittel (124') zum Trennen des zweiten Übergangsverbands (AT2) und die Mittel (134) zum Wiederzusammensetzen des ersten fraktionierten Verbands AF11 mit dem ersten fraktionierten Verband AF21 so gestaltet sind, dass A'=D'+E' und B'=F'+G'.

15. Anlage (10) nach Anspruch 13, wobei die Mittel (124) zum Trennen des ersten Übergangsverbands (AT1), die Mittel (124') zum Trennen des zweiten Übergangsverbands (AT2) und die Mittel (134) zum Wiederzusammensetzen des ersten fraktionierten Verbands AF11 mit dem ersten fraktionierten Verband AF21 so gestaltet sind, dass A'>D'+E' und B'>F'+G'.

## Claims

1. Method for manufacturing at least first, second and third final assemblies (A1, A2, A3),
the first final assembly (A1) comprising at least one layer (C1) made up of C1'>1 metallic filamentary elements (14) wound in a helix, the second final assembly (A2) comprising at least one layer (C2) made up of C2'>1 metallic filamentary elements (14) wound in a helix, the third final assembly (A3) comprising at least one layer (C3) made up of C3'>1 metallic filamentary elements (14) wound in a helix,
the method comprising:
- a step (210) of supplying a first transitory assembly (AT1) comprising at least one layer (A) made up of A'>1 metallic filamentary elements (14) wound in a helix around a first transitory centre (NT1),
- a step (210') of supplying a second transitory assembly (AT2) comprising at least one layer (B) made up of B'>1 metallic filamentary elements (14) wound in a helix around a second transitory centre (NT2),
- a step (224) of separating the first transitory assembly (AT1) into at least:
- a first split assembly AF11 comprising at least one layer (D) made up of D'≥1 metallic filamentary element(s) (14) wound in a helix, the D' metallic filamentary element(s) (14) originating from the layer (A) made up of A'>1 metallic filamentary elements (14) of the first transitory assembly (AT1),
- a second split assembly AF12 comprising at least one layer (E) made up of E'>1 metallic filamentary elements (14) wound in a helix, the E' metallic filamentary elements (14) originating from the layer (A) made up of A'>1 metallic filamentary elements (14) of the first transitory assembly (AT1), the second split assembly AF12 forming the second final assembly (A2)
- the first transitory centre (NT1) or one or more ensembles comprising the first transitory centre (NT1),
- a step (224') of separating the second transitory assembly (AT2) into at least:
- a first split assembly AF21 comprising at least one layer (F) made up of F'≥1 metallic filamentary element(s) (14) wound in a helix, the F' metallic filamentary element(s) (14) originating from the layer (B) made up of B'>1 metallic filamentary elements (14) of the second transitory assembly (AT2),
- a second split assembly AF22 comprising at least one layer (G) made up of G'>1 metallic filamentary elements (14) wound in a helix, the G' metallic filamentary elements (14) originating from the layer (B) made up of B'>1 metallic filamentary elements (14) of the second transitory assembly (AT2), the second split assembly AF22 forming the third final assembly (A3),
- the second transitory centre (NT2) or one or more ensembles comprising the second transitory centre (NT2),
the method comprising the step (234) of reassembling at least the first split assembly AF11 with the first split assembly AF21 to form the first final assembly (A1),
the steps of supplying (210) and of separating (224) the first transitory assembly (AT1), the steps of supplying (210') and of separating (224') the second transitory assembly (AT2), and the step (234) of reassembling the first split assembly AF11 with the first split assembly AF21 being performed in such a way that D'+F'=E'=G'=C1'=C2'=C3' and that all the C1', C2', C3' metallic filamentary elements (14) have the one same diameter d, are wound in a helix with the one same pitch p and have the one same helix diameter φ; with A'+B'≥6.

2. Method according to Claim 1, wherein the step (224) of separating the first transitory assembly (AT1), the step (224') of separating the second transitory assembly (AT2) and the step (234) of reassembling the first split assembly AF11 with the first split assembly AF21 are performed in such a way that A'=D'+E' and B'=F'+G'.

3. Method according to Claim 2, wherein the step (224) of separating the first transitory assembly (AT1) comprises:
- a step (226) of separating the first transitory assembly (AT1) into:
- the first split assembly AF11, and
- a split ensemble EG1 comprising at least one layer (G1) made up of G1'>1 metallic filamentary element(s) (14) wound in a helix around the first transitory centre (NT1), the G1'>1 metallic filamentary elements (14) originating from the layer (A) made up of the A'>1 metallic filamentary elements (14) of the first transitory assembly (AT1), and
- a step (230) of separating the split ensemble EG1 into:
- the second split assembly AF12 forming the second final assembly (A2), the E'>1 metallic filamentary elements (14) originating from the layer (G1) made up of the G1'>1 metallic filamentary elements (14) of the split ensemble EG1, and
- the first transitory centre (NT1).

4. Method according to Claim 2, wherein the step (124) of separating the first transitory assembly (AT1) comprises:
- a step (235) of separating the first transitory assembly (AT1) into:
- the second split assembly AF12 forming the second final assembly (A2), and
- a split ensemble EG1 comprising at least one layer (G1) made up of G1'≥1 metallic filamentary element(s) (14) wound in a helix around the first transitory centre (NT1), the G1'≥1 metallic filamentary element(s) (14) originating from the layer (A) made up of the A'>1 metallic filamentary elements (14) of the first transitory assembly (AT1), and
- a step (238) of separating the split ensemble EG1 into:
- the first split assembly AF11, the D'≥1 metallic filamentary element(s) (14) originating from the layer (G1) made up of the G1'≥1 metallic filamentary element(s) (14) of the split ensemble EG1, and
- the first transitory centre (NT1).

5. Method according to any one of Claims 2 to 4, wherein the step (224') of separating the second transitory assembly (AT2) comprises:
- a step (226') of separating the second transitory assembly (AT2) into:
- the first split assembly AF21, and
- a split ensemble EG2 comprising at least one layer (G2) made up of G2'>1 metallic filamentary elements (14) wound in a helix around the second transitory centre (NT2), the G2'>1 metallic filamentary elements (14) originating from the layer (B) made up of the B'>1 metallic filamentary elements (14) of the second transitory assembly (AT2), and
- a step (230') of separating the split ensemble EG2 into:
- the second split assembly AF22 forming the third final assembly (A3), the G'>1 metallic filamentary elements (14) originating from the layer (G2) made up of the G2'>1 metallic filamentary elements (14) of the split ensemble EG2, and
- the second transitory centre (NT2).

6. Method according to any one of Claims 2 to 4, wherein the step (224') of separating the second transitory assembly (AT2) comprises:
- a step (235') of separating the second transitory assembly (AT2) into:
- the second split assembly AF22 forming the third final assembly (A3), and
- a split ensemble EG2 comprising at least one layer (G2) made up of G2'≥1 metallic filamentary element(s) (14) wound in a helix around the second transitory centre (NT2), the G2'≥1 metallic filamentary element(s) (14) originating from the layer (B) made up of the B'>1 metallic filamentary elements (14) of the second transitory assembly (AT2), and
- a step (238') of separating the split ensemble EG2 into:
- the first split assembly AF21, the F'≥1 metallic filamentary element(s) (14) originating from the layer (G2) made up of the G2'≥1 metallic filamentary element(s) (14) of the split ensemble EG2, and
- the second transitory centre (NT2).

7. Method according to Claim 1, wherein the step (224) of separating the first transitory assembly (AT1), the step (224') of separating the second transitory assembly (AT2) and the step (234) of reassembling the first split assembly AF11 with the first split assembly AF21 are performed in such a way that A'>D'+E' and B'>F'+G'.

8. Method according to Claim 7, wherein the step (224) of separating the first transitory assembly (AT1) comprises:
- a step (226) of separating the first transitory assembly (AT1) into:
- a split ensemble EG1 comprising at least one layer (G1) made up of G1'>1 metallic filamentary element(s) (14) wound in a helix around the first transitory centre (NT1), the G1'>1 metallic filamentary elements (14) originating from the layer (A) made up of the A'>1 metallic filamentary elements (14) of the first transitory assembly (AT1), and
- the first split assembly AF11,
- a step (242) of separating the split ensemble EG1 into:
- the second split assembly AF12 forming the second final assembly (A2), the E'>1 metallic filamentary elements (14) originating from the layer (G1) made up of the G1'>1 metallic filamentary elements (14) of the split ensemble EG1, and
- the first transitory centre (NT1) or one or more ensembles comprising the first transitory centre (NT1), preferably the first transitory centre (NT1).

9. Method according to Claim 7, wherein the step (224) of separating the first transitory assembly (AT1) comprises:
- a step (235) of separating the first transitory assembly (AT1) into:
- a split ensemble EG1 comprising at least one layer (G1) made up of G1'>1 metallic filamentary element(s) (14) wound in a helix around the first transitory centre (NT1), the G1'>1 metallic filamentary elements (14) originating from the layer (A) made up of the A'>1 metallic filamentary elements (14) of the first transitory assembly (AT1), and
- the second split assembly AF12 forming the second final assembly (A2),
- a step (272) of separating the split ensemble EG1 into:
- the first split assembly AF11, the D'≥1 metallic filamentary element(s) (14) originating from the layer (G1) made up of the G1'>1 metallic filamentary elements (14) of the split ensemble EG1, and
- the first transitory centre (NT1) or one or more ensembles comprising the first transitory centre (NT1), preferably the first transitory centre (NT1).

10. Method according to any one of Claims 7 to 9, wherein the step (224') of separating the second transitory assembly (AT2) comprises:
- a step (226') of separating the second transitory assembly (AT2) into:
- a split ensemble EG2 comprising at least one layer (G2) made up of G2'>1 metallic filamentary elements (14) wound in a helix around the second transitory centre (NT2), the G2'>1 metallic filamentary elements (14) originating from the layer (B) made up of the B'>1 metallic filamentary elements (14) of the second transitory assembly (AT2), and
- the first split assembly AF21,
- a step (242) of separating the split ensemble EG2 into:
- the second split assembly AF22 forming the third final assembly (A3), the G'>1 metallic filamentary elements (14) originating from the layer (G2) made up of the G2'>1 metallic filamentary elements (14) of the split ensemble EG2, and
- the second transitory centre (NT2) or one or more ensembles comprising the second transitory centre (NT2), preferably the second transitory centre (NT2).

11. Method according to any one of Claims 7 to 9, wherein the step (224') of separating the second transitory assembly (AT2) comprises:
- a step (235') of separating the second transitory assembly (AT2) into:
- a split ensemble EG2 comprising at least one layer (G2) made up of G2'>1 metallic filamentary elements (14) wound in a helix around the second transitory centre (NT2), the G2'>1 metallic filamentary elements (14) originating from the layer (B) made up of the B'>1 metallic filamentary elements (14) of the second transitory assembly (AT2), and
- the second split assembly AF22 forming the third final assembly (A3),
- a step (272') of separating the split ensemble EG2 into:
- the first split assembly AF21, the F'≥1 metallic filamentary element(s) (14) originating from the layer (G2) made up of the G2'>1 metallic filamentary elements (14) of the split ensemble EG2, and
- the second transitory centre (NT2) or one or more ensembles comprising the second transitory centre (NT2), preferably the second transitory centre (NT2).

12. Method according to any one of the preceding claims, wherein
the first final assembly (A1) is made up of the layer (C1) made up of C1'>1 metallic filamentary elements (14), the second final assembly (A2) is made up of the layer (C2) made up of C2'>1 metallic filamentary elements (14), the third final assembly (A3) is made up of the layer (C3) made up of C3'>1 metallic filamentary elements (14),
the method comprising:
- the step (210) of supplying the first transitory assembly (AT1) made up of the layer (A) made up of A'>1 metallic filamentary elements (14) wound in a helix around the first transitory centre (NT1),
- the step (210') of supplying the second transitory assembly (AT2) made up of the layer (B) made up of B'>1 metallic filamentary elements (14) wound in a helix around the second transitory centre (NT2),
- the step (224) of separating the first transitory assembly (AT1) into at least:
- the first split assembly AF11 made up of the layer (D) made up of D'≥1 metallic filamentary element(s) (14) wound in a helix, the D' metallic filamentary element(s) (14) originating from the layer (A) made up of A'>1 metallic filamentary elements (14) of the first transitory assembly (AT1),
- the second split assembly AF12 made up of the layer (E) made up of E'>1 metallic filamentary elements (14) wound in a helix, the E' metallic filamentary elements (14) originating from the layer (A) made up of A'>1 metallic filamentary elements (14) of the first transitory assembly (AT1), the second split assembly AF12 forming the second final assembly (A2)
- the first transitory centre (NT1) or one or more ensembles comprising the first transitory centre (NT1),
- the step (224') of separating the second transitory assembly (AT2) into at least:
- the first split assembly AF21 made up of the layer (F) made up of F'≥1 metallic filamentary element(s) (14) wound in a helix, the F' metallic filamentary element(s) (14) originating from the layer (B) made up of B'>1 metallic filamentary elements (14) of the second transitory assembly (AT2),
- the second split assembly AF22 made up of the layer (G) made up of G'>1 metallic filamentary elements (14) wound in a helix, the G' metallic filamentary elements (14) originating from the layer (B) made up of B'>1 metallic filamentary elements (14) of the second transitory assembly (AT2), the second split assembly AF22 forming the third final assembly (A3),
- the second transitory centre (NT2) or one or more ensembles comprising the second transitory centre (NT2).

13. Installation (10) for manufacturing at least first, second and third final assemblies (A1, A2, A3),
the first final assembly (A1) comprising at least one layer (C1) made up of C1'>1 metallic filamentary elements (14) wound in a helix, the second final assembly (A2) comprising at least one layer (C2) made up of C2'>1 metallic filamentary elements (14) wound in a helix, the third final assembly (A3) comprising at least one layer (C3) made up of C3'>1 metallic filamentary elements (14) wound in a helix,
the installation (10) comprising:
- means (110) for supplying a first transitory assembly (AT1) comprising at least one layer (A) made up of A'>1 metallic filamentary elements (14) wound in a helix around a first transitory centre (NT1),
- means (110') for supplying a second transitory assembly (AT2) comprising at least one layer (B) made up of B'>1 metallic filamentary elements (14) wound in a helix around a second transitory centre (NT2),
- means (124) for separating the first transitory assembly (AT1) into at least:
- a first split assembly AF11 comprising at least one layer (D) made up of D'≥1 metallic filamentary element(s) (14) wound in a helix, the D' metallic filamentary element(s) (14) originating from the layer (A) made up of A'>1 metallic filamentary elements (14) of the first transitory assembly (AT1),
- a second split assembly AF12 comprising at least one layer (E) made up of E'>1 metallic filamentary elements (14) wound in a helix, the E' metallic filamentary elements (14) originating from the layer (A) made up of A'>1 metallic filamentary elements (14) of the first transitory assembly (AT1), the second split assembly AF12 forming the second final assembly (A2)
- the first transitory centre (NT1) or one or more ensembles comprising the first transitory centre (NT1),
- means (124') for separating the second transitory assembly (AT2) into at least:
- a first split assembly AF21 comprising at least one layer (F) made up of F'≥1 metallic filamentary element(s) (14) wound in a helix, the F' metallic filamentary element(s) (14) originating from the layer (B) made up of B'>1 metallic filamentary elements (14) of the second transitory assembly (AT2),
- a second split assembly AF22 comprising at least one layer (G) made up of G'>1 metallic filamentary elements (14) wound in a helix, the G' metallic filamentary elements (14) originating from the layer (B) made up of B'>1 metallic filamentary elements (14) of the second transitory assembly (AT2), the second split assembly AF22 forming the third final assembly (A3),
- the second transitory centre (NT2) or one or more ensembles comprising the second transitory centre (NT2),
the installation (10) comprising means (134) for reassembling at least the first split assembly AF11 with the first split assembly AF21 to form the first final assembly (A1), the means (110) for supplying and (124) for separating the first transitory assembly (AT1), the means (110') for supplying and (124') for separating the second transitory assembly (AT2), and the means (134) for reassembling the first split assembly AF11 with the first split assembly AF21 being arranged in such a way as to allow implementation of a method according to any one of the preceding claims; with A'+B'≥6.

14. Installation (10) according to Claim 13, wherein the means (124) for separating the first transitory assembly (AT1), the means (124') for separating the second transitory assembly (AT2), and the means (134) for reassembling the first split assembly AF11 with the first split assembly AF21 are arranged in such a way that A'=D'+E' and B'=F'+G'.

15. Installation (10) according to Claim 13, wherein the means (124) for separating the first transitory assembly (AT1), the means (124') for separating the second transitory assembly (AT2), and the means (134) for reassembling the first split assembly AF11 with the first split assembly AF21 are arranged in such a way that A'>D'+E' and B'>F'+G'.
